# EUROPEAN PATENT APPLICATION

(11) **EP 4 806 251 A1**
(43) Date of publication of application: **16.09.2026**
(21) Application number: 24899600.1
(22) Date of filing: 18.11.2024
(51) Int. Cl.: A01D 34/412

(54) **AUXILIARY CUTTING MECHANISM AND LAWN MOWER**

(30) Priority: 08.12.2023 CN 202323356195 U; 08.12.2023 CN 202323356222 U; 08.12.2023 CN 202323356201 U; 08.12.2023 CN 202323356209 U; 08.12.2023 CN 202323353595 U; 08.12.2023 CN 202323356455 U; 08.12.2023 CN 202323356177 U; 08.12.2023 CN 202323353547 U; 08.12.2023 CN 202311685073; 08.12.2023 CN 202311685062; 08.12.2023 CN 202311686975; 08.12.2023 CN 202311686967; 08.12.2023 CN 202311686801; 08.12.2023 CN 202311685012; 08.12.2023 CN 202311686943
(71) Applicant: Willand (Beijing) Technology Co., Ltd., Beijing 100192 (CN)
(72) Inventor: ZONG, Zhenguo, Beijing 100192 (CN); CUI, Junwei, Beijing 100192 (CN); QIAO, Wanyang, Beijing 100192 (CN); LI, Zengyang, Beijing 100192 (CN)
(74) Representative: Kraus & Lederer PartGmbB
(86) International application number: PCT/CN2024/132706
(87) International publication number: WO 2025/118958

(57) **Abstract**

The present utility model of the present disclosure provides an auxiliary cutting mechanism and a lawnmower, wherein the auxiliary cutting mechanism comprises a cutter disc, an upper guard, and a lower guard, wherein the upper guard comprises a side enclosure surrounding a lateral portion of the cutter disc; and the lower guard is arranged on a bottom of the cutter disc, wherein a projection of the lower guard onto the ground covers at least a part of a left rear section of a projection of the cutter disc onto the ground and at least a part of either a left front section or a right front section of the projection of the cutter disc onto the ground. In this way, on the one hand, when the auxiliary cutting mechanism is at a position extending from the body, a barrier effect of the upper guard and the lower guard can prevent a human hand or foot from touching the cutter disc, and on the other hand, a front section on one side proximate to the lawnmower body is not covered by the lower guard, thereby reducing bending grass by the lower guard, and ensuring the cutting effect.

## Description

### TECHNICAL FIELD

Embodiments of the present disclosure relate to the technical field of a mechanical device, and particularly relate to an auxiliary cutting mechanism and a lawnmower.

### BACKGROUND

A traveling device with a cutting function, such as a lawnmower, comprises a body and an auxiliary cutting mechanism mounted on the body, wherein the body travels on the ground, and the auxiliary cutting mechanism can cut, e.g., weeds on the ground during the traveling.

In practical production and daily use, a protective guard is usually disposed on the auxiliary cutting mechanism to reduce the risk that a person accidentally touches the cutter disc during cutting, and enhance safety.

In the related art, the protective guard surrounds the entire cutter disc, which reduces the risk that a person accidentally touches the cutter disc, but tends to block weeds by the protective guard, so that the weeds can hardly be cut by the cutter disc, thereby resulting in a poor cutting effect.

### SUMMARY

In order to solve the above problems, embodiments of the present disclosure provide an auxiliary cutting mechanism and a lawnmower, to at least partially solve the above problems.

One or more embodiments of the present disclosure provide an auxiliary cutting mechanism, comprising: a cutter disc, an upper guard, and a lower guard; wherein a transverse centerline and a longitudinal centerline of the cutter disc together divide the cutter disc into a left front section, a right front section, a left rear section, and a right rear section; the upper guard comprises a side enclosure surrounding a lateral portion of the cutter disc; and the lower guard is arranged on a bottom of the cutter disc, wherein a projection of the lower guard onto the ground covers at least a part of the left rear section of a projection of the cutter disc onto the ground, at least a part of the right rear section of the projection of the cutter disc onto the ground, and at least a part of only one of the left front section and the right front section of the projection of the cutter disc onto the ground.

Optionally, a preset distance C is defined between a front end of the lower guard and a front end of the side enclosure.

Optionally, the lower guard is surrounded by the side enclosure, and a clearance between the side enclosure and each of a rear end, a left end, and a right end of the lower guard is less than a preset threshold, so as to prevent entry of a finger or a toe into the clearance.

Optionally, a plurality of spaced-apart grass inlets are disposed on a left front section or a right front section of the lower guard, with the grass inlets facing a front end of the side enclosure.

Optionally, each of the grass inlets has a width of less than or equal to 12 mm.

Optionally, a distance between a left front section of the lower guard and a center of the cutter disc is greater than a distance between the left front section of the cutter disc and the center thereof; or a distance between a right front section of the lower guard and the center of the cutter disc is greater than a distance between the right front section of the cutter disc and the center thereof.

Optionally, a grass outlet is disposed on a left rear section of the lower guard, and/or a grass outlet is disposed on a right rear section of the lower guard.

Optionally, a length direction of a cross section of the grass outlet is aligned with a forward-backward direction, and the cross section of the grass outlet has a width of less than or equal to 12 mm.

Optionally, a hollow structure is disposed on a rear portion of the side enclosure.

Optionally, the hollow structure is strip-shaped, and the hollow structure has a width of less than or equal to 12 mm.

Optionally, the upper guard further comprises a top cover with an edge of the top cover connected to the side enclosure, the auxiliary cutting mechanism further comprises a drive module, wherein the drive module is connected to a body of the lawnmower, is connected to an upper side of the cutter disc, and is surrounded by the side enclosure; and the top cover covers the drive module and is connected to the drive module.

Optionally, the top cover comprises a first section and a second section, the first section covers the drive module, and the second section is located in front of the first section and higher than the second section.

Optionally, the lower guard is directly connected to the upper guard.

The present disclosure further provides a lawnmower, comprising a body and the above auxiliary cutting mechanism, wherein the auxiliary cutting mechanism is connected to the body.

Optionally, the side enclosure comprises an inner side plate and an outer side plate that are opposite to each other in a leftward-rightward direction, and the auxiliary cutting mechanism is pivotally connected to the body with a pivot path including a retracted position and a released position, the outer side plate of the side enclosure is proximate to the body when the auxiliary cutting mechanism is at the retracted position, and the outer side plate of the side enclosure is remote from the body when the auxiliary cutting mechanism is at the released position.

Optionally, the lawnmower further comprises a first connecting rod and a second connecting rod, wherein the first connecting rod comprises a first end and a second end that are opposite to each other, with the first end pivotally connected to the body around a first axis and the second end pivotally connected to the auxiliary cutting mechanism around a second axis, the second connecting rod comprises a third end and a fourth end that are opposite to each other, with the third end pivotally connected to the body around a third axis and the fourth end pivotally connected to the auxiliary cutting mechanism around a fourth axis, the first axis, the second axis, and the third axis are each parallel to the fourth axis; a distance A1 between the first axis and the second axis is equal to a distance A2 between the third axis and the fourth axis; and a distance B1 between the first axis and the third axis is equal to a distance B2 between the second axis and the fourth axis.

Based on the above operation mechanism provided in the present disclosure, if the auxiliary cutting mechanism is mounted on the lawnmower, the left front section or the right front section uncovered by the lower guard is located on one side proximate to the lawnmower body, while the right front section or the left front section covered by the lower guard is located on one side remote from the lawnmower body. In this way, on the one hand, when the auxiliary cutting mechanism is at a position extending from the body, a barrier effect of the upper guard and the lower guard can prevent a human hand or foot from touching the cutter disc, and on the other hand, a front section on one side proximate to the lawnmower body is not covered by the lower guard, thereby reducing bending grass by the lower guard, and ensuring the cutting effect.

The present disclosure further provides a retractable operation mechanism applied to a smart traveling device, comprising a connecting mechanism, an operation mechanism, and a position detection apparatus; wherein the connecting mechanism comprises a first connection position for rotatable connection to a body of the smart traveling device and a second connection position connected to the operation mechanism, the connecting mechanism rotates relative to the body to drive the operation mechanism to move relative to the body; and the position detection apparatus comprises a position detection portion and a moving portion, wherein the position detection portion is connected to the body of the smart traveling device, the moving portion is arranged on the connecting mechanism or the operation mechanism, and the position detection portion is configured to generate an electrical position signal in response to detecting that the moving portion reaches a predetermined position, wherein the electrical position signal is used to control movement of the connecting mechanism or the operation mechanism.

The present disclosure further provides another retractable operation mechanism applied to a smart traveling device, comprising an operation mechanism, a connecting mechanism, and a retractable mechanism, wherein the retractable mechanism comprises a retractable fixing portion for connection to a body of the smart traveling device and a retractable portion in contact with the connecting mechanism; and the connecting mechanism comprises a first connection position for rotatable or slidable connection to the body and a second connection position connected to the operation mechanism. The retractable portion drives the connecting mechanism to rotate or slide via extension/retraction, and the connecting mechanism drives the operation mechanism to rotate or slide relative to the body.

Optionally, the retractable operation mechanism further comprises a fixing base for fixed connection to the body, and the first connection position of the connecting mechanism and the retractable fixing portion of the retractable mechanism are fixedly connected to the fixing base.

Optionally, the connecting mechanism comprises an elastic member and a linkage mechanism, with one end of the linkage mechanism hinged to the body and the other end connected to the operation mechanism. The elastic member is arranged at a hinge point between the linkage mechanism and the body, and the retractable portion is in contact with the linkage mechanism.

The present disclosure further provides another retractable operation mechanism applied to a smart traveling device, comprising an operation mechanism, a connecting mechanism, an elastic member, and a rotating mechanism; wherein the connecting mechanism comprises a first connection position for rotatable connection to a body of the smart traveling device and a second connection position connected to the operation mechanism; the rotating mechanism is arranged on the body of the smart traveling device, and abuts against the connecting mechanism; the elastic member has one end in contact with the body and the other end in contact with the connecting mechanism; the rotating mechanism is configured to push the connecting mechanism to drive the operation mechanism to approach a centerline of the body, so that the elastic member is compressed; and the elastic member is configured to push the connecting mechanism to drive the operation mechanism to depart from the centerline of the body.

The present disclosure further provides an operation execution mechanism for connection to a body of a smart traveling device, wherein the operation execution mechanism comprises an operation mechanism, a connecting mechanism, and a power mechanism; wherein the connecting mechanism comprises two opposing ends, with one of the ends pivotally connected to the body and the other end connected to the operation mechanism; the connecting mechanism can drive the operation mechanism to reciprocate between a retracted position and a released position; and the power mechanism is connected to the connecting mechanism for driving the connecting mechanism to pivot relative to the body. When the operation mechanism is at the retracted position, the operation mechanism is spaced apart from a centerline of the body by a first distance; and when the operation mechanism is at the released position, the operation mechanism is spaced apart from the centerline of the body by a second distance, wherein the first distance is less than the second distance.

Optionally, the power mechanism comprises an elastic member connected between the connecting mechanism and the body and/or connected between the connecting mechanism and the operation mechanism; wherein the elastic member exerts on the connecting mechanism an elastic force enabling the connecting mechanism to drive the operation mechanism to pivot from the retracted position toward the release.

Optionally, the elastic member is connected between the operation mechanism and the first connecting rod, and/or the elastic member is connected between the operation mechanism and the second connecting rod.

Optionally, the power mechanism comprises a rotating motor with an output shaft of the rotating motor connected to the connecting mechanism, and drives the connecting mechanism to drive the operation mechanism to rotate.

Optionally, the operation execution mechanism further comprises a position-limiting mechanism configured to apply a position-limiting force to the connecting mechanism, so that the connecting mechanism restricts the operation mechanism to the retracted position.

Optionally, the position-limiting mechanism comprises a position-limiting member reciprocating between an clearance position and a stop position. The position-limiting member at the clearance position allows the connecting mechanism to drive the operation mechanism to reciprocate between the released position and the retracted position; and the position-limiting member at the stop position prevents the connecting mechanism from driving the operation mechanism to pivot from the retracted position toward the released position.

Optionally, the body is provided with a first position-limiting portion. When the connecting mechanism drives the operation mechanism to move to the released position, the connecting mechanism abuts against the first position-limiting portion under a force exerted by the power mechanism.

The present disclosure further provides a smart traveling device, comprising a body, an operation mechanism, a connecting mechanism, a power mechanism, and a damping member; wherein the connecting mechanism comprises two opposing ends, with one of the ends pivotally connected to the body and the other end connected to the operation mechanism, the connecting mechanism can drive the operation mechanism to reciprocate between a retracted position and a released position; and the power mechanism is connected to the connecting mechanism for driving the connecting mechanism to pivot relative to the body. When the operation mechanism is at the retracted position, the operation mechanism is spaced apart from a centerline of the body by a first distance; and when the operation mechanism is at the released position, the operation mechanism is spaced apart from the centerline of the body by a second distance, and the first distance is less than the second distance. The body is provided with a first position-limiting portion. When the connecting mechanism drives the operation mechanism to move to the released position or the retracted position, the connecting mechanism abuts against the first position-limiting portion under a force exerted by the power mechanism. The damping member is connected to the connecting mechanism, and when the connecting mechanism pivots toward the released position or the retracted position, the damping member applies a damping force to the connecting mechanism in a direction opposite to the force.

Optionally, the connecting mechanism comprises a first connecting rod and a second connecting rod, wherein the first connecting rod comprises a first end and a second end that are opposite to each other, with the first end pivotally connected to the body around a first axis and the second end pivotally connected to the operation mechanism around a second axis, the second connecting rod comprises a third end and a fourth end that are opposite to each other, with the third end pivotally connected to the body around a third axis and the fourth end pivotally connected to the operation mechanism around a fourth axis; the first axis, the second axis, and the third axis are each parallel to the fourth axis; a distance between the first axis and the second axis is equal to a distance between the third axis and the fourth axis; and a distance between the first axis and the third axis is equal to a distance between the second axis and the fourth axis; wherein the damping member is connected to the first connecting rod or the second connecting rod.

Optionally, the damping member is connected between the body and the first connecting rod; or the damping member is connected between the body and the second link; or the damping member is connected between the operation mechanism and the first connecting rod; or the damping member is connected between the operation mechanism and the second connecting rod.

Optionally, the damping member is connected between the first connecting rod and the body, or the damping member is connected between the second connecting rod and a sliding block, or the damping member is connected between the sliding block and the body.

The present disclosure further provides an operation mechanism applied to a smart traveling device, comprising: a connecting portion, a fixing base, an operation portion, an angle detection component, and a control component; wherein one end of the connecting portion is connected to the fixing base, the other end of the connecting portion is connected to the operation portion; the connecting portion is configured to rotate relative to the fixing base to drive the operation portion to move relative to the fixing base; the angle detection component is configured to detect a rotation angle of the connecting portion relative to the fixing base and send an angle signal for indicating the rotation angle to the control component; and the control component is configured to control the connecting portion to stop rotation relative to the fixing base when the rotation angle indicated by the angle signal reaches an angle threshold, so that an angle between the connecting portion and the fixing base is within a preset angle range.

Optionally, the connecting portion comprises a plurality of connecting rods, and the control component comprises an elastic return member, a driving portion, and a position-limiting member; wherein the plurality of connecting rods have an equal length and are parallel to each other, with one end of each of the connecting rods hinged to the fixing base and the other end of the connecting rod hinged to the operation portion. A hinge axis between the connecting rod and the fixing base is parallel to a hinge axis between the connecting rod and the operation portion, different hinge axes are present between the fixing base and different connecting rods, and different hinge axes are present between the operation portion and different connecting rods. The elastic return member is connected between the connecting rod and the fixing base or between the connecting rod and the operation portion, the elastic return member is in a compressed state, and when an angle between the connecting rod and the fixing base increases, the degree of compression of the elastic return member decreases. The driving portion is a motor, a stator part of the driving portion is fixedly connected to the fixing base, and a hinge axis between the fixing base and any one of the connecting rods is aligned with an axis of an output shaft of the driving portion. A spacing between the position-limiting member and a rotation axis of the output shaft is greater than zero, the position-limiting member is fixedly connected to the output shaft, the position-limiting member abuts against any one of the connecting rods, and the position-limiting member is configured to prevent reduction in compression of the elastic return member. The driving portion is configured to control, in response to the rotation angle indicated by the angle signal reaching a first angle threshold, the output shaft to stop rotation after the output shaft of the driving portion starts rotation, so that the angle between the connecting rod and the fixing base is within a first preset angle range. The driving portion is further configured to control, in response to the rotation angle indicated by the angle signal reaching a second angle threshold, the output shaft to stop rotation after the output shaft of the driving portion starts rotation, so that the angle between the connecting rod and the fixing base is within a second preset angle range.

Optionally, the connecting portion comprises a plurality of connecting rods, and the angle detection component comprises a magnetic encoder and a magnetic block; wherein the plurality of connecting rods have an equal length and are parallel to each other, with one end of each of the connecting rods hinged to the fixing base and the other end of the connecting rod hinged to the operation portion. A hinge axis between the connecting rod and the fixing base is parallel to a hinge axis between the connecting rod and the operation portion, different hinge axes are present between the fixing base and different connecting rods, and different hinge axes are present between the operation portion and different connecting rods. The magnetic encoder and the magnetic block are arranged at a hinge point between any one of the connecting rods and the operation portion. The magnetic encoder is opposite to the magnetic block, the magnetic block is fixedly connected to the operation portion and the magnetic encoder is fixedly connected to any one of the connecting rods; or the magnetic encoder is fixedly connected to the operation portion and the magnetic block is fixedly connected to any one of the connecting rods. The magnetic block is cylindrical, and a hinge axis between any one of the connecting rods and the operation portion is aligned with a central axis of the magnetic block. The magnetic encoder is configured to detect a rotation angle of the magnetic block relative to the magnetic encoder, generate an angle signal for indicating the rotation angle of the magnetic block relative to the magnetic encoder, and send the angle signal to the control component.

Optionally, the connecting portion comprises a plurality of connecting rods, and the control component comprises an elastic return member, a driving portion, and a position-limiting member; wherein the plurality of connecting rods have an equal length and are parallel to each other, with one end of each of the connecting rods hinged to the fixing base and the other end of the connecting rod hinged to the operation portion. A hinge axis between the connecting rod and the fixing base is parallel to a hinge axis between the connecting rod and the operation portion, different hinge axes are present between the fixing base and different connecting rods, and different hinge axes are present between the operation portion and different connecting rods. The elastic return member is connected between the connecting rod and the fixing base or between the connecting rod and the operation portion, the elastic return member is in a compressed state, and when an angle between the connecting rod and the fixing base increases, the degree of compression of the elastic return member decreases. The driving portion is a motor, a stator part of the driving portion is fixedly connected to the operation portion, and a hinge axis between the operation portion and any one of the connecting rods is aligned with an axis of an output shaft of the driving portion. A spacing between the position-limiting member and a rotation axis of the output shaft is greater than zero, the position-limiting member is fixedly connected to the output shaft, the position-limiting member abuts against any one of the connecting rods, and the position-limiting member is configured to prevent reduction in compression of the elastic return member. The driving portion is configured to control, in response to the rotation angle indicated by the angle signal reaching a first angle threshold, the output shaft to stop rotation after the output shaft of the driving portion starts rotation, so that the angle between the connecting rod and the fixing base is within the first preset angle range. The driving portion is further configured to control, in response to the rotation angle indicated by the angle signal reaching a second angle threshold, the output shaft to stop rotation after the output shaft of the driving portion starts rotation, so that the angle between the connecting rod and the fixing base is within the second preset angle range.

Optionally, the connecting portion comprises a plurality of connecting rods, and the control component comprises an elastic return member, a driving portion, and a position-limiting member; wherein the plurality of connecting rods have an equal length and are parallel to each other, with one end of each of the connecting rods hinged to the fixing base and the other end of the connecting rod hinged to the operation portion. A hinge axis between the connecting rod and the fixing base is parallel to a hinge axis between the connecting rod and the operation portion, different hinge axes are present between the fixing base and different connecting rods, and different hinge axes are present between the operation portion and different connecting rods. The elastic return member is connected between the connecting rod and the fixing base or between the connecting rod and the operation portion, the elastic return member is in a compressed state, and when an angle between the connecting rod and the fixing base increases, the degree of compression of the elastic return member decreases. The driving portion is a motor, a stator part of the driving portion is fixedly connected to any one of the connecting rods, and a hinge axis between the operation portion and any one of the connecting rods is aligned with an axis of an output shaft of the driving portion, or a hinge axis between the fixing base and any one of the connecting rods is aligned with the output shaft of the driving portion. A spacing between the position-limiting member and a rotation axis of the output shaft is greater than zero, the position-limiting member is fixedly connected to the output shaft, the position-limiting member abuts against the operation portion, or the position-limiting member abuts against the fixing base, and the position-limiting member is configured to prevent reduction in compression of the elastic return member. The driving portion is configured to control, in response to the rotation angle indicated by the angle signal reaching a first angle threshold, the output shaft to stop rotation after the output shaft of the driving portion starts rotation, so that the angle between the connecting rod and the fixing base is within the first preset angle range. The driving portion is further configured to control, in response to the rotation angle indicated by the angle signal reaching a second angle threshold, the output shaft to stop rotation after the output shaft of the driving portion starts rotation, so that the angle between the connecting rod and the fixing base is within the second preset angle range.

The present disclosure further provides a smart traveling device, comprising an operation mechanism and a body, wherein the operation mechanism comprises a connecting portion, a fixing base, an operation portion, an angle detection component, and a control component. The fixing base is fixedly connected to the body. One end of the connecting portion is connected to the fixing base, and the other end of the connecting portion is connected to the operation portion. The connecting portion is configured to rotate relative to the fixing base to drive the operation portion to move relative to the fixing base. The angle detection component is configured to detect a rotation angle of the connecting portion relative to the fixing base and send an angle signal for indicating the rotation angle to the control component. The control component is configured to control, in response to the rotation angle indicated by the angle signal reaching a first angle threshold, the connecting portion to stop rotation relative to the fixing base, so that an angle between the connecting portion and the fixing base is within a first preset angle range, and is further configured to control, in response to the rotation angle indicated by the angle signal reaching a second angle threshold, the connecting portion to stop rotation relative to the fixing base, so that an angle between the connecting portion and the fixing base is within a second preset angle range, wherein the first angle threshold is less than the second angle threshold, a minimum angle in the first preset angle range is equal to a minimum angle in the second preset angle range, and a maximum angle in the first preset angle range is less than a maximum angle in the second preset angle range. When an angle between the connecting portion and the fixing base is equal to the maximum angle in the first preset angle range, a spacing between the operation portion and the body is a first spacing; and when an angle between the connecting portion and the fixing base is equal to the maximum angle in the second preset angle range, a maximum spacing between the operation portion and the body is a second spacing, wherein the second spacing is greater than the first spacing.

Optionally, the control component is configured to send an clearance signal to the body in response to receiving an angle signal with an indicated rotation angle less than a third angle threshold when the rotation angle indicated by the angle signal reaches the second angle threshold and the connecting portion stops rotation relative to the fixing base, wherein the third angle threshold is greater than the first angle threshold and less than the second angle threshold, and the clearance signal is used to instruct a traveling mechanism mounted on the body to move away from the operation portion, to drive the body to move away from the operation portion; and the control component is further configured to send an stop-clearance signal to the body in response to receiving an angle signal with an indicated rotation angle greater than or equal to the third angle threshold after sending the clearance signal to the body, wherein the stop-clearance signal is used to instruct the traveling mechanism to stop moving away from the operation portion, so that the body stops moving away from the operation portion.

The present disclosure further provides a control method applied to an operation mechanism comprising a connecting portion and a fixing base, wherein the operation mechanism is applied to the smart traveling device, and the control method comprises: controlling, in response to a rotation angle indicated by an angle signal reaching an angle threshold, the connecting portion to stop rotation relative to the fixing base, so that an angle between the connecting portion and the fixing base is within a preset angle range, wherein the operation mechanism further comprises an operation portion and an angle detection component, one end of the connecting portion is connected to the fixing base, and the other end of the connecting portion is connected to the operation portion. The connecting portion is configured to rotate relative to the fixing base to drive the operation portion to move relative to the fixing base, the rotation angle indicated by the angle signal is a rotation angle of the connecting portion relative to the fixing base, and the angle detection component is configured to detect the rotation angle and generate the angle signal.

The present disclosure further provides a smart traveling device, comprising:
a body,
an operation mechanism,
a connecting mechanism, with one end of the connecting mechanism pivotally connected to the body and the other end of the connecting mechanism connected to the operation mechanism, wherein the connecting mechanism can drive the operation mechanism to reciprocate between a retracted position and a released position;
wherein the operation mechanism is spaced apart from a centerline of the body by a first distance when the operation mechanism is at the retracted position; the operation mechanism is spaced apart from the centerline of the body by a second distance when the operation mechanism is at the released position, and the first distance is less than the second distance;
a position-limiting member abutting against the connecting mechanism and capable of reciprocating between a clearance position and a stop position, wherein the position-limiting member at the clearance position allows the connecting mechanism to drive the operation mechanism to reciprocate between the released position and the retracted position; and during a movement process of the position-limiting member from the clearance position toward the stop position, the position-limiting member can drive the connecting mechanism to move, to drive the operation mechanism to move from the released position to the retracted position; and
a position detection mechanism capable of detecting whether the operation mechanism reaches the retracted position, and generating a first arrival signal in response to the operation mechanism reaching the retracted position, so that the position-limiting member stops driving the connecting mechanism based on the first arrival signal and stays at the stop position, and/or
the position detection mechanism capable of detecting whether the operation mechanism reaches the released position, and generating a second arrival signal in response to the operation mechanism reaching the released position, so that the position-limiting member stays at the clearance position based on the second arrival signal.

The present disclosure further provides another smart traveling device, comprising:
a body;
an operation mechanism;
a connecting mechanism, with one end of the connecting mechanism pivotally connected to the body and the other end of the connecting mechanism connected to the operation mechanism, wherein the connecting mechanism can drive the operation mechanism to reciprocate between a retracted position and a released position; and
a power mechanism connected to the connecting mechanism for driving the connecting mechanism to pivot relative to the body;

A clearance structure is disposed on at least one of the body, the operating mechanism, and the connecting mechanism to allow the connecting mechanism to drive the operating mechanism to reciprocate between the retracted position and the released position.

Optionally, the clearance structure comprises an clearance slot located on the connecting mechanism to provide clearance for a second clearance hole.

Optionally, the connecting mechanism comprises a first connecting rod and a second connecting rod, wherein the first connecting rod comprises a first end and a second end that are opposite to each other, with the first end pivotally connected to the body around a first axis and the second end pivotally connected to the operation mechanism around a second axis, the second connecting rod comprises a third end and a fourth end that are opposite to each other, with the third end pivotally connected to the body around a third axis and the fourth end pivotally connected to the operation mechanism around a fourth axis, the first axis, the second axis, and the third axis are each parallel to the fourth axis; a distance between the first axis and the second axis is equal to a distance between the third axis and the fourth axis; and a distance between the first axis and the third axis is equal to a distance between the second axis and the fourth axis.

### BRIEF DESCRIPTION OF DRAWINGS

The drawings below are only intended to give schematic illustrations and explanations on the present disclosure, and do not impose any limitation on the scope of the present disclosure. In the drawings,
FIG. 1 is a schematic perspective view of an auxiliary cutting mechanism provided in an example embodiment of the present disclosure;
FIG. 2 is a schematic partial view of an auxiliary cutting mechanism provided in an example embodiment of the present disclosure;
FIG. 3 is a schematic partial view of a lawnmower provided in an example embodiment of the present disclosure;
FIG. 4 is a schematic partially exploded view of a lawnmower provided in an example embodiment of the present disclosure;
FIG. 5 is a schematic bottom view of a lawnmower provided in an example embodiment of the present disclosure, in which the auxiliary cutting mechanism is at a released position;
FIG. 6 is a schematic diagram of a retractable operation mechanism with an operation mechanism at a released position according to an example embodiment of the present disclosure;
FIG. 7 is a schematic diagram of a retractable operation mechanism with an operation mechanism at a retracted position according to an example embodiment of the present disclosure;
FIG. 8 is a schematic structural diagram of a retractable operation mechanism according to an example embodiment of the present disclosure;
FIG. 9 is a schematic diagram of a position detection apparatus in a retractable operation mechanism according to an example embodiment of the present disclosure;
FIG. 10 is a schematic diagram of a position detection apparatus in a retractable operation mechanism according to another example embodiment of the present disclosure;
FIG. 11 is a schematic structural diagram of a linkage mechanism in a retractable operation mechanism according to an example embodiment of the present disclosure;
FIG. 12 is a schematic diagram of a retractable operation mechanism with an operation mechanism at a released position according to an example embodiment of the present disclosure;
FIG. 13 is a schematic diagram of a retractable operation mechanism with an operation mechanism at a retracted position according to an example embodiment of the present disclosure;
FIG. 14 is a schematic structural diagram of a retractable operation mechanism according to an example embodiment of the present disclosure;
FIG. 15 is a schematic diagram of a retractable operation mechanism with a retractable mechanism at a fourth connection position according to an example embodiment of the present disclosure;
FIG. 16 is a schematic structural diagram of a linkage mechanism in a retractable operation mechanism according to an example embodiment of the present disclosure;
FIG. 17 is a schematic diagram of a retractable operation mechanism with an operation mechanism at a released position according to an example embodiment of the present disclosure;
FIG. 18 is a schematic diagram of a retractable operation mechanism with an operation mechanism at a retracted position according to an example embodiment of the present disclosure;
FIG. 19 is a schematic structural diagram of a retractable operation mechanism according to an example embodiment of the present disclosure;
FIG. 20 is an exploded view of a retractable operation mechanism according to an example embodiment of the present disclosure;
FIG. 21 is a schematic diagram of a retractable operation mechanism with a rotation portion at a first position according to an example embodiment of the present disclosure;
FIG. 22 is a schematic diagram of a retractable operation mechanism with a rotation portion at a second position according to an example embodiment of the present disclosure;
FIG. 23 is a schematic structural diagram of a linkage mechanism in a retractable operation mechanism according to another example embodiment of the present disclosure;
FIG. 24 is a schematic perspective view of an operation execution mechanism provided in an example embodiment of the present disclosure, in which an operation mechanism is at a retracted position;
FIG. 25 is a schematic perspective view of an operation execution mechanism from another perspective provided in an example embodiment of the present disclosure, in which an operation mechanism is at a released position;
FIG. 26 is a schematic partial perspective view of a smart traveling device provided in an example embodiment of the present disclosure;
FIG. 27 is a schematic diagram of a smart traveling device provided in an example embodiment of the present disclosure, in which an operation mechanism is at a retracted position;
FIG. 28 is a schematic diagram of a smart traveling device provided in an example embodiment of the present disclosure, in which an operation mechanism is at a released position;
FIG. 29 is a schematic diagram of a smart traveling device provided in an example embodiment of the present disclosure, in which an operation mechanism is at a retracted position;
FIG. 30 is a schematic diagram of a smart traveling device provided in an example embodiment of the present disclosure, in which an operation mechanism is at a released position;
FIG. 31 is a schematic partial perspective view of a smart traveling device provided in an example embodiment of the present disclosure, in which an operation mechanism is at a released position;
FIG. 32 is a schematic partial perspective view of a smart traveling device provided in an example embodiment of the present disclosure, in which an operation mechanism is at a retracted position;
FIG. 33 is a schematic partial view of another smart traveling device provided in an example embodiment of the present disclosure;
FIG. 34 is a schematic diagram of an operation mechanism with an operation portion in an extended state according to an embodiment of the present disclosure;
FIG. 35 is a schematic diagram of a smart traveling device with an operation portion in an extended state according to an embodiment of the present disclosure;
FIG. 36 is a sectional view highlighting an angle detection component according to an embodiment of the present disclosure;
FIG. 37 is a sectional view highlighting an angle detection component according to another embodiment of the present disclosure;
FIG. 38 is a schematic diagram of an operation mechanism with an operation portion in a retracted state according to an embodiment of the present disclosure;
FIG. 39 is a schematic diagram of a smart traveling device with an operation portion in a retracted state according to an embodiment of the present disclosure;
FIG. 40 is a schematic diagram of a smart traveling device with an operation portion touching an obstacle according to an embodiment of the present disclosure;
FIG. 41 is a schematic partial perspective view of a smart traveling device provided in an example embodiment of the present disclosure, in which an operation mechanism is at a retracted position;
FIG. 42 is a schematic diagram of a smart traveling device provided in an example embodiment of the present disclosure, in which an operation mechanism is at a released position;
FIG. 43 is a schematic perspective view of a smart traveling device from another perspective provided in an example embodiment of the present disclosure, in which the operation mechanism is at a released position;
FIG. 44 is a schematic perspective view of a smart traveling device from another perspective provided in an example embodiment of the present disclosure, in which the operation mechanism is at a released position;
FIG. 45 is a schematic diagram of a smart traveling device provided in an example embodiment of the present disclosure, in which an operation mechanism is at a retracted position;
FIG. 46 is a schematic top view of a smart traveling device provided in an example embodiment of the present disclosure, in which an operation mechanism is at a released position;
FIG. 47 is a schematic top view of a smart traveling device provided in an example embodiment of the present disclosure, in which an operation mechanism is at a retracted position;
FIG. 48 is a schematic partial perspective view of a smart traveling device provided in an example embodiment of the present disclosure, in which an operation mechanism is at a released position;
FIG. 49 is a schematic perspective view from another perspective based on FIG. 48;
FIG. 50 is a schematic partial perspective view of a smart traveling device provided in an example embodiment of the present disclosure, in which an operation mechanism is at a retracted position;
FIG. 51 is a schematic perspective view of an operation mechanism of a smart traveling device provided in an example embodiment of the present disclosure.

### Description of reference numerals in the figures:

91-Cutter disc,
92-Upper guard, 921-Side enclosure, 9211-Hollow structure, 922-Top cover, 9221-First section, 9222-Second section, 9223-First connecting hole, 9224-Clearance hole;
93-Lower guard, 931-Grass inlet, 932-Grass outlet;
94-Drive module, 941-First threaded hole, 942-Second threaded hole;
95-Body; 961-First connecting rod, 9611-First through hole, 962-Second connecting rod, 9621-Second through hole;
97-Third fastener; L1-First axis, L2-Second axis, L3-Third axis, L4-Fourth axis;
10-Body; 11-First position-limiting portion; 111-Position-limiting groove; 12-Second position-limiting portion; 121-Stop plate; 13-Third position-limiting portion; 1 41-Position-limiting post; 142-Magnet; 143-Sensor; 15-Fixing base; 151-First clearance hole; 16-Operation mechanism; 17-Elastic member; 18-Linkage mechanism; 181-First connecting rod; 1811-First hinge point; 1812-Third hinge point; 182-Second connecting rod; 1821-Second hinge point; 1822-Fourth hinge point; 19-Rotating mechanism; 191-Rotation portion; 192-Rotating power apparatus;
20-Body; 21-Operation mechanism; 22-Retractable mechanism; 221-Retractable portion; 222-Retractable fixing portion; 223-Rolling member; 23-Fixing base; 24-Elastic member; 25-Linkage mechanism; 251-First connecting rod; 2511-First hinge point; 2512-Third hinge point; 252-Second connecting rod; 2521-Second hinge point; 2522-Fourth hinge point;
30-Body; 31-Operation mechanism; 32-Elastic member; 33-Linkage mechanism; 331-First connecting rod; 3311-First hinge point; 3312-Third hinge point; 332-Second connecting rod; 3321-Second hinge point; 3322-Fourth hinge point; 34-Rotating mechanism; 341-Rotation portion; 3411-Connecting portion; 3412-Push portion; 342-Rotating power apparatus; 343-Transmission shaft; 344-Rolling member; 35-Fixing base; 351-First clearance hole; 36-First position-limiting portion;
40-Body, 401-First position-limiting portion, 41-Operation mechanism, 42-Connecting mechanism, 421-First connecting rod, 422-Second connecting rod; 43-Power mechanism, 431-Elastic member, 4311-Pin, 432- First accommodating hole, 433-First rotating shaft; 44-Position-limiting mechanism, 441-Position-limiting member, 442-Driving portion; L1-First axis, L2-Second axis, L3-Third axis, L4-Fourth axis, L5-Preset axis;
50-Body, 501-First position-limiting portion, 51-Operation mechanism, 52-Connecting mechanism, 521-First connecting rod, 522-Second connecting rod, 531-First rod body, 532-Second rod body, 533-Sliding block, 5201-First portion, 5202-Second portion; 54-Power mechanism, 541-Elastic member, 542-Pin; 55-Damping member, 551-Inner shell, 552-Outer shell; L1-First axis, L2-Second axis, L3-Third axis, L4-Fourth axis;
60-Body; 61-Operation portion; 611-Second rotating shaft; 6111-Third end; 6112-Fourth end; 62-Connecting portion; 621-First connecting rod; 6211-First stopper; 622-Second connecting rod; 63-First rotating shaft; 631-First end; 632-Second end; 64-Fixing base; 641-Fifth end; 642-Sixth end; 643-Second stopper; 65-First clearance hole; 66-Angle detection component; 661-Magnetic encoder; 662-Magnetic block; 67-Control component; 671-Elastic return member; 672-Driving portion; 673-Position-limiting member;
70-Body, 701-First position-limiting portion, 702-Main body, 703-Fixing base, 7031-First clearance hole; 71-Operation mechanism, 72-Connecting mechanism, 721-First connecting rod, 722-Second connecting rod, 723-First protrusion; 73-Power mechanism, 731-Elastic member, 732-Pin, 7301-First accommodating hole, 7302-First rotating shaft; 741-Position-limiting member, 742-Driving portion; 75-Position detection mechanism, 751-First position sensor, 752-Second position sensor; L1-First axis, L2-Second axis, L3-Third axis, L4-Fourth axis;
80-Body, 81-Operation mechanism, 811-Motor, 812-Housing, 82-Connecting mechanism, 821-First connecting rod, 8211-Straight segment, 8212-Arc-shaped segment, 822-Second connecting rod; 83-Power mechanism, 831-Elastic member, 832-Pin; 84-Position-limiting mechanism, 841-Position-limiting member, 842-Driving portion; 85-First clearance hole, 86-Clearance slot, 87-Second clearance hole; L1-First axis, L2-Second axis, L3-Third axis, L4-Fourth axis, L5-Preset axis.

### DETAILED DESCRIPTION

To provide a clearer understanding of technical features, objectives, and effects of embodiments of the present disclosure, specific embodiments of the present disclosure are introduced below with reference to the drawings.

The "schematic" herein means "serving as an instance, example, or description," and any illustration or embodiment described herein as "schematic" should not be construed as a more preferable or more advantageous technical solution.

For the sake of brevity, each figure only schematically shows a portion relevant to the present disclosure, and does not represent that its actual structure serves as a product. In addition, for brevity and ease of understanding, in some figures, only one or more of components with an identical structure or function are schematically illustrated or marked.

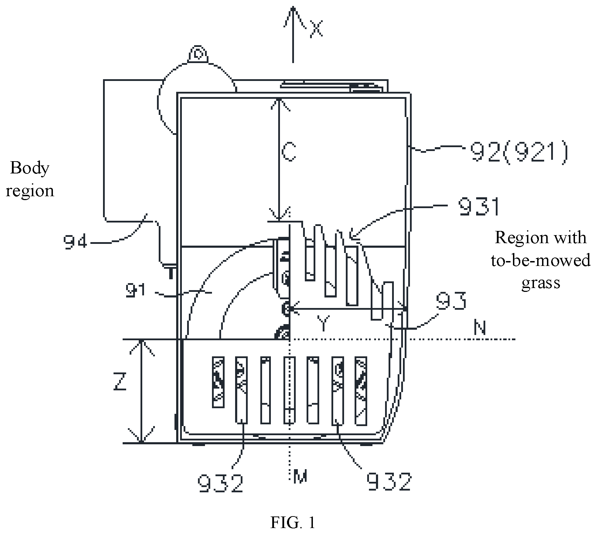

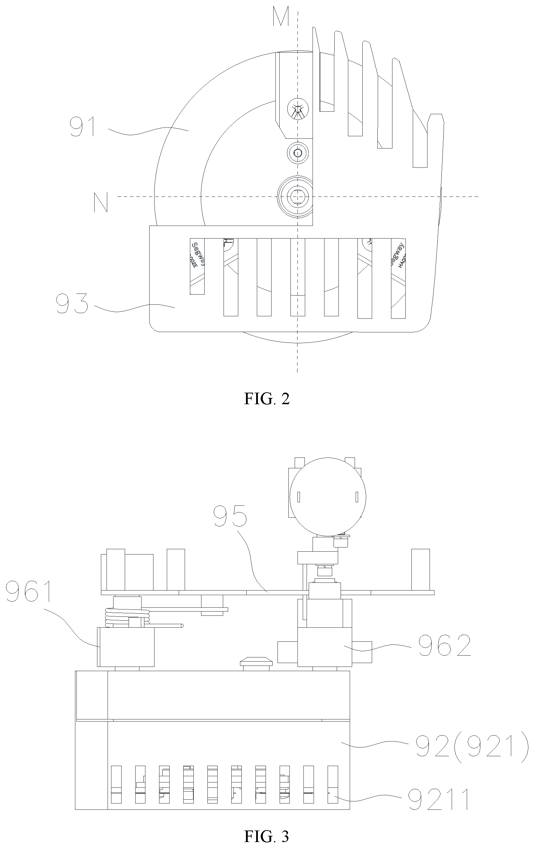

In view of the problems presented in the BACKGROUND, in a first aspect, the present disclosure provides an auxiliary cutting mechanism adapted to be mounted on a lawnmower. Referring to FIGS. 1 and 2, the auxiliary cutting mechanism comprises a cutter disc 91, an upper guard 92, and a lower guard 93, wherein a transverse centerline N and a longitudinal centerline M of the cutter disc 91 together divide the cutter disc into a left front section, a right front section, a left rear section, and a right rear section; the upper guard 92 comprises a side enclosure 921, the side enclosure 921 surrounding a lateral portion of the cutter disc 91; and the lower guard 93 is arranged on a bottom of the cutter disc 91, wherein a projection of the lower guard 93 onto the ground covers at least a part of the left rear section of a projection of the cutter disc 91 onto the ground, at least a part of the right rear section of the projection of the cutter disc 91 onto the ground, and at least a part of either the left front section or the right front section of the projection of the cutter disc 91 onto the ground.

That is to say, when viewing from the lower guard 93 toward the upper guard 92, the left front section or the right front section of the cutter disc 91 is exposed without being covered by the lower guard 93, while all other areas are at least partially covered by the lower guard 93.

The longitudinal centerline of the cutter disc 91 may be parallel to a forward direction of the lawnmower, and the transverse centerline perpendicularly intersects with the longitudinal centerline.

Based on the above technical solutions, if the auxiliary cutting mechanism is mounted on the lawnmower, the left front section or the right front section uncovered by the lower guard 93 is located on one side proximate to the lawnmower body 95, while the right front section or the left front section covered by the lower guard 93 is located on one side remote from the lawnmower body 95. In this way, on the one hand, when the auxiliary cutting mechanism is at a position extending from the body 95, a barrier effect of the upper guard 92 and the lower guard 93 can prevent a human hand or foot from touching the cutter disc 91, and on the other hand, a front section on one side proximate to the lawnmower body 95 is not covered by the lower guard 93, thereby reducing bending grass by the lower guard 93, and ensuring the cutting effect.

It should be noted that in the present disclosure, the "upper and lower" are defined based on the gravity direction when the auxiliary cutting mechanism is cutting weeds on the ground. That is, one side of the cutter disc 91 proximate to the ground is lower, and one side of the cutter disc 91 remote from the ground is upper.

The "front and rear" are defined based on the forward direction of the lawnmower when the auxiliary cutting mechanism is cutting weeds on the ground. That is, one side facing the forward direction of the lawnmower is the front, and one side facing away from the forward direction of the lawnmower is the rear.

The "left and right" mean that one side on a left-hand side is the left, and one side on a right-hand side is the right in the face of the forward direction of the lawnmower when the auxiliary cutting mechanism is cutting weeds on the ground.

For example, referring to the schematic perspective view in FIG. 1, the body 95 is located on a left side of the auxiliary cutting mechanism, the body 95 moves forward in a direction indicated by the arrow X, the left front section of the cutter disc 91 is proximate to the body 95 without being covered by the lower guard 93, while the right front section of the cutter disc 91 is remote from the body 95, but proximate to a to-be-mowed area; and the side enclosure 921 of the upper guard 92 surrounds the cutter disc 91 all around, thereby not only protecting a human hand or foot from touching the cutter disc 91, but also reducing bending grass by the lower guard 93, and ensuring the cutting effect.

In a possible implementation, referring to FIG. 1, a preset distance C is defined between a front end of the side enclosure 921 and a front end of the lower guard 93. The preset distance C is set to provide an enough spacing between the front end of the side enclosure 921 and the front end of the lower guard 93, so that weeds can enter the cutter disc 91 from this spacing, to be cut by the cutter disc 91. That is, the preset distance C is set to reduce bending grass. When the auxiliary cutting mechanism extends from the body 95, the preset distance can further prevent a human hand or foot from entering an interspace between the upper guard 92 and the ground and then touching the front end of the lower guard 93, thereby avoiding touching the cutter disc 91.

Specifically, the preset distance C is positively correlated with a distance between the cutter disc 91 and the ground. That is, the greater the distance between the cutter disc 91 and the ground is, the easier it is for a human hand or foot to enter the interspace between the upper guard 92 and the ground and then touch the cutter disc 91. Therefore, the preset distance C needs to be set larger to prevent a human hand or foot from entering the interspace between the upper guard 92 and the ground and then touching the cutter disc 91. Otherwise, the smaller the distance between the cutter disc 91 and the ground is, the more difficult it is for a human hand or foot to enter the interspace between the upper guard 92 and the ground and then touch the cutter disc 91. Therefore, the preset distance C may be set smaller. In an example, the preset distance C may be greater than or equal to 50 mm.

In addition, the lower guard 93 is surrounded by the side enclosure 921, and a clearance between the side enclosure 921 and each of a rear end, a left end, and a right end of the lower guard 93 is less than a preset threshold, so as to prevent entry of a finger or a toe into the clearance, thereby controlling the clearance between the side enclosure 921 and each of the rear end, the left end, and the right end of the lower guard 93 to prevent a human hand or feet from entering the clearance and then touching the cutter disc 91. Specifically, the preset threshold may be less than or equal to 12 mm, so that it is difficult for a human hand or foot to enter the clearance.

In a possible implementation, referring to FIG. 1, a plurality of spaced-apart grass inlets 931 are disposed on a left front section or a right front section of the lower guard 93, with the grass inlets 931 facing the front end of the side enclosure 921. In this way, under the prerequisite that the left front section or the right front section of the lower guard 93 covers the cutter disc 91, the grass inlets 931 are arranged to allow to-be-mowed grass to enter an upper part of the lower guard 93 from the grass inlets 931, so that the grass can be mowed by the cutter disc 91, thus reducing bending grass by the lower guard 93.

Each of the grass inlets 931 has a width of less than or equal to 12 mm. In this way, it is difficult for a human hand or foot to enter the grass inlets 931, thus ensuring the safety protection function of the lower guard 93.

In addition, if the projection of the lower guard 93 onto the ground covers at least a part of the left front section of the projection of the cutter disc 91 onto the ground, a distance between the left front section of the lower guard 93 and a center of the cutter disc 91 is greater than a distance between the left front section of the cutter disc 91 and the center thereof. In this way, on the one hand, when viewing from top to bottom, the lower guard 93 extends from the left front section of the cutter disc 91, thereby providing better protection. On the other hand, the front end of each of the grass inlets 931 extends from the cutter disc 91, so that the to-be-mowed grass extends to an edge of the cutter disc 91 through the grass inlets 931, and can more easily be mowed by the cutter disc 91.

Similarly, if the projection of the lower guard 93 onto the ground covers at least a part of the right front section of the projection of the cutter disc 91 onto the ground, a distance between the right front section of the lower guard 93 and the center of the cutter disc 91 is greater than a distance between the right front section of the cutter disc 91 and the center thereof. In this way, on the one hand, when viewing from top to bottom, the lower guard 93 extends from the right front section of the cutter disc 91, thereby providing better protection. On the other hand, the front end of each of the grass inlets 931 extends from the cutter disc 91, so that the to-be-mowed grass extends to an edge of the cutter disc 91 through the grass inlets 931, and can more easily be mowed by the cutter disc 91.

In a possible implementation, referring to FIG. 1, a grass outlet 932 is disposed on a left rear section of the lower guard 93, and/or a grass outlet 932 is disposed on a right rear section of the lower guard 93. In this way, the mowed weeds can be discharged from the grass outlet 932.

A length direction of a cross section of the grass outlet 932 is aligned with a forward-backward direction, and the grass outlet 932 has a width of less than or equal to 12 mm. In this way, it is difficult for a human hand or foot to enter the grass outlet 932, thus ensuring the safety protection function of the lower guard 93. That is, the grass outlet 932 may be strip-shaped, for example, may be rectangular or oval, including a length size and a width size.

In a possible implementation, referring to FIG. 3, a hollow structure 9211 is disposed on a rear portion of the side enclosure 921. In this way, the hollow structure 9211 may serve as a grass outlet, and the mowed weeds may be discharged from the hollow structure 9211.

The hollow structure 9211 is strip-shaped, and the hollow structure 9211 has a width of less than or equal to 12 mm. In this way, it is difficult for a human hand or foot to enter the hollow structure 9211, thus ensuring the safety protection function of the side enclosure 921. The hollow structure 9211 may be rectangular or oval.

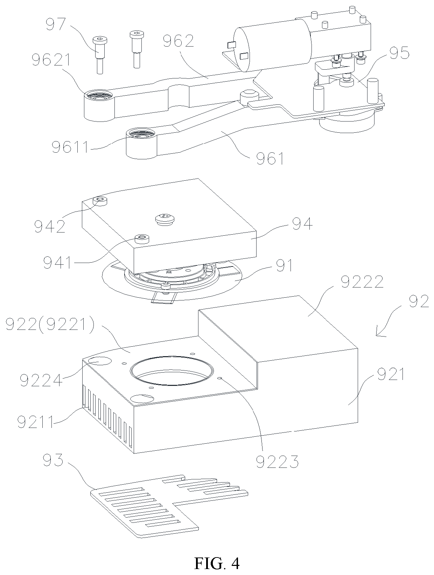

Referring to FIG. 3 or 4, the upper guard 92 further comprises a top cover 922 with an edge of the top cover 922 connected to the side enclosure 921, the auxiliary cutting mechanism further comprises a drive module 94, wherein the drive module 94 is connected to a body 95 of the lawnmower, is connected to an upper side of the cutter disc 91, and is surrounded by the side enclosure 921; and the top cover 922 covers the drive module 94 and is connected to the drive module 94. In this way, the upper guard 92 can further function to protect the drive module 94, and prevent, together with the top cover 922 and the side enclosure 921, a human hand or foot from touching the cutter disc 91.

Specifically, the top cover 922 may be provided with a first connecting hole 9223, and a first fastener is connected to the drive module 94 through the first connecting hole 9223, thereby fixing the top cover 922 to the drive module 94.

In an example, referring to FIGS. 1 and 3, the top cover 922 comprises a first region 9221 and a second region 9222, the first region 9221 covers the drive module 94, and the second region 9222 is located in front of the first region 9221 and is higher than the second region 9222. In this way, the second region 9222 is located in front of the cutter disc 91, and has a large distance from the ground, thereby reducing bending grass, and facilitating ensuring the lawnmowing effect of the cutter disc 91.

In a possible implementation, the lower guard 93 is directly connected to the upper guard 92, so that the auxiliary cutting mechanism has a simple structure. For example, an edge of the lower guard 93 may be connected to the side enclosure 921 of the upper guard 92 via a second fastener.

In addition, in an example, referring to FIG. 1, a distance Y between the center of the cutter disc 91 and a left end or a right end of the side enclosure 921 may be greater than or equal to 50 mm, and a distance Z between the center of the cutter disc 91 and a rear end of the side enclosure 921 may be greater than or equal to 50 mm.

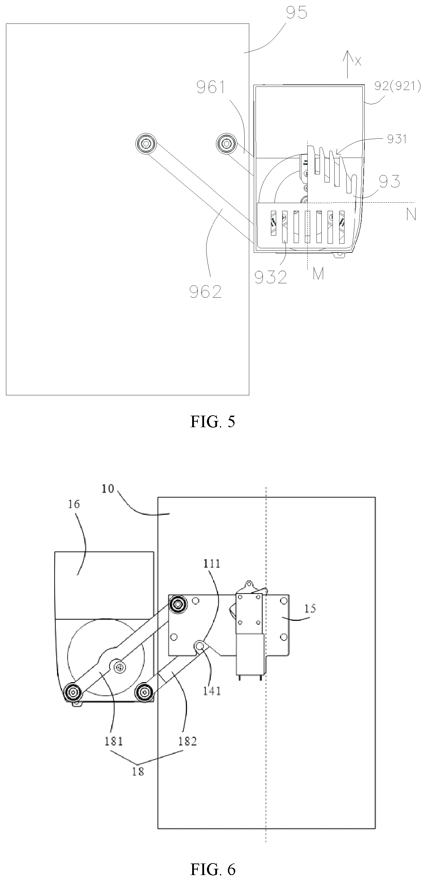

In a second aspect, the present disclosure further provides a lawnmower. Referring to FIGS. 4 and 5, the lawnmower comprises a body 95 and the above auxiliary cutting mechanism, wherein the auxiliary cutting mechanism is connected to the body 95, and the projection of the lower guard 93 onto the ground covers one side of the projection of the cutter disc 91 onto the ground remote from a centerline of the body 95, and a portion of one side of the projection of the cutter disc 91 onto the ground proximate to the centerline of the body 95. That is, in a leftward-rightward direction, one side of the cutter disc 91 uncovered by the lower guard is proximate to the centerline of the body 95. For example, the projection of the lower guard 93 onto the ground covers the left front section of the projection of the cutter disc 91 onto the ground, but does not cover the right front section. Therefore, the left front section of the cutter disc 91 is proximate to the centerline of the body 95, and the right front section is remote from the centerline of the body 95. Otherwise, the right front section of the cutter disc 91 is proximate to the centerline of the body 95, and the left front section is remote from the centerline of the body 95. Here, the centerline of the body 95 extends in the forward-backward direction.

As can be seen from the above description of the auxiliary cutting mechanism, the side enclosure 921 of the upper guard 92 surrounds the lateral portion of the cutter disc 91, so as to provide a barrier effect to prevent a human hand or foot from touching the cutter disc 91; and at least a front region on one side of the cutter disc 91 proximate to the centerline of the body 95 is exposed without being covered by the lower guard 93, thereby reducing bending grass by the lower guard 93, and ensuring the lawnmowing effect. Therefore, the lawnmower provided in the present disclosure not only can protect a human hand or foot, but also can reduce bending grass, to ensure the lawnmowing effect.

In a possible embodiment, the side enclosure 921 comprises an inner side plate and an outer side plate that are opposite to each other in a leftward-rightward direction, and the auxiliary cutting mechanism is pivotally connected to the body 95 with a pivot path including a retracted position and a released position, the outer side plate of the side enclosure 921 is proximate to the body 95 when the auxiliary cutting mechanism is at the retracted position, and the outer side plate of the side enclosure 921 is remote from the body 95 when the auxiliary cutting mechanism is at the released position. For example, in FIG. 4, the auxiliary cutting mechanism is at the retracted position relative to the body region; and in FIG. 5, the auxiliary cutting mechanism is at the released position relative to the body 95.

Based on this technical solution, when lawnmowing is required, the auxiliary cutting mechanism is kept at the released position, and the outer side plate of the side enclosure 921 is remote from the body 95, so that the auxiliary cutting mechanism at least partially extends from the body 95 to mow weeds at an edge of a region with to-be-mowed grass, while avoiding collision between the body 95 and a wall or a building at the edge of the region with to-be-mowed grass. Moreover, the outer side plate of the side enclosure 921 can provide a protective effect to prevent a human hand or foot from touching the cutter disc 91. When lawnmowing is not required, the auxiliary cutting mechanism may be kept at the retracted position, and the outer side plate of the side enclosure 921 is proximate to the body 95, thereby reducing space occupied by the lawnmower, and facilitating storage.

In a possible embodiment, referring to FIGS. 4 and 5, the lawnmower may further comprise a first connecting rod 961 and a second connecting rod 962, wherein the first connecting rod 961 comprises a first end and a second end that are opposite to each other, with the first end pivotally connected to the body 95 around a first axis L1 and the second end pivotally connected to the auxiliary cutting mechanism around a second axis L2; the second connecting rod 962 comprises a third end and a fourth end that are opposite to each other, with the third end pivotally connected to the body 95 around a third axis L3 and the fourth end pivotally connected to the auxiliary cutting mechanism around a fourth axis L4; the first axis L1, the second axis L2, and the third axis L3 are each parallel to the fourth axis L4; a distance A1 between the first axis L1 and the second axis L2 is equal to a distance A2 between the third axis and the fourth axis; and a distance B1 between the first axis and the third axis is equal to a distance B2 between the second axis and the fourth axis.

Based on this technical solution, a connection relationship among the first connecting rod 961, the second connecting rod 962, the body 95, and the auxiliary cutting mechanism can be understood as a parallel four-bar linkage mechanism. Such a connection relationship provides a constant angle between an orientation of the auxiliary cutting mechanism and the centerline of the body 10 all along. For example, the orientation of the auxiliary cutting mechanism remains parallel to the centerline of the body 95 all along. The centerline of the body 95 extends in the forward-backward direction.

In an example, the second end of the first connecting rod 961 is pivotally connected to the drive module 94 of the auxiliary cutting mechanism around the second axis L2; and the fourth end of the second connecting rod 962 is pivotally connected to the drive module 94 of the auxiliary cutting mechanism around the fourth axis L4.

The lawnmower may further comprise a third fastener 97, the drive module 94 is provided with a first threaded hole 941, and the first connecting rod 961 is provided with a first through hole 9611. The third fastener 97 is threadedly connected to the first threaded hole 941 of the drive module 94 through the first through hole 9611 on the first connecting rod 961, and the third fastener 97 is clearance fitted with the first through hole 9611. In this way, the first connecting rod 961 is pivotally connected to the drive module 94.

Similarly, the drive module 94 is further provided with a second threaded hole 942, and the second connecting rod 962 is provided with a second through hole 9621. The third fastener 97 is threadedly connected to the second threaded hole 942 of the drive module 94 through the second through hole 9621 on the second connecting rod 962, and the third fastener 97 is clearance fitted with the second through hole 9621. In this way, the second connecting rod 962 is pivotally connected to the drive module 94.

In an example, an clearance hole 9224 may be disposed on the top cover 922 of the upper guard 92, to allow the third fastener 97 to run through and then be threadedly connected to the drive module 94.

In addition, the lawnmower may further comprise a first position-limiting member and a second position-limiting member, wherein the first position-limiting member is connected to the auxiliary cutting mechanism for restricting the auxiliary cutting mechanism to the released position, and the second position-limiting member is connected to the auxiliary cutting mechanism for restricting the auxiliary cutting mechanism to the retracted position. Those skilled in the art can easily conceive of various implementations for the first position-limiting member and the second position-limiting member, which will not be repeated in the present disclosure.

The present disclosure further provides a retractable operation mechanism and a smart traveling device. Prior to introduction of the retractable operation mechanism and the smart traveling device in the embodiments of the present disclosure, an application scenario of the retractable operation mechanism and the smart traveling device will be briefly described to facilitate understanding.

The retractable operation mechanism can be applied to the smart traveling device to perform auxiliary operation. The smart traveling device may be, e.g., a robot lawnmower, a robot cleaner, a robot sweeper, or a robot snow remover, and its application scenario in an embodiment of the present disclosure is introduced using a robot lawnmower as an example. A robot lawnmower is a smart traveling apparatus convenient for a user to mow a lawn and vegetation. During a lawnmowing operation, the robot lawnmower needs to operate within a pre-set operation boundary. However, due to less accurate positioning of the robot lawnmower, whether the established operation boundary is a physical boundary or a virtual boundary, a certain distance is always present between the operation boundary and an actual boundary of the lawn to prevent the robot lawnmower from crossing over the operation boundary during lawnmowing. As a result, the robot lawnmower will miss mowing grass in an edge region of the lawn during the lawnmowing operation, and the edge region of the lawn needs to be processed manually, thereby increasing labor costs. In view of this, the present disclosure presents a retractable operation mechanism and a smart traveling device, so as to solve various problems existing in the above prior art.

The specific embodiments of the present disclosure will be described in detail below with reference to the drawings.

Referring to FIGS. 6 to 11, the retractable operation mechanism of this embodiment comprises a connecting mechanism, an operation mechanism 16, and a position detection apparatus.

The connecting mechanism comprises a first connection position for rotatable connection to a body 10 of the smart traveling device and a second connection position connected to the operation mechanism 16. The connecting mechanism rotates relative to the body 10, to drive the operation mechanism 16 to move relative to the body 10.

For example, the first connection position is rotatably connected to the body 10 in a connection mode of, e.g., a hinged connection. The second connection position is connected to the operation mechanism 16 in a connection mode of, e.g., a hinged connection. The connecting mechanism rotates relative to the body 10, thereby driving the operation mechanism 16 to move relative to the body 10.

The position detection apparatus comprises a position detection portion and a moving portion, wherein the position detection portion is connected to the body 10 of the smart traveling device, the moving portion is arranged on the connecting mechanism or the operation mechanism 16, and the position detection portion is configured to generate an electrical position signal in response to detecting that the moving portion reaches a predetermined position, wherein the electrical position signal is used to control movement of the connecting mechanism or the operation mechanism.

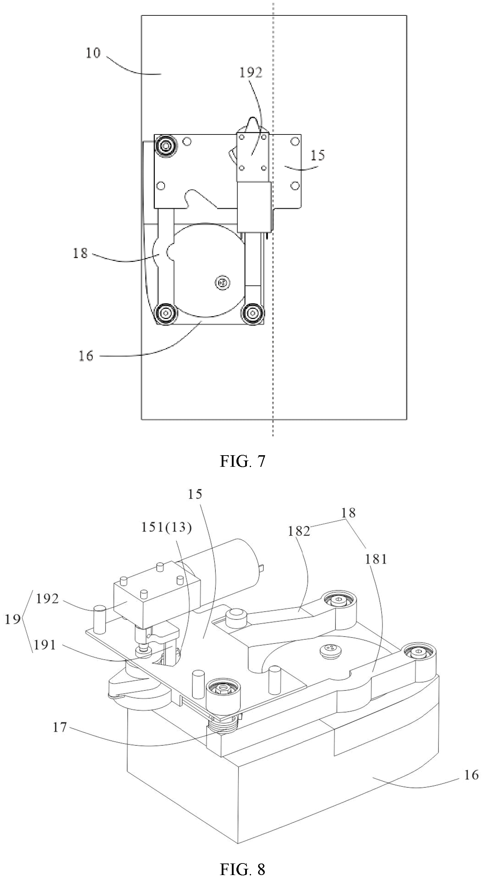

As an example, the position detection portion is fixedly connected to the body 10 of the smart traveling device, and the moving portion is fixedly connected to the connecting mechanism or the operation mechanism 16, wherein the connection mode may be, e.g., a welded connection or a bolted connection, which is not limited in this embodiment. During a movement process of the operation mechanism 16 relative to the body 10, accessible predetermined positions are respectively the released position and the retracted position, wherein the released position indicates a position where the operation mechanism 16 is remote from the centerline of the body 10, the released position may comprise a position where the operation mechanism 16 is at least partially located outside the projection of the body 10 or the operation mechanism 16 does not extend out and is more proximate to an edge of the body 10 than to the centerline of the body 10, which is not limited in this embodiment. The retracted position indicates a position where the operation mechanism 16 is proximate to the centerline of the body 10. The retracted position may comprise a position where the operation mechanism 16 is at least partially located in the projection of the body 10 or the operation mechanism 16 is more proximate to the centerline of the body 10, which is not limited in this embodiment. The projection of the body 10 refers to a projection of the body 10 onto the ground plane directly beneath the body. Referring to FIGS. 6 and 7, the centerline of the body 10 is the dotted line shown in the figure. The centerline of the body 10 may refer to an axis of the body 10 parallel to a forward direction of the body 10. When the connecting mechanism or the operation mechanism 16 reaches a predetermined position during the movement process, and the position detection portion arranged on the body 10 detects the moving portion on the connecting mechanism or the operation mechanism 16, the moving portion can be determined to reach the predetermined position, that is, the operation mechanism 16 reaches the predetermined position. In this case, the position detecting portion generates the electrical position signal for controlling the movement of the connecting mechanism or the operation mechanism 16. For example, the electrical position signal can be used to control the connecting mechanism or the operation mechanism 16 to stop moving when reaching the predetermined position.

It should be noted that the retractable operation mechanism may further comprise a power mechanism in contact with the connecting mechanism for providing power for the movement of the connecting mechanism. The power mechanism may be a power apparatus, such as a motor, wherein the power apparatus is connected to a first connection position of the connecting mechanism to drive the connecting mechanism to move; the power mechanism may further comprise a rotating power apparatus 192 and a rotation portion 191, the rotation portion 191 connected to the rotating power apparatus 192 abuts against the connecting mechanism, an elastic member 17 is arranged at the first connection position, and the elastic member 17, the rotating power apparatus 192, and the rotation portion 191 cooperate to achieve the movement of the connecting mechanism (the specific movement process is introduced in the embodiments below), which is not limited in this embodiment. When the moving portion is detected to reach the predetermined position, the position detection portion generates the electrical position signal and sends the electrical signal to the power mechanism. After receiving the electrical signal, the power mechanism stops driving the connecting mechanism, thereby controlling, based on the electrical position signal, the connecting mechanism or the operation mechanism 16 to stop moving when reaching the predetermined position.

The retractable operation mechanism in an embodiment of the present disclosure comprises a connecting mechanism, an operation mechanism 16, and a position detection apparatus; wherein the connecting mechanism comprises a first connection position for rotatable connection to a body 10 of the smart traveling device and a second connection position connected to the operation mechanism 16, and the connecting mechanism rotates relative to the body 10 to drive the operation mechanism 16 to move relative to the body 10; and the position detection apparatus comprises a position detection portion and a moving portion, wherein the position detection portion is connected to the body 10 of the smart traveling device, the moving portion is arranged on the connecting mechanism or the operation mechanism 16, and the position detection portion is configured to generate an electrical position signal in response to detecting that the moving portion reaches a predetermined position, wherein the electrical position signal is used to control the movement of the connecting mechanism or the operation mechanism. The retractable operation mechanism of the present disclosure is applied to the smart traveling device, so that the smart traveling device in operation can generate the electrical position signal to control the connecting mechanism or the operation mechanism 16 to stop moving when the position detection portion detects that the moving portion on the connecting mechanism reaches the released position. In this case, the operation mechanism 16 extends entirely or partially from one side of the body 10 of the smart traveling device or is more proximate to an edge of the body 10, thereby processing an edge region. When detecting that the moving portion on the connecting mechanism reaches the retracted position, the position detection portion generates the electrical position signal to control the connecting mechanism or the operation mechanism 16 to stop moving, so that the operation mechanism 16 is retracted from one side of the body 10 or is more proximate to a centerline of the body 10, thereby eliminating the need to manually process the edge region, and reducing labor costs.

In an optional implementation, the retractable operation mechanism further comprises a fixing base 15, wherein the fixing base 15 is used for fixed connection to the body 10. The first connection position of the connecting mechanism is rotatably connected to the fixing base 15, and the position detection portion is fixedly mounted on the fixing base 15. As an example, referring to FIG. 6, the fixing base 15 may be fixedly connected to the body 10, the first connection position of the connecting mechanism may be rotatably connected to the fixing base 15, e.g., by a hinged connection, and the position detection portion may be connected to the fixing base 15 in a connection mode of, e.g., a bolted connection. In this implementation, the fixing base 15 serves for fixation in place of the body 10, and the fixing base 15 is used as an independent fixing apparatus. A connection relationship among the first connection position of the connecting mechanism, the position detection portion of the position detection apparatus, and the body 10 can be replaced with a connection relationship with the fixing base 15, so that the overall structure of the retractable operation mechanism is more compact, and the whole retractable operation mechanism can be disassembled and assembled by disassembling and assembling the fixing base 15, thereby facilitating manipulation.

In an optional implementation, the position detection portion comprises a position-limiting structure, wherein the position-limiting structure comprises a first position-limiting portion 11 and a second position-limiting portion 12, with predetermined positions thereof including a first predetermined position and a second predetermined position. When the operation mechanism 16 reaches the released position, the first position-limiting portion 11 restricts movement of the moving portion at the first predetermined position, so that the position detection portion generates the electrical position signal; and when the operation mechanism 16 reaches the retracted position, the second position-limiting portion 12 restricts the movement of the moving portion at the second predetermined position, so that the position detection portion generates the electrical position signal, wherein the released position indicates a position where the operation mechanism 16 is remote from the centerline of the body 10, and the retracted position indicates a position where the operation mechanism 16 is proximate to the centerline of the body 10.

Here, the "remote" here is relative to the "proximate". Relative to the retracted position, the released position is a position where the operation mechanism 16 is remote from the centerline of the body 10; and compared with the released position, the retracted position is a position where the operation mechanism 16 is proximate to the centerline of the body 10.

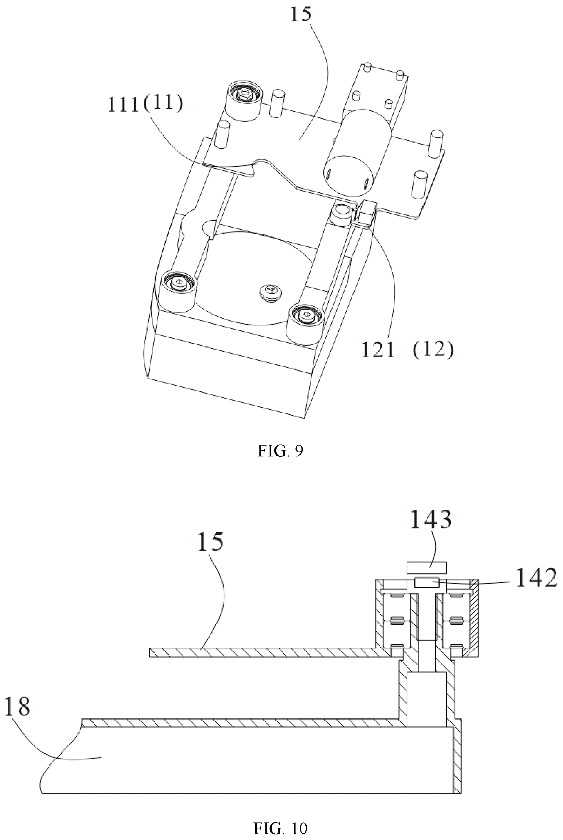

As an example, referring to FIG. 9, the position-limiting structure may be disposed on the fixing base 15 or the body 10, which is not limited in this embodiment. The position-limiting structure may comprise a first position-limiting portion 11 and a second position-limiting portion 12, with predetermined positions thereof including a first predetermined position and a second predetermined position, and the first position-limiting portion 11 and the second position-limiting portion 12 may be, e.g., a position-limiting groove 111 or a stop plate, which is not limited in this embodiment. The first position-limiting portion 11 is arranged at the first predetermined position, the second position-limiting portion 12 is arranged at the second predetermined position, the first predetermined position corresponds to the released position of the operation mechanism 16, and the second predetermined position corresponds to the retracted position of the operation mechanism 16. The first position-limiting portion 11 restricts the movement of the moving portion at the first predetermined position, so that the position detection portion generates the electrical position signal, to control the operation mechanism 16 to stop moving after reaching the released position; the second position-limiting portion 12 restricts the movement of the moving portion at the second predetermined position, so that the position detection portion generates the electrical position signal, to control the operation mechanism 16 to stop moving after reaching the retracted position.

In this implementation, the first position-limiting portion 11 and the second position-limiting portion 12 are arranged for position limiting when the operation mechanism 16 moves to the released position or the retracted position respectively, so that the position detection portion generates the electrical position signal to control the operation mechanism 16 to stop moving after reaching the released position or the retracted position, thereby providing a structure, and functioning for both position limiting and positioning.

In an optional implementation, the first position-limiting portion 11 is a position-limiting groove 111, the second position-limiting portion 12 is a stop plate 121, and the moving portion is a position-limiting post 141. The position-limiting post 141 is fixedly arranged on one side of the operation mechanism 16 or the connecting mechanism proximate to the body 10.

As an example, referring to FIGS. 6 and 9, the connecting mechanism and the operation mechanism 16 are connected to a bottom of the body 10 or the fixing base 15 connected to the bottom of the body 10, or the position-limiting groove 111 and the stop plate 121 are arranged on the bottom of the body 10 or the fixing base 15 connected to the bottom of the body 10. The position-limiting post 141 is fixedly connected to the connecting mechanism in a connection mode of, e.g., a welded connection. The stop plate 121 may be connected to the body 10 or the fixing base 15 in a connection mode of, e.g., a welded connection, or may be integrated on the fixing base 15. The position-limiting post 141 is arranged on one side of the connecting mechanism or the operation mechanism 16 proximate to the body 10 (or the fixing base 15). When the connecting mechanism or the operation mechanism 16 moves to the released position, the position-limiting post 141 enters the position-limiting groove 111, so that the position-limiting groove 111 restricts movement of the position-limiting post 141, thereby stopping movement of the connecting mechanism or the operation mechanism 16. When the connecting mechanism or the operation mechanism 16 moves to the retracted position, the position-limiting post 141 is restricted by the stop plate 121 from moving, so that the connecting mechanism or the operation mechanism 16 stops moving.

In this implementation, the position-limiting groove 111 may be directly arranged on the body 10 or the fixing base 15, thereby providing a simple structure, and facilitating manufacture at low production costs. The position-limiting post 141 cooperates with the position-limiting groove 111 and the stop plate 121 respectively, so that the operation mechanism 16 stops moving at the released position or the retracted position, thereby providing a simple structure and facilitating manufacture.

In an optional implementation, the retractable operation mechanism further comprises a power apparatus, and the position detection portion further comprises a current detection apparatus connected to the power apparatus, wherein a fixed end of the power apparatus is connected to the body 10, and an output end of the power apparatus is connected to the connecting mechanism, so that the power apparatus drives the connecting mechanism to move. When the first position-limiting portion 11 restricts the movement of the moving portion at the first predetermined position, or when the second position-limiting portion 12 restricts the movement of the moving portion at the second predetermined position, the current detection apparatus sends an electrical position signal to the power apparatus in response to detecting current increase of the power apparatus, wherein the electrical position signal is used to control the power apparatus to stop driving the connecting mechanism or the operation mechanism 16.

As an example, the power apparatus may be a motor. The power apparatus comprises a fixed end and an output end, wherein the fixed end is fixedly connected to the body 10 or the fixing base 15, and the output end is connected to the first connection position of the connecting mechanism, so that the output end of the power apparatus drives the connecting mechanism to move. The position detection portion further comprises a current detection apparatus electrically connected to the power apparatus. The current detection apparatus here may be arranged separately to detect the current of the power apparatus, or may be disposed on a control circuit board of the smart traveling device in the body 10, which is not limited in this embodiment. When the first position-limiting portion 11 restricts the movement of the moving portion at the first predetermined position, or when the second position-limiting portion 12 restricts the movement of the moving portion at the second predetermined position, the current of the power apparatus suddenly increases. When detecting the current increase of the power apparatus, the current detection apparatus generates the electrical position signal and sends it to the power apparatus. After receiving the electrical signal, the power apparatus stops driving the connecting mechanism or the operation mechanism 16, so that the connecting mechanism or the operation mechanism 16 stops moving when reaching the retracted position or the released position.

In this implementation, the power apparatus is arranged to drive the connecting mechanism or the operation mechanism 16 to move between the released position and the retracted position. The current detection apparatus connected to the power apparatus is arranged, so that when the first position-limiting portion 11 restricts the movement of the moving portion at the first predetermined position, or when the second position-limiting portion 12 restricts the movement of the moving portion at the second predetermined position, the current detection apparatus generates the electrical position signal in response to detecting the current increase of the power apparatus, and sends it to the power apparatus. After receiving the electrical signal, the power apparatus stops driving the connecting mechanism or the operation mechanism 16, thereby avoiding component damage because the position-limiting structure restricts the movement of the moving portion, but the power apparatus remains driving the connecting mechanism.

In an optional implementation, the retractable operation mechanism further comprises a rotating power apparatus 192 and a rotation portion 191, wherein the rotating power apparatus 192 is connected to the body 10, and the rotation portion 191 connected to the rotating power apparatus 192 is in contact with the connecting mechanism. When the rotating power apparatus 192 drives the rotation portion 191 to rotate from a first position to a second position, the connecting mechanism drives the operation mechanism 16 to move from the retracted position to the released position; and when the rotating power apparatus 192 drives the rotation portion 191 to rotate from the second position to the first position, the rotation portion 191 drives the operation mechanism to move from the released position to the retracted position.

For example, referring to FIG. 8, the rotating mechanism 19 comprises a rotating power apparatus 192 and a rotation portion 191. The rotating power apparatus 192 may be a motor. The rotation portion 191 has one end connected to the rotating power apparatus 192 and the other end in contact with the connecting mechanism, for example, the other end may be connected to or abuts against the connecting mechanism, which is not limited in this embodiment. The rotation portion 191 is driven by the rotating power apparatus 192 to rotate. When the rotation portion 191 is at the first position, the operation mechanism 16 is at the retracted position, and when the rotation portion 191 is at the second position, the operation mechanism 16 is at the released position. When the rotating power apparatus 192 drives the rotation portion 191 to rotate from the first position to the second position, the connecting mechanism drives the operation mechanism 16 to move from the retracted position to the released position; and when the rotating power apparatus 192 drives the rotation portion 191 to rotate from the second position to the first position, the rotation portion 191 pushes the connecting mechanism to move, so that the connecting mechanism drives the operation mechanism to move from the released position to the retracted position.

It should be noted that when the rotating power apparatus 192 drives the rotation portion 191 to rotate from the first position to the second position, the rotation portion 191 can drive the connecting mechanism to move, so that the connecting mechanism drives the operation mechanism 16 to move from the retracted position to the released position, or the elastic member 17 may be arranged at the first connection position of the connecting mechanism. When the rotation portion 191 is at the first position, the elastic member 17 is in a compressed state, and when the rotation portion 191 rotates toward the second position, the connecting mechanism moves under an elastic force exerted by the elastic member 17, thereby driving the operation mechanism 16 to move from the retracted position to the released position, which is not limited in this embodiment.

In this implementation, the rotating power apparatus 192 and the rotation portion 191 are arranged, so that the rotating power apparatus 192 and the rotation portion 191 drive the connecting mechanism, to drive the operation mechanism 16 to move to the retracted position or the released position. Further, the rotation portion 191 can restrict the connecting mechanism at the first position or the second position, thereby functioning to restrict and drive the connecting mechanism.

In an optional implementation, the position-limiting structure comprises a third position-limiting portion 13, and the position detection portion further comprises a current detection apparatus connected to the rotating power apparatus 192, wherein the third position-limiting portion 13 is arranged on the body 10. When the rotation portion 191 reaches the second position, the third position-limiting portion 13 restricts rotation of the rotation portion 191. The current detection apparatus sends an electrical position signal to the rotating power apparatus 192 in response to detecting current increase of the rotating power apparatus 192, wherein the electrical position signal is used to control the rotating power apparatus 192 to stop driving.

As an example, referring to FIG. 8, the body 10 or the fixing base 15 is provided with a third position-limiting portion 13 corresponding to the second position of the rotation portion 191, such as a first clearance hole 151 shown in FIG. 8. The third position-limiting portion 13 is configured to restrict the rotation of the rotation portion 191. During the rotation of the rotation portion 191 from the first position to the second position, the rotation portion 191 may not exert a force on the connecting mechanism or the operation mechanism 16. For example, the elastic member 17 is arranged at the first connection position of the connecting mechanism, so that the operation mechanism 16 moves from the retracted position to the released position. In this case, the movement of the rotation portion 191 and the movement of the connecting mechanism are independent of each other. Therefore, when the operation mechanism 16 moves to the released position, the first position-limiting portion 11 is used to restrict the connecting mechanism or the operation mechanism 16, so that the connecting mechanism stops moving, but fails to restrict the rotation of the rotation portion 191. Therefore, the third position-limiting portion 13 is arranged, so that when the rotation portion 191 rotates to the second position, the third position-limiting portion 13 restricts the rotation of the rotation portion 191. The current detection apparatus generates an electrical position signal in response to detecting the current increase of the rotating power apparatus 192, and sends it to the rotating power apparatus 192. After the rotating power apparatus 192 receives the electrical position signal, the rotating power apparatus 192 stops driving, and the rotation portion 191 stops rotation. The rotation portion 191 may further form auxiliary position limiting on the connecting mechanism or the operation mechanism 16 at the second position, so that the connecting mechanism or the operation mechanism 16 stops moving. In addition, the first clearance hole 151 may further restrict the rotation portion 191 when the rotation portion 191 rotates to the first position.

In this implementation, the third position-limiting portion 13 is arranged, to restrict the rotation portion 191 from continued rotation when the rotation portion 191 reaches the second position, so that the rotating power apparatus 192 stops driving when the connecting mechanism reaches the released position.

In an optional implementation, the position detection portion comprises a sensor 143, and the moving portion comprises a magnet 142; or the position detection portion comprises a magnet 142, and the moving portion comprises a sensor 143. When the connecting mechanism reaches the released position or the retracted position, the sensor 143 senses the magnet 142 and outputs an electrical position signal.

As an example, the sensor 143 may be a Hall sensor or a sensor for angle detection, which is not limited in this embodiment. When the sensor 143 is a Hall sensor, and the position detection portion comprises a Hall sensor, Hall sensors may be arranged on the body 10 or the fixing base 15 at positions corresponding to the released position and the retracted position of the operation mechanism 16, respectively. Accordingly, the moving portion arranged on the connecting mechanism may be a magnet 142. If the moving portion comprises a Hall sensor, the Hall sensor is arranged on the connecting mechanism, for example, on the position-limiting post 141. Accordingly, magnets 142 may be arranged on the body 10 or the fixing base 15 at positions corresponding to the released position and the retracted position of the operation mechanism 16, for example, in the position-limiting groove 111 or on the stop plate 121. Therefore, when the connecting mechanism or the operation mechanism 16 reaches the released position and the retracted position, the Hall sensor can sense the magnet 142 and output an electrical position signal, which may be sent to the power apparatus or the rotating power apparatus 192 of the connecting mechanism, so that the power apparatus or the rotating power apparatus 192 stops driving, and the connecting mechanism or the operation mechanism 16 stops moving.

Referring to FIG. 10, the sensor 143 is a sensor for angle detection. For example, the sensor for angle detection may be a magnetic encoder. If the position detection portion comprises a sensor for angle detection, a sensor for angle detection may be disposed on the body 10 or the fixing base 15 at a position corresponding to the released position or the retracted position of the operation mechanism 16 respectively. Accordingly, the moving portion arranged on the connecting mechanism or the operation mechanism 16 may be a magnet 142. The magnet 142 may be arranged at a rotatable connection point between the connecting mechanism and the body 10 or the fixing base 15, such as on a rotating shaft at the hinge point; and if the moving portion comprises a sensor for angle detection, a sensor for angle detection is arranged on the connecting mechanism, or arranged on the rotating shaft at the hinge point. Accordingly, the magnet 142 may be arranged on the body 10 or the fixing base 15 at a position corresponding to the released position or the retracted position of the operation mechanism 16 respectively. It should be noted that the sensor for angle detection in this embodiment is arranged opposite to and spaced apart from the magnet 142. The sensor for angle detection is configured to detect a rotation angle of the magnet 142, to determine whether the operation mechanism 16 reaches the released position or the retracted position based on the rotation angle. In addition, the sensor for angle detection is further used to detect an angle of the connecting mechanism or the operation mechanism 16 during the movement process, thereby determining a specific position of the connecting mechanism or the operation mechanism 16 during the movement process.

It should be noted that in this embodiment, the rotation angle may be detected not only using a combination of a magnetic encoder and a magnet, but also using, e.g., a photoelectric rotary encoder or an angle sensor, which is not limited in this embodiment. The angle sensor may be arranged above the rotating shaft at the hinge point, and a segment of the rotating shaft at the hinge point extends out and is inserted into the inside of the angle sensor. When the connecting mechanism rotates and drives the rotating shaft to rotate, the rotating shaft drives the structure inside the angle sensor to rotate, thereby detecting the rotation angle of the rotating shaft to determine whether the operation mechanism 16 reaches the released position or the retracted position.

In this implementation, the magnet 142 and the sensor 143 are mounted at corresponding positions of the body 10, the fixing base 15, the connecting mechanism, or the operation mechanism 16. When the operation mechanism 16 reaches the released position or the retracted position, the sensor 143 senses the magnet 142 and outputs an electrical position signal, so that the operation mechanism 16 stops movement, and has a simple detection structure.

In an optional implementation, the connecting mechanism comprises an elastic member 17 and a linkage mechanism 18, wherein the linkage mechanism 18 has one end hinged to the fixing base 15 and the other end hinged to the operation mechanism 16. The elastic member 17 is arranged at the hinge point between the linkage mechanism 18 and the fixing base 15. The rotation portion 191 abuts against the linkage mechanism 18.

As an example, referring to FIG. 8, the linkage mechanism comprises an elastic member 17 and a linkage mechanism 18. The linkage mechanism 18 may comprise a single connecting rod or a plurality of connecting rods. The linkage mechanism 18 has one end (i.e., the first connection position of the connecting mechanism) hinged to the body 10 and the other end connected to the operation mechanism 16 (i.e., the second connection position of the connecting mechanism) in a connection mode of a rotatable connection, e.g., a hinged connection or a pivoted connection, which is not limited in this embodiment. The elastic member 17 may comprise a torsion spring. The elastic member 17 is arranged at the hinge point between the linkage mechanism 18 and the body 10. For example, the torsion spring may be sleeved on the rotating shaft at the hinge point between the linkage mechanism 18 and the body 10. A first pin of the torsion spring may be fixedly connected to the body 10 or the fixing base 15, and a second pin of the torsion spring may be fixedly connected to the linkage mechanism 18. One or a plurality of elastic members 17 may be provided. For example, if the linkage mechanism 18 comprises a first connecting rod 181 and a second connecting rod 182, the elastic member 17 may be arranged at the hinge point between the first connecting rod 181 or the second connecting rod 182 and the body 10, or the elastic member 17 may be arranged at the hinge point between the body 10 and each of the first connecting rod 181 and the second connecting rod 182, which is not limited in this embodiment. The rotation portion 191 abuts against the linkage mechanism 18. For example, the rotation portion 191 may abut against a side surface of the connecting rod in the linkage mechanism 18, and may restrict the movement of the linkage mechanism 18 at the first position or the second position, thereby restricting the movement of the operation mechanism 16 at the released position and the retracted position. Or, the rotation portion 191 may abut against the operation mechanism 16, which is not limited in this embodiment.

The elastic member 17, the rotating power apparatus 192, and the rotation portion 191 cooperate to achieve the movement process of the connecting mechanism as follows: When the operation mechanism 10 is at the retracted position, the rotation portion 191 is at the first position and restricts the connecting mechanism. In this case, the elastic member 17 is in a compressed state. When the rotation portion 191 rotates from the first position to the second position, the connecting mechanism is released, i.e., an elastic force exerted by the elastic member 17 is released, so that the connecting mechanism moves under the action of the elastic force exerted by the elastic member 17, the connecting mechanism drives the operation mechanism 16 to entirely or partially extend from the projection of the body 10, or the operation mechanism 16 does not extend out and is more proximate to an edge of the body 10, which is not limited in this embodiment, and the operation mechanism 16 reaches the released position. During the releasing process, the rotation portion 191 does not exert a force on the connecting mechanism, and only releases the connecting mechanism. Therefore, the rotating power apparatus 192 and the rotation portion 191 does not work on the connecting mechanism. After the operation mechanism 10 reaches the released position, the rotation portion 191 is at the second position and the elastic member 17 is in a released state. In this case, the connecting mechanism (or the operation mechanism 16) can reciprocate between the released position and the retracted position. When the rotation portion 191 rotates from the second position to the first position, the rotating power apparatus 192 drives the rotation portion 191 to rotate, and the rotation portion 191 pushes the connecting mechanism to be retracted from outside the projection of the body 10 or to a position more proximate to the centerline of the body 10, which is not limited in this embodiment, so that the operation mechanism 16 reaches the retracted position. During the retraction process, the connecting mechanism moves under a force exerted by the rotation portion 191, so that the rotating power apparatus 192 and the rotation portion 191 perform work on the connecting mechanism. In summary, when the elastic member 17, the rotating power apparatus 192, and the rotation portion 191 cooperate to achieve the movement process of the connecting mechanism, the rotating power apparatus 192 and the rotation portion 191 perform work only during the retraction process of the operation mechanism 16, thereby reducing energy consumption of the rotating power apparatus 192 and the rotation portion 191.

In this implementation, when the operation mechanism 16 is in operation, i.e., when the rotation portion 191 is at the second position, the connecting mechanism (or the operation mechanism 16) can reciprocate between the released position and the retracted position. When the operation mechanism 16 encounters an obstacle (such as a fence, bush, or bamboo grove at an edge of a lawn), the operation mechanism 16 can drive the linkage mechanism 18 to move in a direction proximate to the body 10 under a force exerted by the obstacle. When traveling through an obstacle region, the linkage mechanism 18 drives the operation mechanism 16 under the action of the elastic member 17 to reach the released position to continue operation, thereby achieving the obstacle avoidance function.

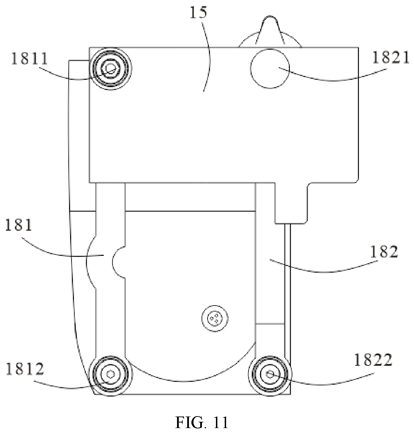

In an optional implementation, the linkage mechanism 18 comprises a first connecting rod 181 and a second connecting rod 182, wherein the first connecting rod 181 has one end hinged to the fixing base 15 at a first hinge point 1811 and the other end hinged to the operation mechanism 16 at a third hinge point 1812; the second connecting rod 182 has one end hinged to the fixing base 15 at a second hinge point 1821 and the other end hinged to the operation mechanism 16 at a fourth hinge point 1822; a line connecting the first hinge point 1811 and the third hinge point 1812 is parallel to a line connecting the second hinge point 1821 and the fourth hinge point 1822, and a line connecting the first hinge point 1811 and the second hinge point 1821 is parallel to a line connecting the third hinge point 1812 and the fourth hinge point 1822. As an example, referring to FIG. 11, the line connecting the first hinge point 1811 and the third hinge point 1812 is aligned with the line connecting the second hinge point 1821 and the fourth hinge point 1822, the line connecting the first hinge point 1811 and the second hinge point 1821 is aligned with the line connecting the third hinge point 1812 and the fourth hinge point 1822, and lines connecting the first hinge point 1811, the second hinge point 1821, the third hinge point 1812, and the fourth hinge point 1822 form a parallelogram.

In this implementation, the first connecting rod 181 is arranged to have one end hinged to the body 10 at the first hinge point 1811 and the other end hinged to the operation mechanism 16 at the third hinge point 1812; the second connecting rod 182 is arranged to have one end hinged to the body 10 at the second hinge point 1821 and the other end hinged to the operation mechanism 16 at the fourth hinge point 1822; the line connecting the first hinge point 1811 and the third hinge point 1812 is parallel to the line connecting the second hinge point 1821 and the fourth hinge point 1822, and the line connecting the first hinge point 1811 and the second hinge point 1821 is parallel to the line connecting the third hinge point 1812 and the fourth hinge point 1822, to control the direction of the operation mechanism 16 connected to the linkage mechanism 18. When the smart traveling device is, for example, a robot lawnmower, the operation mechanism 16 is provided with a grass inlet. When the line connecting the first hinge point 1811 and the second hinge point 1821 is perpendicular to the forward direction of the body 10 of the robot lawnmower, the connecting line between the third hinge point 1812 and the fourth hinge point 1822 is parallel to the grass inlet of the operation mechanism 16. Along the forward direction of the body 10, the operation mechanism 16 entirely or partially extends from one side of the body 10 to operate, thereby ensuring that the direction of the grass inlet of the operation mechanism 16 is aligned with the forward direction of the body 10, and achieving better lawnmowing effect.

The present disclosure further provides a smart traveling device, comprising a body 10 and the retractable operation mechanism according to any one of the above embodiments, wherein the first connection position of the connecting mechanism in the retractable operation mechanism is rotatably connected to the body 10, and the position detection portion of the position detection apparatus is fixedly connected to the body 10.

As an example, the smart traveling device may be, e.g., a robot lawnmower, a robot cleaner, a robot sweeper, or a robot snow remover, which is not limited in this embodiment. The retractable operation mechanism may be fixedly connected to a lower surface of the body 10, and may be fixedly connected to the body 10 via the position detection portion of the position detection apparatus in the retractable operation mechanism, and the first connection position of the connecting mechanism is rotatably connected to the body 10 or is fixedly connected to the body 10 via the fixing base 15 in the retractable operation mechanism, thereby connecting the retractable operation mechanism to the body 10.

The smart traveling device in the present disclosure comprises a body 10 and the retractable operation mechanism according to any one of the above embodiments, wherein the first connection position of the connecting mechanism in the retractable operation mechanism is rotatably connected to the body 10, and the position detection portion of the position detection apparatus is fixedly connected to the body 10. If the smart traveling device is used for lawnmowing, the smart traveling device can detect whether the moving portion on the connecting mechanism reaches a predetermined position via the position detection portion arranged on the body 10 or the fixing base 15 during a lawnmowing operation, so that the operation mechanism 16 stops moving when reaching the released position, the operation mechanism 16 entirely or partially extends from one side of the body of the smart traveling device or is more proximate to an edge of the body, so that the operation mechanism can be more proximate to an edge of an operation region and then process an edge region of the operation region; and so that the operation mechanism 16 can stop moving when reaching the retracted position, thereby eliminating the need to manually process the edge region, and reducing labor costs.

The present disclosure further provides another retractable operation mechanism and a smart traveling device. Prior to introduction of the retractable operation mechanism and the smart traveling device in the embodiments of the present disclosure, an application scenario of the retractable operation mechanism and the smart traveling device will be briefly described to facilitate understanding.

The retractable operation mechanism can be applied to the smart traveling device to perform auxiliary operation. The smart traveling device may be, e.g., a robot lawnmower, a robot cleaner, a robot sweeper, or a robot snow remover, and its application scenario in an embodiment of the present disclosure is introduced using a robot lawnmower as an example. A robot lawnmower is a smart traveling apparatus convenient for a user to mow a lawn and vegetation. During a lawnmowing operation, the robot lawnmower needs to operate within a pre-set operation boundary. However, due to less accurate positioning of the robot lawnmower, whether the established operation boundary is a physical boundary or a virtual boundary, a certain distance is always present between the operation boundary and an actual boundary of the lawn to prevent the robot lawnmower from crossing over the operation boundary during lawnmowing. As a result, the robot lawnmower will miss mowing grass in an edge region of the lawn during the lawnmowing operation, and the edge region of the lawn needs to be processed manually, thereby increasing labor costs. In view of this, the present disclosure presents a retractable operation mechanism and a smart traveling device, so as to solve various problems existing in the above prior art.

The specific embodiments of the present disclosure will be described in detail below with reference to the drawings.

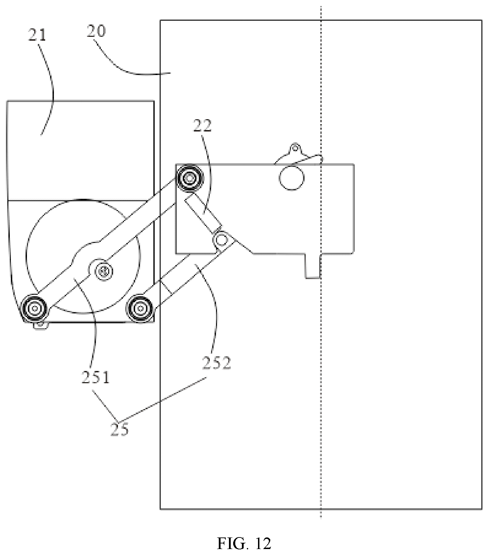

Referring to FIGS. 12 to 16, the retractable operation mechanism of this embodiment comprises an operation mechanism 21, a connecting mechanism, and a retractable mechanism 22.

The retractable mechanism 22 comprises a retractable fixing portion 222 and a retractable portion 221, wherein the retractable fixing portion 222 is used for connection to a body 20 of the smart traveling device, and the retractable portion 221 is in contact with the connecting mechanism.

As an example, the retractable fixing portion 222 is detachably connected to the body 20 of the smart traveling device, for example, may be connected to a bottom of the body 20. The retractable portion 221 has one end connected to the retractable fixing portion 222 and the other end extending/retracting relative to the retractable fixing portion 222, and is in contact with the connecting mechanism. The contact mode between the retractable portion 221 and the connecting mechanism may include abutment or connection, which may be flexibly set by those skilled in the art based on a relative position between the retractable portion 221 and the connecting mechanism, and is not limited in this embodiment.

The connecting mechanism comprises a first connection position for rotatable or slidable connection to the body 20 and a second connection position connected to the operation mechanism 21. The retractable portion 221 drives the connecting mechanism to rotate or slide via extension/retraction, and the connecting mechanism drives the operation mechanism 21 to rotate or slide relative to the body 20.

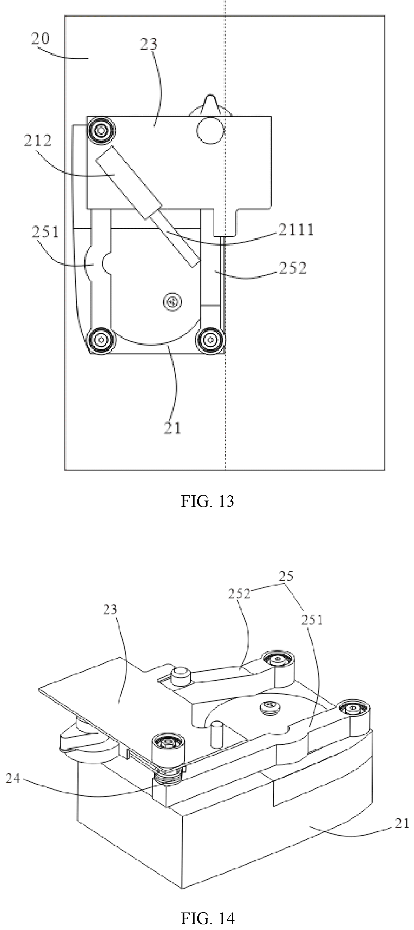

As an example, the connecting mechanism comprises a first connection position and a second connection position, which may be a first end and a second end opposite to each other on the connecting mechanism, wherein the first connection position is rotatably or slidably connected to the body 20 in a connection mode of a rotatable connection, e.g., a hinged connection or a slidable connection. The slidable connection may be implemented by providing a slide rail on the body 20, and locating the connecting mechanism or the first connection position of the connecting mechanism within the slide rail, which is not limited in this embodiment. The second connection position may be connected to the operation mechanism 21 in a connection mode of a rotatable connection, e.g., a hinged connection or a fixed connection, which is not limited in this embodiment. The retractable portion 221 drives the first connection position of the connecting mechanism to rotate or slide relative to the body 20 via extension/retraction, drives the entire connecting mechanism to rotate or slide relative to the body 20, and then drives the operation mechanism 21 connected to the second connection position to rotate or slide relative to the body 20. During the rotation or sliding of the operation mechanism 21 relative to the body 20, accessible extreme positions are the released position and the retracted position respectively, wherein the released position comprises a position where the operation mechanism 21 is at least partially located outside the projection of the body 20 or the operation mechanism 21 does not extend out and is more proximate to an edge of the body 20, which is not limited in this embodiment. The retracted position refers to a position where the operation mechanism 21 is at least partially located in the projection of the body 20 or the operation mechanism 21 is more proximate to a centerline of the body 20, which is not limited in this embodiment. The projection of the body 20 refers to a projection of the body 20 onto the ground plane directly beneath the body. Referring to FIGS. 12 and 13, the centerline of the body 20 is the dotted line shown in the figure. The centerline of the body 20 may refer to an axis of the body 20 parallel to a forward direction of the body 20.

It should be noted that the movement of the connecting mechanism in this embodiment may be implemented by connecting the retractable mechanism 22 to the connecting mechanism, so that the retractable mechanism 22 drives the connecting mechanism to rotate or slide directly using extension/retraction movement; or by providing an elastic member 24 at the first connection position, so that the elastic member 24 and the retractable mechanism 22 cooperate to achieve the movement of the connecting mechanism (the specific movement process is introduced in the embodiments below), which is not limited in this embodiment.

In an optional implementation, the retractable fixing portion 222 of the retractable mechanism 22 is connected to a third connection position of the body 20 and is located on a first side of the connecting mechanism, wherein the first side is one side remote from the centerline of the body 20; when the retractable portion 221 retracts, the operation mechanism 21 moves in a direction remote from the centerline of the body 20; and when the retractable portion 221 extends out, the operation mechanism 21 moves in a direction proximate to the centerline of the body 20.

As an example, referring to FIGS. 12 and 13, the retractable fixing portion 222 of the retractable mechanism 22 is connected to a third connection position of the body 20, wherein the third connection position is located on a first side of the connecting mechanism, wherein the first side refers to one side of the connecting mechanism remote from the centerline of the body 20. The retractable portion 221 may abut against or be connected to a side surface of the connecting mechanism. When the retractable portion 221 retracts, the connecting mechanism is released in a direction of the first side of the connecting mechanism, so that the connecting mechanism can move in a direction remote from the centerline of the body 20, thereby driving the operation mechanism 21 to move in a direction remote from the centerline of the body 20, and reaching the released position. When the retractable portion 221 extends, the connecting mechanism moves in a direction proximate to the centerline of the body 20, thereby driving the operation mechanism 21 to move in a direction proximate to the centerline of the body 20, and reach the retracted position. At the retracted position, the retractable portion 221 can limit the connecting mechanism in the direction of the first side of the connecting mechanism. In this implementation, the retractable fixing portion 222 of the retractable mechanism 22 is connected to a third connection position of the body 20 and is located on a first side of the connecting mechanism, wherein the first side is one side remote from the centerline of the body 20; when the retractable portion 221 retracts, the operation mechanism 21 moves in a direction remote from the centerline of the body 20; and when the retractable portion 221 extends out, the operation mechanism 21 moves in a direction proximate to the centerline of the body 20, that is, the retractable portion 221 drives the operation mechanism 21 to move relative to the body 20 via extension/retraction. Moreover, the retractable portion 221 may not be connected to the connecting mechanism, and the above movement process can be implemented by contacting, thereby providing a simple overall structure, and facilitating installation and disassembly.

In an optional implementation, the retractable fixing portion 222 of the retractable mechanism 22 is connected to a fourth connection position of the body 20 and is located on a second side of the connecting mechanism, wherein the second side is one side proximate to the centerline of the body 20; when the retractable portion 221 extends out, the operation mechanism 21 moves in a direction remote from the centerline of the body 20; and when the retractable portion 221 retracts, the operation mechanism 21 moves in a direction proximate to the centerline of the body 20.

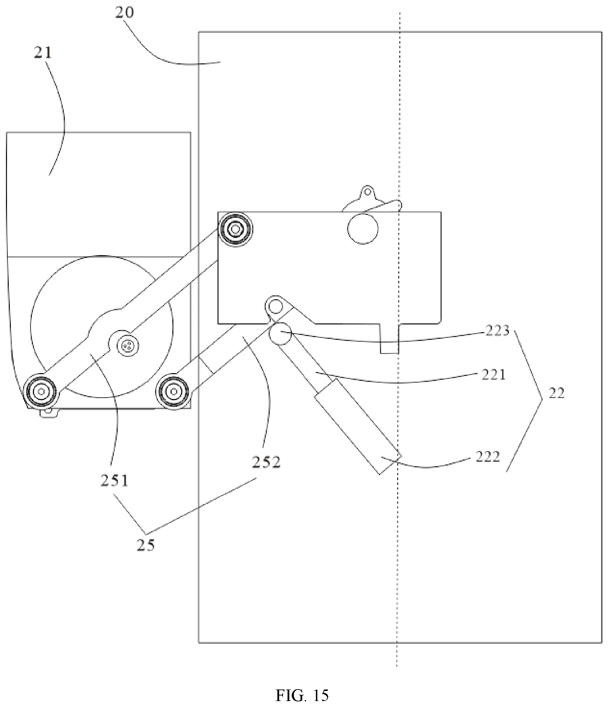

As an example, referring to FIG. 15, the centerline of the body 20 is the dotted line shown in the figure. The retractable fixing portion 222 of the retractable mechanism 22 is connected to a fourth connection position of the body 20, wherein the fourth connection position may be located on a second side of the connecting mechanism, is opposite to the first side, and refers to one side of the connecting mechanism proximate to the centerline of the body 20. The retractable portion 221 may abut against or be connected to a side surface of the connecting rod in the linkage mechanism 25. When the retractable portion 221 extends, the connecting mechanism can move in a direction remote from the centerline of the body 20, thereby driving the operation mechanism 21 to move in a direction remote from the centerline of the body 20, and reach the retracted position. When the retractable portion 221 retracts, the connecting mechanism moves in a direction proximate to the centerline of the body 20, thereby driving the operation mechanism 21 to move in a direction proximate to the centerline of the body 20, and reach the retracted position. At the retracted position, the retractable portion 221 can limit the connecting mechanism in a direction of the second side of the connecting mechanism.

In this implementation, the retractable fixing portion 222 of the retractable mechanism 22 is connected to a fourth connection position of the body 20 and is located on a second side of the linkage mechanism, wherein the second side is one side proximate to the centerline of the body 20, the retractable portion 221 drives the operation mechanism 21 to move relative to the body 20 via extension/retraction, and the fourth connection position is located outside a movement region of the connecting mechanism, to provide a large mounting space for the retractable mechanism 22, thereby preventing the mounting position of the retractable mechanism 22 from interfering with the movement of the connecting mechanism due to a compact overall structure and a small overall mounting space of the retractable operation mechanism.

The retractable operation mechanism of this embodiment comprises an operation mechanism 21, a connecting mechanism, and a retractable mechanism 22. The retractable mechanism 22 comprises a retractable fixing portion 222 and a retractable portion 221, wherein the retractable fixing portion 222 is used for connection to the body 20 of the smart traveling device, the retractable portion 221 is in contact with a connecting mechanism, and the connecting mechanism comprises a first connection position and a second connection position, wherein the first connection position is used for rotatable or slidable connection to the body 20, and is connected to the operation mechanism 21. When the retractable portion drives the connecting mechanism to rotate or slide via extension/retraction, the connecting mechanism drives the operation mechanism to rotate or slide relative to the body, so that the operation mechanism extends out or retracts relative to one side of the body. The retractable operation mechanism of the present disclosure is applied to a smart traveling device, so that when the smart traveling device is in operation, the retractable mechanism 22 drives the connecting mechanism to rotate or slide via extension/retraction, and the connecting mechanism drives the operation mechanism to rotate or slide relative to the body, and so that the operation mechanism 21 entirely or partially extends from the body 20, or the operation mechanism 21 is more proximate to an edge of the body 20, and so that the operation mechanism 21 processes an edge of an operation region without the need to manually process an edge region, thereby reducing labor costs.

In an optional implementation, the connecting mechanism comprises an elastic member 24 and a linkage mechanism 25, wherein the linkage mechanism 25 has one end hinged to the body 20 and the other end connected to the operation mechanism 21, the elastic member 24 is arranged at the hinge point between the linkage mechanism 25 and the body 20, and the retractable portion 221 is in contact with the linkage mechanism 25.

As an example, referring to FIG. 14, the linkage mechanism 25 may comprise a single connecting rod or a plurality of connecting rods. The linkage mechanism 25 has one end (i.e., the first connection position of the connecting mechanism) hinged to the body 20 and the other end connected to the operation mechanism 21 (i.e., the second connection position of the connecting mechanism) in a connection mode of a rotatable connection, e.g., a hinged connection or a pivoted connection, which is not limited in this embodiment. The elastic member 24 may comprise a torsion spring. The elastic member 24 is arranged at the hinge point between the linkage mechanism 25 and the body 20. For example, the torsion spring may be sleeved on a rotating shaft at the hinge point between the linkage mechanism 25 and the body 20. A first pin of the torsion spring may be fixedly connected to the body 20, and a second pin of the torsion spring may be fixedly connected to the linkage mechanism 25. One or a plurality of elastic members 24 may be provided. For example, if the linkage mechanism 25 comprises a first connecting rod 251 and a second connecting rod 252, the elastic member 24 may be arranged at the hinge point between the first connecting rod 251 or the second connecting rod 252 and the body 20, or the elastic member 24 may be arranged at the hinge point between the body 20 and each of the first connecting rod 251 and the second connecting rod 252, which is not limited in this embodiment. The retractable portion 221 is in contact with the linkage mechanism 25. The contact mode between the retractable portion 221 and the linkage mechanism 25 is determined based on a relative position between the retractable portion 221 and the connecting mechanism, and may include abutment or connection. For example, the retractable portion 221 may be located on a first side of the linkage mechanism 25 (i.e., the first side of the connecting mechanism). In this case, the first side is one side in the movement direction of the linkage mechanism 25 under the action of an elastic force, and the retractable portion 221 may abut against a side surface of the connecting rod in the linkage mechanism 25, or the retractable portion 221 may be located on a second side of the linkage mechanism 25 (i.e., the second side of the connecting mechanism). In this case, the second side is one side in an opposite direction to the movement direction of the linkage mechanism 25 under the action of the elastic force, and the retractable portion 221 may be connected to a side surface of the connecting rod in the linkage mechanism 25. Similarly, the retractable portion 221 may also be in contact with the operation mechanism 21, which is not limited in this embodiment.

The elastic member 24 and the retractable mechanism 22 cooperate to achieve the movement process of the connecting mechanism as follows: when the retractable fixing portion 222 of the retractable mechanism 22 is connected to the body 20, for example, at the third connection position, and when the operation mechanism 10 is at the retracted position, the retractable portion 221 extends out to restrict the connecting mechanism, and the elastic member 24 is in a compressed state; and when the retractable mechanism 22 retracts, the connecting mechanism is released, that is, the elastic force exerted by the elastic member 24 is released, so that the connecting mechanism moves under the elastic force exerted by the elastic member 24, and so that the connecting mechanism drives the operation mechanism 21 to reach the released position, during which, the retractable mechanism 22 does not exert a force on the connecting mechanism, but only releases the connecting mechanism. Therefore, the retractable mechanism 22 performs no work on the connecting mechanism. When the operation mechanism 10 reaches the released position, the retractable portion 221 retracts and the elastic member 24 is in a released state. In this case, the connecting mechanism (or the operation mechanism 21) can reciprocate between the released position and the retracted position; and when the retractable mechanism 22 extends, the retractable portion 221 can push the connecting mechanism to reach the retracted position from the body 20, during which, the connecting mechanism moves under a force exerted by the retractable mechanism 22, so that the retractable mechanism 22 performs work on the connecting mechanism. In summary, when the elastic member 24 and the retractable mechanism 22 cooperate to achieve the movement process of the connecting mechanism, the retractable mechanism 22 performs work only during the retraction process of the operation mechanism 21, thus reducing energy consumption of the retractable mechanism 22.

It should be understood that when the retractable fixing portion 222 of the retractable mechanism 22 is connected to the fourth connection position of the body 20, the elastic member 24 and the retractable mechanism 22 cooperate to achieve the movement process of the connecting mechanism, which is the reverse of the above process, and will not be repeated in this embodiment.

In this implementation, the linkage mechanism 25 has one end hinged to the body 20 and the other end connected to the operation mechanism 21, so that the linkage mechanism 25 can drive the operation mechanism 21 to move relative to the body 20. The linkage mechanism 25 can retract under a force exerted by the retractable portion 221, and extend by arranging the elastic member 24 at the hinge point between the linkage mechanism 25 and the body 20. Further, when the connecting mechanism is in operation, i.e., the connecting mechanism (or the operation mechanism 21) can reciprocate between the released position and the retracted position, the operation mechanism 21 may encounter an obstacle (such as a fence, bush, or bamboo grove at an edge of a lawn), and the operation mechanism 21 can drive the linkage mechanism 25 to move in a direction proximate to the centerline of the body 20 under a force exerted by the obstacle. When traveling through an obstacle region, the linkage mechanism 25 drives, under the action of the elastic member 24, the operation mechanism 21 to return to the released position to continue operation, thereby achieving the obstacle avoidance function.

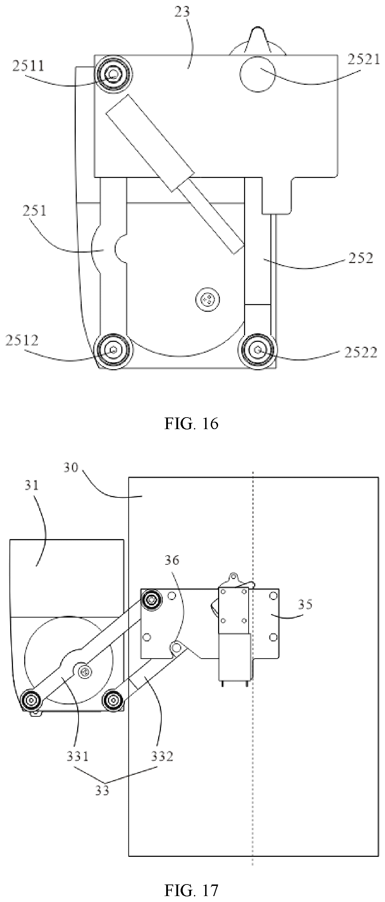

In an optional implementation, referring to FIG. 16, the linkage mechanism 25 comprises a first connecting rod 251 and a second connecting rod 252, wherein the first connecting rod 251 has one end hinged to the body 20 at a first hinge point 2511 and the other end hinged to the operation mechanism 21 at a third hinge point 2512; the second connecting rod 252 has one end hinged to the body 20 at a second hinge point 2521 and the other end hinged to the operation mechanism 21 at a fourth hinge point 2522; a line connecting the first hinge point 2511 and the third hinge point 2512 is parallel to a line connecting the second hinge point 2521 and the fourth hinge point 2522, and a line connecting the first hinge point 2511 and the second hinge point 2521 is parallel to a line connecting the third hinge point 2512 and the fourth hinge point 2522. As an example, the line connecting the first hinge point 2511 and the third hinge point 2512 is aligned with the line connecting the second hinge point 2521 and the fourth hinge point 2522, the line connecting the first hinge point 2511 and the second hinge point 2521 is aligned with the line connecting the third hinge point 2512 and the fourth hinge point 2522, and lines connecting the first hinge point 2511, the second hinge point 2521, the third hinge point 2512, and the fourth hinge point 2522 form a parallelogram.

In this implementation, the first connecting rod 251 is arranged to have one end hinged to the body 20 at the first hinge point 2511 and the other end hinged to the operation mechanism 21 at the third hinge point 2512; the second connecting rod 252 is arranged to have one end hinged to the body 20 at the second hinge point 2521 and the other end hinged to the operation mechanism 21 at the fourth hinge point 2522; the line connecting the first hinge point 2511 and the third hinge point 2512 is parallel to the line connecting the second hinge point 2521 and the fourth hinge point 2522, and the line connecting the first hinge point 2511 and the second hinge point 2521 is parallel to the line connecting the third hinge point 2512 and the fourth hinge point 2522. The direction of the operation mechanism 21 connected to the linkage mechanism 25 is controlled. When the smart traveling device is, for example, a robot lawnmower, the operation mechanism 21 is provided with a grass inlet. When the line connecting the first hinge point 2511 and the second hinge point 2521 is arranged to be perpendicular to the forward direction of the body 20 of the robot lawnmower, the connecting line between the third hinge point 2512 and the fourth hinge point 2522 is parallel to the grass inlet of the operation mechanism 21, and along the forward direction of the body 20, the operation mechanism 21 extends from one side of the body 20 to operate, thereby ensuring that the direction of the grass inlet of the operation mechanism 21 is aligned with the forward direction of the body 20, and achieving better lawnmowing effect.

In an optional implementation, the retractable fixing portion 222 comprises a retractable power apparatus fixedly connected to the body 20; and the retractable portion 221 has one end connected to the retractable power apparatus and the other end in contact with the connecting mechanism. As an example, referring to FIG. 15, the retractable fixing portion 222 may comprise a retractable power apparatus, such as a motor, fixedly connected to the body 20 in a connection mode of, e.g., a bolted connection. The retractable portion 221 has one end connected to the retractable power apparatus and the other end in contact with the connecting mechanism. The retractable portion 221 is driven by the retractable power apparatus to switch between a first state and a second state. In this implementation, the retractable power apparatus drives the retractable portion 221 to extend or retract to release the elastic force exerted by the connecting mechanism, to drive the operation mechanism 21 to reach the released position, or drive the connecting mechanism to retract, and then drive the operation mechanism 21 to reach the retracted position. The retractable power has a simple structure, and performs work only during the retraction process of the connecting mechanism, thereby reducing energy consumption of the retractable power apparatus.

In an optional implementation, one end of the retractable portion 221 is connected to a rolling member 223, a shaft axis of the rolling member 223 is connected to the retractable portion 221, and the rolling member 223 is in contact with the connecting mechanism. As an example, referring to FIG. 15, the rolling member 223 is arranged at one end of the retractable portion 221 proximate to the connecting mechanism in a connection mode of, e.g., a detachable connection, and the rolling member 223 may be a roller. In this implementation, when the retractable fixing portion 222 of the retractable mechanism 22 is connected to the first connection position of the body 20, the retractable portion 221 pushes the connecting mechanism during the extension process of the retractable portion 221, to counteract the elastic force exerted by the connecting mechanism, until reaching the retracted position. In this process, the retractable portion 221 slides relative to the connecting mechanism (or the linkage mechanism 25) in a length direction of the connecting mechanism (or the linkage mechanism 25), thus resulting in significant friction between each other. The rolling member 223 is connected to the retractable portion 221, and the rolling member 223 abuts against the connecting mechanism (or the linkage mechanism 25), thereby converting the sliding friction between each other into rolling friction to reduce friction, and improving the service life of the components.

In an optional implementation, both the extension and retraction of the retractable portion 221 are linear movements. As an example, the retractable portion 221 may be a retractable rod, which performs linear extension/retraction movement relative to the retractable fixing portion 222, so that the connecting mechanism extends and retracts. Moreover, the overall structure of the retractable mechanism 22 is simple, and the retractable portion 221 requires a small activity space for linear movement, thus facilitating installation.

In an optional implementation, the retractable operation mechanism further comprises a fixing base 23, wherein the fixing base 23 is used for fixed connection to the body 20. The first end of the connecting mechanism and the retractable fixing portion 222 of the retractable mechanism 22 are each fixedly connected to the fixing base 23. As an example, referring to FIG. 14, the fixing base 23 may be fixedly connected to the body 20 in a connection mode of, e.g., a bolted connection. In this implementation, the fixing base 23 may be used to replace the fixing function of the body 20, and the fixing base 23 serves as an independent fixing apparatus. The connection relationship of the connecting mechanism and/or the retractable mechanism 22 with the body 20 may be replaced with the connection relationship with the fixing base 23, so that the overall structure of the retractable operation mechanism is more compact, and the whole retractable operation mechanism can be disassembled and assembled by disassembling and assembling the fixing base 23, thus facilitating manipulation.

An embodiment of the present disclosure further provides a smart traveling device, comprising a body 20 and the retractable operation mechanism according to any one of the above embodiments, wherein the retractable mechanism 22 in the retractable operation mechanism is fixedly connected to the body 20, and the first connection position of the connecting mechanism is rotatably or slidably connected to the body 20.

As an example, the smart traveling device may be, e.g., a robot lawnmower, a robot cleaner, a robot sweeper, or a robot snow remover, which is not limited in this embodiment. The retractable operation mechanism may be fixedly connected to a bottom surface of the body 20, and may be fixedly connected to the body 20 via the retractable mechanism 22 in the retractable operation mechanism, and the first connection position of the connecting mechanism is rotatably or slidably connected to the body 20 or fixedly connected to the body 20 via the fixing base 23 in the retractable operation mechanism, thereby connecting the retractable operation mechanism to the body 20.

The smart traveling device in this embodiment comprises a body 20 and the retractable operation mechanism according to any one of the above embodiments, wherein the retractable mechanism 22 in the retractable operation mechanism is fixedly connected to the body 20, and the first connection position of the connecting mechanism is rotatably or slidably connected to the body 20, so that when the smart traveling device is in operation, the retractable mechanism 22 drives the connecting mechanism to rotate or slide via extension/retraction, and the connecting mechanism drives the operation mechanism to rotate or slide relative to the body, and so that the operation mechanism 21 entirely or partially extends from the body 20, or the operation mechanism 21 is more proximate to an edge of the body 20, and so that the operation mechanism 21 processes an edge of an operation region without the need to manually process an edge region, thereby reducing labor costs.

The present disclosure further provides a retractable operation mechanism and a smart traveling device. Prior to introduction of the retractable operation mechanism and the smart traveling device in the embodiments of the present disclosure, an application scenario of the retractable operation mechanism and the smart traveling device will be briefly described to facilitate understanding.

The retractable operation mechanism can be applied to the smart traveling device to perform auxiliary operation. The smart traveling device may be, e.g., a robot lawnmower, a robot cleaner, a robot sweeper, or a robot snow remover, and its application scenario in an embodiment of the present disclosure is introduced using a robot lawnmower as an example. A robot lawnmower is a smart traveling apparatus convenient for a user to mow a lawn and vegetation. During a lawnmowing operation, the robot lawnmower needs to operate within a pre-set operation boundary. However, due to less accurate positioning of the robot lawnmower, whether the established operation boundary is a physical boundary or a virtual boundary, a certain distance is always present between the operation boundary and an actual boundary of the lawn to prevent the robot lawnmower from crossing over the operation boundary during lawnmowing. As a result, the robot lawnmower will miss mowing grass in an edge region of the lawn during the lawnmowing operation, and the edge region of the lawn needs to be processed manually, thereby increasing labor costs. In view of this, the present disclosure presents a retractable operation mechanism and a smart traveling device, so as to solve various problems existing in the above prior art.

The specific embodiments of the present disclosure will be described in detail below with reference to the drawings.

Referring to FIGS. 17 to 23, the retractable operation mechanism of this embodiment may be applied to a smart traveling device, comprising an operation mechanism 31, a connecting mechanism, an elastic member 32, and a rotating mechanism 34.

The connecting mechanism comprises a first connection position for rotatable connection to a body 30 of the smart traveling device and a second connection position connected to the operation mechanism 31. For example, the first connection position and the second connection position may be a first end and a second end that are opposite to each other on the connecting mechanism. The first connection position is rotatably connected to the body 30 in a connection mode of, e.g., a hinged connection. The second connection position may be connected to the operation mechanism 31 in a connection mode of a rotatable connection, e.g., a hinged connection.

The rotating mechanism 34 is arranged on the body 30 of the smart traveling device, and the rotating mechanism 34 abuts against the connecting mechanism.

As an example, the rotating mechanism 34 may be connected to a bottom of the body 30. The rotating mechanism 34 has one end rotatably connected to the body 30 and the other end abutting against the connecting mechanism, or the rotating mechanism 34 abuts against the operation mechanism 31, which is not limited in this embodiment. The rotating mechanism 34 may abut against a side surface of the connecting mechanism, so that the rotating mechanism 34 can drive or limit the movement of the connecting mechanism via rotation.

The elastic member 32 has one end in contact with the body and the other end in contact with the connecting mechanism, the rotating mechanism 34 is configured to push the connecting mechanism to drive the operation mechanism 31 to approach a centerline of the body 30, so that the elastic member 32 is compressed; and the elastic member 32 is configured to push the connecting mechanism to drive the operation mechanism 31 to depart from the centerline of the body 30.

As an example, the elastic member 32 may comprise a torsion spring, and the elastic member 32 is arranged at the rotatable connection point between the connecting mechanism and the body 30. The elastic member 32 has one end in contact with the body and the other end in contact with the connecting mechanism. Here, the contact may be connection or abutment. For example, the torsion spring may be sleeved on a rotating shaft connecting the connecting mechanism to the body 30. A first pin of the torsion spring may be fixedly connected to or abut against the body 30, and a second pin of the torsion spring may be fixedly connected to or abut against the connecting mechanism. The centerline of the body 30 is the dotted line shown in FIG. 17. The centerline of the body 30 may refer to an axis of the body 30 parallel to a forward direction of the body 30.

During the retraction process, the rotating mechanism 34 can push the connecting mechanism to move to drive the operation mechanism 31 to approach the centerline of the body 30, during which the elastic member 32 is compressed. During the extension process, the elastic force exerted by the elastic member 32 is released to push the connecting mechanism to move, so as to drive the operation mechanism 31 to depart from the centerline of the body 30.

It should be understood that during the extension process, the connecting mechanism moves under the action of the elastic force exerted by the elastic member 32, and drives the operation mechanism 31 to depart from the centerline of the body 30 to reach the released position. The released position may refer to a position where the operation mechanism 31 is at least partially located outside the projection of the body 30 or the operation mechanism 31 does not extend out and is more proximate to an edge of the body 30, which is not limited in this embodiment. During this extension process, the rotating mechanism 34 does not exert a force on the connecting mechanism, but only releases the connecting mechanism. The connecting mechanism moves under an elastic force exerted by the elastic member 32, so that the rotating mechanism 34 performs no work on the connecting mechanism. During the retraction process, the rotating mechanism 34 abuts against the connecting mechanism. The connecting mechanism is pushed by the rotating mechanism 34 to move and drive the operation mechanism 31 to approach the centerline of the body 30, to reach the retracted position. The retracted position refers to a position where the operation mechanism 31 is at least partially located in the projection of the body 30 or is more proximate to the centerline of the body 30, which is not limited in this embodiment. During this retraction process, the connecting mechanism moves under a force exerted by the rotating mechanism 34, so that the rotating mechanism 34 performs work on the connecting mechanism. In summary, the rotating mechanism 34 performs work only during the retraction of the operation mechanism 31, and performs no work during the extension process, thereby reducing energy consumption of the rotating mechanism 34. The projection of the body 30 refers to a projection of the body 30 onto the ground plane directly beneath the body.

The retractable operation mechanism in this embodiment may be applied to a smart traveling device, comprising an operation mechanism 31, a connecting mechanism, an elastic member 32, and a rotating mechanism 34; wherein the connecting mechanism comprises a first connection position for rotatable connection to a body 30 of the smart traveling device and a second connection position connected to the operation mechanism 31; the rotating mechanism 34 is arranged on the body 30 of the smart traveling device, and the rotating mechanism 34 abuts against the connecting mechanism; the elastic member 32 has one end in contact with the body and the other end in contact with the connecting mechanism; the rotating mechanism 34 is configured to push the connecting mechanism to drive the operation mechanism 31 to approach a centerline of the body 30, so that the elastic member 32 is compressed; and the elastic member 32 is configured to push the connecting mechanism to drive the operation mechanism 31 to depart from the centerline of the body 30. The retractable operation mechanism of this embodiment is applied to a smart traveling device, so that when the smart traveling device is in operation, the elastic member 32 pushes the connecting mechanism to drive the operation mechanism 31 to depart from the centerline of the body, so that the operation mechanism 31 entirely or partially extends from one side of the body 30 of the smart traveling device, or the operation mechanism 31 is more proximate to an edge of the body 30, and so that the operation mechanism 31 is more proximate to an edge of an operation region 1, thereby processing an edge region of the operation region without the need to manually process the edge region, and reducing labor costs.

In an optional implementation, the rotating mechanism 34 comprises a rotating power apparatus 342, a transmission shaft 343, and a rotation portion 341, wherein the rotating power apparatus 342 is fixedly connected to the body 30, the transmission shaft 343 has one end connected to the rotating power apparatus 342 and the other end connected to the rotation portion 341, the rotation portion 341 abuts against the connecting mechanism, and the rotating power apparatus 342 drives the transmission shaft 343 to rotate, to drive the rotation portion 341 to rotate between a first position and a second position.

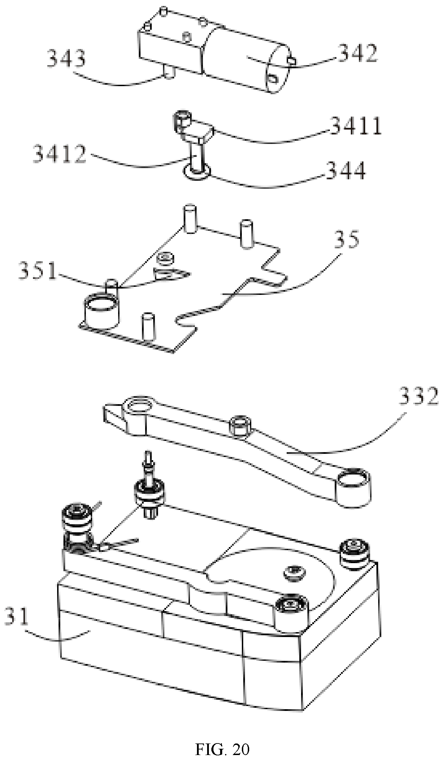

As an example, referring to FIGS. 20 to 22, the rotating power apparatus 342 may be, e.g., a motor, and the rotating power apparatus 342 is fixedly connected to the body 30 in a connection mode of, e.g., a bolted connection. The transmission shaft 343 has one end connected to the rotating power apparatus 342 and the other end connected to the rotation portion 341, the rotation portion 341 abuts against the connecting mechanism, the rotating power apparatus 342 drives the transmission shaft 343 to rotate, and the transmission shaft 343 drives the rotation portion 341 to rotate between the first position and the second position.

A kinematic relationship between the rotation portion 341 and the operation mechanism 31 is as follows: During the rotation of the rotation portion 341 from the second position to the first position, the rotation portion 341 exerts a force on the connecting mechanism, and counteracts the elastic force exerted by the elastic member 32, thus driving the connecting mechanism to move following the rotation portion 341. Simultaneously, the connecting mechanism drives the operation mechanism 31 to move, until the rotation portion 341 stops rotation at the first position, so that the operation mechanism 31 reaches the retracted position corresponding to the first position. In this case, the operation mechanism 31 is partially or entirely located within the projection of the body 30, or at a position more proximate to the centerline of the body 30, which is not limited in this embodiment. Alternatively, during the rotation of the rotation portion 341 from the first position to the second position, the elastic force exerted by the elastic member 32 can be released, so that the connecting mechanism can move under the action of the elastic force. Simultaneously, the connecting mechanism drives the operation mechanism 31 to move until the rotation portion 341 stops rotation at the second position, so that the operation mechanism 31 reaches the released position corresponding to the second position. In this case, the operation mechanism 31 is partially or entirely located outside the projection of the body 30 or at a position more proximate to the edge of the body 30, which is not limited in this embodiment.

It should be noted that the rotation portion 341 can restrict the connecting mechanism at the first position and the second position. However, at the released position of the operation mechanism 31, the connecting mechanism may be restricted by the rotation portion 341, or the connecting mechanism or the operation mechanism 31 may be restricted by an additionally provided position-limiting structure, which is not limited in this embodiment. In addition, the connecting mechanism or the operation mechanism 31 is restricted to the released position merely on the movement direction of the connecting mechanism or the operation mechanism 31 from the retracted position to the released position.

In this implementation, the rotating power apparatus 342 drives the transmission shaft 343 to rotate, so that the transmission shaft 343 drives the rotation portion 341 to rotate between the first position and the second position, thereby releasing the operation mechanism 31 to a released position, or driving the operation mechanism 31 to return to the retracted position. During the extension process, the rotation portion 341 does not exert a force on the connecting mechanism, but only releases the connecting mechanism, so that the rotating power apparatus 342 performs no work on the connecting mechanism. During the retraction process, the connecting mechanism moves under a force exerted by the rotation portion 341, so that the rotating power apparatus 342 does not work on the connecting mechanism, thereby providing a simple structure.

In an optional implementation, the rotation portion 341 comprises a connecting portion 3411 and a push portion 3412, wherein the connecting portion 3411 has one end fixedly connected to the transmission shaft 343 and the other end fixedly connected to the push portion 3412, the push portion 3412 abuts against a first side of the connecting mechanism, wherein the first side is one side remote from the centerline of the body 30, and the push portion 3412 rotates around an axis of the transmission shaft 343.

As an example, referring to FIGS. 17 and 20, the centerline of the body 30 is the dotted line shown in FIG. 17. The centerline of the body 30 may refer to an axis of the body 30 parallel to the forward direction of the body 30. The connecting portion 3411 has one end fixedly connected to the transmission shaft 343 and the other end fixedly connected to the push portion 3412 in a connection mode of, e.g., a welded connection, or in addition, the connecting portion 3411 and the push portion 3412 may be integrally formed, which is not limited in this embodiment. The push portion 3412 has one end fixedly connected to the connecting portion 3411 and the other end abutting against the first side of the connecting mechanism, wherein the first side refers to one side of the connecting mechanism remote from the centerline of the body 30. The push portion 3412 rotates around the axis of the transmission shaft 343 with a preset radius, wherein the preset radius is a distance between the push portion 3412 and the axis of the transmission shaft 343, and the preset radius may be associated with size of the connecting portion 3411 and an angle between the connecting portion 3411 and each of the transmission shaft 343 and the push portion 3412, for example, the preset radius may be 10-80 mm, which may specifically be flexibly set by those skilled in the art based on actual requirements, and is not limited in this embodiment.

In this implementation, the connecting portion 3411 has one end fixedly connected to the transmission shaft 343 and the other end fixedly connected to the push portion 3412 to form the rotation portion 341. The push portion 3412 is connected to the transmission shaft 343 via the connecting portion 3411, to prevent the push portion 3412 from being coaxial with the transmission shaft 343, so that the push portion 3412 rotates around the axis of the transmission shaft 343, so that the transmission shaft 343 drives the connecting portion 3411 to rotate via its rotation, and then drives the push portion 3412 to rotate, and so that the push portion 3412 can drive the operation mechanism 31 to retract to the retracted position, thus providing a simple structure and reducing costs.

In an optional implementation, the connecting portion 3411 is perpendicular to the transmission shaft 343, and the push portion 3412 is parallel to the transmission shaft 343. As an example, referring to FIG. 20, the connecting portion 3411 may be a connecting plate. The connecting portion 3411 is perpendicular to the axis of the transmission shaft 343 and perpendicular to the push portion 3412, that is, the push portion 3412 is parallel to the transmission shaft 343. Moreover, the push portion 3412 and the transmission shaft 343 are located at both ends of the connecting portion 3411 respectively, and are connected to two opposite surfaces of the connecting portion 3411 respectively. When the push portion 3412 rotates around the axis of the transmission shaft 343 with a preset radius, wherein the preset radius is the length of the connecting plate, that is, a spacing between the push portion 3412 and the transmission shaft 343. In this implementation, the connecting portion 3411 is arranged to be perpendicular to the transmission shaft 343, and the push rod is arranged to be parallel to the transmission shaft 343, so that the push portion 3412 rotates around the axis of the transmission shaft 343, to drive the operation mechanism 31 to retract from outside of the body 30, thus providing a simple structure.

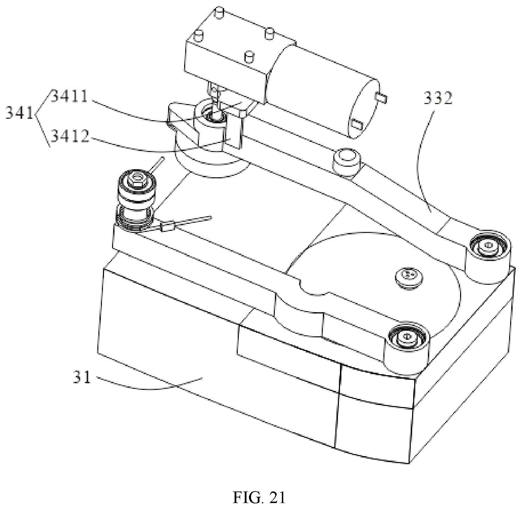

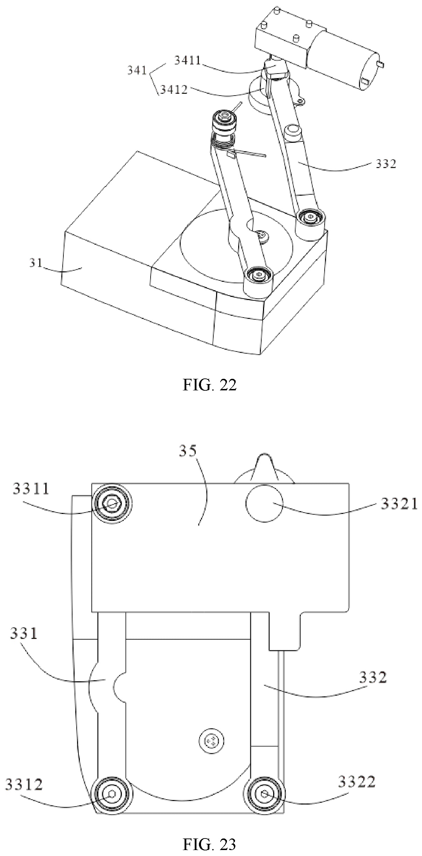

In an optional implementation, referring to FIGS. 21 and 22, the first connection position of the connecting mechanism is rotatably connected to the body 30 via the rotating shaft, and the axis of the transmission shaft 343 is aligned with the axis of the rotating shaft. That is, the transmission shaft 343 is coaxial with, but is not connected to, the rotating shaft. If the first connection position of the connecting mechanism is connected to the body 30 via a plurality of rotating shafts, for example, if the connecting mechanism is a two-link system connected to the body 30 via two rotating shafts, the transmission shaft 343 may be coaxial with any one of the rotating shafts. In this implementation, the rotating shaft rotatably connecting the first connection position of the connecting mechanism to the body 30 is arranged to be aligned with the axis of the transmission shaft 343 in the rotating power apparatus 342, the transmission shaft 343 drives the rotation portion 341 to rotate. When the rotation portion 341 drives the connecting mechanism to rotate, relative movement does not occur between the rotation portion 341 and the connecting mechanism in a length direction of the connecting mechanism, thereby resulting in less friction between each other and extending the service life of the components.

In another optional implementation, a rolling member 344 is connected to the rotation portion 341, a shaft axis of the rolling member 344 is connected to the rotation portion 341, and an outer circumferential surface of the rolling member 344 abuts against the connecting mechanism. As an example, the rolling member 344 is arranged at one end of the rotation portion 341 proximate to the connecting mechanism in a connection mode of, e.g., a detachable connection. The rolling member 344 rotates relative to the rotation portion 341, and an axis of the relative rotation may be aligned with the axis of the transmission shaft 343. For example, the rolling member 344 may be a roller or a ball.

In this implementation, the rotating mechanism 34 may be located at any position between the first connection position and the second connection position of the connecting mechanism. That is, the rotating shaft connecting the connecting mechanism to the body 30 is not aligned with the axis of the transmission shaft 343 in the rotating power apparatus 342. When the rotating mechanism 34 is arranged at any position without restriction, the rotating mechanism 34 may be flexibly arranged based on mounting space. However, when the transmission shaft 343 drives the rotation portion 341 to rotate, and then drives the connecting mechanism to rotate, relative sliding occurs between the rotation portion 341 and the connecting mechanism in the length direction of the connecting mechanism, thereby resulting in significant friction. Therefore, the rolling member 344 is connected to the rotation portion 341, and the outer circumferential surface of the rolling member 344 abuts against the connecting mechanism, to convert the sliding friction between each other into rolling friction, thereby reducing friction, and extending the service life of the components.

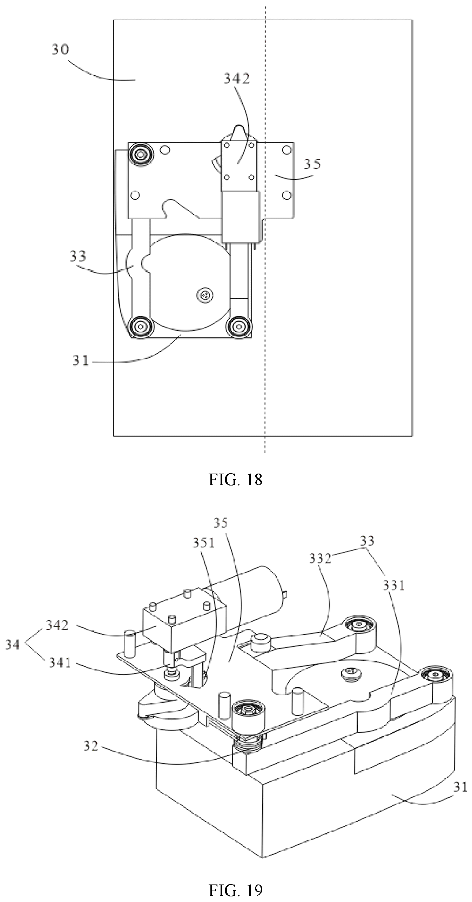

In an optional implementation, the retractable operation mechanism further comprises a fixing base 35, wherein the fixing base 35 is used for fixed connection to the body 30, and both the connecting mechanism and the rotating power apparatus 342 are arranged on the fixing base 35. As an example, referring to FIG. 19, the fixing base 35 may be fixedly connected to the body 30 in a connection mode of, e.g., a bolted connection. The connecting mechanism is rotatably connected to the fixing base 35 by, for example, a hinged connection. The rotating power apparatus 342 is fixedly connected to the fixing base 35 by, for example, a bolted connection or a welded connection. In this implementation, the fixing base 35 is used to replace the fixing function of the body 30, and the fixing base 35 serves as an independent fixing apparatus. The connection relationship of the connecting mechanism and the rotating power apparatus 342 with the body 30 may be replaced with the connection relationship with the fixing base 35, so that the overall structure of the retractable operation mechanism is more compact, and the whole retractable operation mechanism can be disassembled and assembled by disassembling and assembling the fixing base 35, thus facilitating manipulation.

In an optional implementation, the fixing base 35 is provided with a first clearance hole 351, the push portion 3412 abuts against the connecting mechanism through the first clearance hole 351, and the push portion 3412 rotates between the first position and the second position via the first clearance hole 351. As an example, referring to FIGS. 19 and 20, the fixing base 35 is fixedly connected to the body 30, the rotating mechanism 34 is located between the fixing base 35 and the body 30, that is, above the fixing base 35, and the connecting mechanism is located below the fixing base 35. Therefore, the fixing base 35 is provided with the first clearance hole 351, the push portion 3412 of the rotation portion 341 can abut against the connecting mechanism through the first clearance hole 351, and the push portion 3412 rotates between the first position and the second position by rotation in the first clearance hole 351. The rotation space of the rotation portion 341 can be restricted based on size of the first clearance hole 351, and the size of the first clearance hole 351 can be determined based on the first position and the second position, thereby restricting the rotation portion 341 at the first position and the second position using the first clearance hole 351.

In an optional implementation, the retractable operation mechanism further comprises a current detection apparatus connected to the rotating power apparatus 342. When the rotation portion 341 reaches the first position or the second position, the first clearance hole 351 restricts the rotation of the rotation portion 341. When detecting current increase of the rotating power apparatus 342, the current detection apparatus sends an electrical position signal to the rotating power apparatus 342, wherein the electrical position signal is used to control the rotating power apparatus 342 to stop driving.

As an example, the current detection apparatus may be disposed separately to detect the current of the rotating power apparatus 342, or may be disposed on a control circuit board of the smart traveling device in the body 30, which is not limited in this embodiment. When the rotation portion 341 reaches the first position or the second position, the first clearance hole 351 can restrict the movement of the rotation portion 341, which causes sudden current increase in the rotating power apparatus 342. When detecting the current increase of the rotating power apparatus 342, the current detection apparatus generates an electrical position signal and sends it to the rotating power apparatus 342. After receiving the electrical position signal, the rotating power apparatus 342 stops driving, so that the connecting mechanism or the operation mechanism 31 stops moving when reaching the retracted position and the released position.

In this implementation, the first clearance hole 351 restricts the rotation of the rotation portion 341. When detecting the current increase of the rotating power apparatus 342, the current detection apparatus sends the electrical position signal to the rotating power apparatus 342, to control the rotating power apparatus 342 to stop driving, thereby avoiding component damage because the rotating power apparatus 342 remains driving after the first clearance hole 351 restricts the movement of the rotation portion 341; or energy waste because the rotating power apparatus 342 remains driving after the operation mechanism 31 has reached the retracted position or the released position.

In an optional implementation, a first position-limiting portion 36 is disposed on the body 30 or the fixing base 35. When the rotation portion 341 is at the second position, the first position-limiting portion 36 restricts the movement of the connecting mechanism or the operation mechanism 31 in a first direction at the released position, and the operation mechanism 31 can reciprocate between the retracted position and the released position, wherein the retracted position refers to a position of the operation mechanism 31 when the rotation portion 341 is at the first position, the released position refers to a position of the operation mechanism 31 when the rotation portion 341 is at the second position, and the first direction refers to a movement direction from the retracted position to the released position.

Referring to FIG. 17, it should be understood that when the rotation portion 341 is at the second position, the operation mechanism 31 is in operation. In this case, the first position-limiting portion 36 restricts the connecting mechanism or the operation mechanism 31 at the released position, and the first position-limiting portion 36 only restricts the movement direction of the connecting mechanism or the operation mechanism 31 from the retracted position to the released position. Therefore, the operation mechanism 31 reciprocates between the retracted position and the released position with an external force and under the action of the elastic member 32. For example, when the operation mechanism 31 encounters an obstacle, such as a fence, a bush, or a bamboo grove at an edge of a lawn, the operation mechanism 31 can move in a direction proximate to the body 30 under a force exerted by the obstacle. When traveling through an obstacle region, the operation mechanism 31 returns to the released position under the action of the elastic force exerted by the elastic member 32, thereby achieving the obstacle avoidance function.

In an optional implementation, the rotation portion 341 abuts against the connecting mechanism at the first position, and the rotation portion 341 is out of touch with the connecting mechanism at the second position. Specifically, when the rotation portion 341 abuts against the connecting mechanism at the first position, the connecting mechanism is restricted when the operation mechanism 31 is at the retracted position. When the operation mechanism 31 moves from the retracted position to the released position under the elastic force exerted by the elastic member 20, or moves to the released position after obstacle avoidance, the rotation portion 341 is out of touch with the connecting mechanism at the second position, and the above first position-limiting portion 36 restricts the connecting mechanism or the operation mechanism 31, thereby preventing the connecting mechanism at the released position from collision with the rotation portion 341, and avoiding component damage because the connecting mechanism impacts against the rotation portion 341.

In an optional implementation, the connecting mechanism comprises a linkage mechanism 33, wherein the linkage mechanism 33 has one end hinged to the body 30 and the other end connected to the operation mechanism 31, the elastic member 32 is arranged at the hinge point between the linkage mechanism 33 and the body 30, and the rotation portion 341 abuts against the linkage mechanism 33.

As an example, referring to FIG. 19, the linkage mechanism 33 may comprise a single connecting rod or a plurality of connecting rods. The linkage mechanism 33 has one end (i.e., the first connection position of the connecting mechanism) hinged to the body 30 and the other end (i.e., the second connection position of the connecting mechanism) connected to the operation mechanism 31 in a connection mode of a rotatable connection, e.g., a hinged connection or a pivoted connection, which is not limited in this embodiment. The elastic member 32 may be arranged at the hinge point between the linkage mechanism 33 and the body 30. For example, the torsion spring may be sleeved on a rotating shaft at the hinge point between the linkage mechanism 33 and the body 30. A first pin of the torsion spring may be fixedly connected to the body 30, and a second pin of the torsion spring may be fixedly connected to the linkage mechanism 33. One or a plurality of elastic members 32 may be provided. For example, if the linkage mechanism 33 comprises a first connecting rod 331 and a second connecting rod 332, the elastic member 32 may be arranged at the hinge point between the first connecting rod 331 or the second connecting rod 332 and the body 30, or the elastic member 32 may be arranged at the hinge point between the body 30 and each of the first connecting rod 331 and the second connecting rod 332, which is not limited in this embodiment. The rotation portion 341 abuts against the linkage mechanism 33. For example, the rotation portion 341 at the first position and the second position may abut against a side surface of the connecting rod in the linkage mechanism 33, and may restrict the movement of the linkage mechanism 33 at the first position and the second position, thereby restricting the released position and the retracted position of the operation mechanism 31. Or, the rotation portion 341 may abut against the operation mechanism 31, which is not limited in this embodiment.

In this implementation, the linkage mechanism 33 has one end hinged to the body 30 and the other end connected to the operation mechanism 31, so that the linkage mechanism 33 can drive the operation mechanism 31 to move relative to the body 30. The linkage mechanism 33 can retract or be more proximate to the centerline of the body under a force exerted by the rotation portion 341, and extend by arranging the elastic member 32 at the hinge point between the linkage mechanism 33 and the body 30, so that the operation mechanism 31 extends from one side of the body of the smart traveling device or is more proximate to the edge of the body, and retracts or is more proximate to the centerline of the body.

In an optional implementation, referring to FIG. 23, the linkage mechanism 33 comprises a first connecting rod 331 and a second connecting rod 332, wherein the first connecting rod 331 has one end hinged to the body 30 at a first hinge point 3311 and the other end hinged to the operation mechanism 31 at a third hinge point 3312; the second connecting rod 332 has one end hinged to the body 30 at a second hinge point 3321 and the other end hinged to the operation mechanism 31 at a fourth hinge point 3322; a line connecting the first hinge point 3311 and the third hinge point 3312 is parallel to a line connecting the second hinge point 3321 and the fourth hinge point 3322, a line connecting the first hinge point 3311 and the second hinge point 3321 is parallel to a line connecting the third hinge point 3312 and the fourth hinge point 3322, the rotation portion 341 abuts against a first side of the first connecting rod 331 or the second connecting rod 332, and the first side is one side remote from the centerline of the body 30.

As an example, the line connecting the first hinge point 3311 and the third hinge point 3312 is aligned with the line connecting the second hinge point 3321 and the fourth hinge point 3322, the line connecting the first hinge point 3311 and the second hinge point 3321 is aligned with the line connecting the third hinge point 3312 and the fourth hinge point 3322, and lines connecting the first hinge point 3311, the second hinge point 3321, the third hinge point 3312, and the fourth hinge point 3322 form a parallelogram. The rotation portion 341 may abut against the first side of the first connecting rod 331, for example, the rotating mechanism 34 is arranged at the first hinge point 3311; or the rotation portion 341 may abut against the first side of the second connecting rod 332, for example, the rotating mechanism 34 is arranged at the second hinge point 3321; which is not limited in this embodiment, wherein the first side is one side remote from the centerline of the body 30.

In this implementation, the first connecting rod 331 is arranged to have one end hinged to the body 30 at the first hinge point 3311 and the other end hinged to the operation mechanism 31 at the third hinge point 3312; the second connecting rod 332 is arranged to have one end hinged to the body 30 at the second hinge point 3321 and the other end hinged to the operation mechanism 31 at the fourth hinge point 3322; the line connecting the first hinge point 3311 and the third hinge point 3312 is parallel to the line connecting the second hinge point 3321 and the fourth hinge point 3322, and the line connecting the first hinge point 3311 and the second hinge point 3321 is parallel to the line connecting the third hinge point 3312 and the fourth hinge point 3322, to control the direction of the operation mechanism 31 connected to the linkage mechanism 33. When the smart traveling device is, for example, a robot lawnmower, the operation mechanism 31 may be provided with a grass inlet. The line connecting the first hinge point 3311 and the second hinge point 3321 is perpendicular to the forward direction of the body 30 of the robot lawnmower, the line connecting the third hinge point 3312 and the fourth hinge point 3322 is parallel to the grass inlet of the operation mechanism 31, and the operation mechanism 31 extends from one side of the body 30 or is more proximate to an edge of the body for operation, thereby ensuring that the direction of the grass inlet of the operation mechanism 31 is aligned with the forward direction of the body 30, and achieving better lawnmowing effect.

An embodiment of the present disclosure further provides a smart traveling device, comprising a body 30 and the retractable operation mechanism according to any one of the above embodiments, wherein the rotating mechanism 34 in the retractable operation mechanism is fixedly connected to the body 30, and the first connection position of the connecting mechanism is rotatably connected to the body 30.

As an example, the smart traveling device may be, e.g., a robot lawnmower, a robot cleaner, a robot sweeper, or a robot snow remover, which is not limited in this embodiment. The retractable operation mechanism may be connected to a lower surface of the body 30, the rotating mechanism 34 in the retractable operation mechanism is fixedly connected to the body 30, and the first connection position of the connecting mechanism is rotatably connected to the body 30 or is fixedly connected to the body 30 via the fixing base 35 in the retractable operation mechanism, thereby connecting the retractable operation mechanism to the body 30.

The smart traveling device of this embodiment comprises a body 30 and the retractable operation mechanism according to the above embodiments, wherein the rotating mechanism 34 in the retractable operation mechanism is fixedly connected to the body 30, and the first connection position of the connecting mechanism is rotatably connected to the body 30. When the smart traveling device is in operation, the elastic member 32 pushes the connecting mechanism to drive the operation mechanism 31 to depart from the centerline of the body, so that the operation mechanism 31 entirely or partially extends from one side of the body 30 of the smart traveling device, or the operation mechanism 31 is more proximate to the edge of the body 30, and so that the operation mechanism 31 is more proximate to an edge of an operation region, thereby processing an edge region of the operation region without the need to manually process the edge region, and reducing labor costs.

The present disclosure further provides an operation execution mechanism for connection to a body 40 of the smart traveling device. When encountering an obstacle, the operation execution mechanism can move toward the body 40 to achieve the obstacle avoidance effect, thereby eliminating the need to reserve a safe distance between the operation mechanism of the operation execution mechanism and a boundary of a planned region. The operation execution mechanism can perform a corresponding action on a target object at an edge of the planned region, that is, leaving no blind zone, thereby eliminating the need to manually perform the corresponding action on a target object in a blind zone, and reducing manual burden.

The present disclosure further provides a smart traveling device, comprising a body and the above operation execution mechanism mounted on the body. Moreover, the operation execution mechanism comprises an operation mechanism 41 and a connecting mechanism 42, wherein the connecting mechanism 42 has two opposing ends, with one of the ends pivotally connected to the body 40 and the other end connected to the operation mechanism 41; and the connecting mechanism 42 comprises a retracted position and a released position on its pivot path relative to the body 40. The smart traveling device possesses the advantages of the above operation mechanism.

To better illustrate the structure and advantages of the operation mechanism, the description below is provided when the operation mechanism is mounted on the smart traveling device.

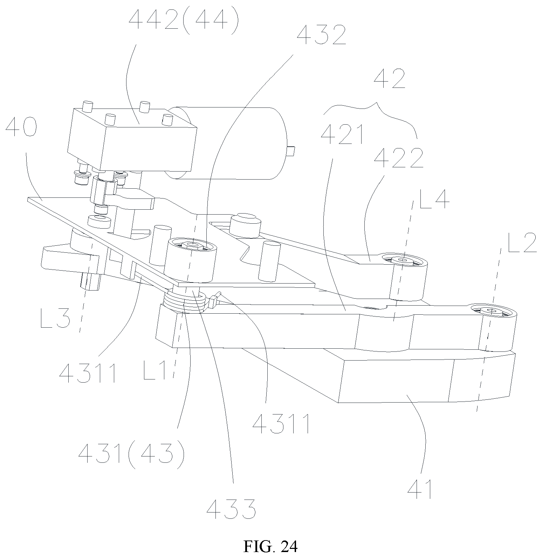

Referring to FIGS. 24 to 28, the operation execution mechanism comprises an operation mechanism 41, a connecting mechanism 42, and a power mechanism 43; wherein the connecting mechanism 42 comprises two opposing ends, with one of the ends pivotally connected to the body 40 and the other end connected to the operation mechanism 41; the connecting mechanism 42 can drive the operation mechanism 41 to reciprocate between a retracted position and a released position; the power mechanism 43 is connected to the connecting mechanism 42, and the power mechanism 43 is configured to drive the connecting mechanism 42 to pivot relative to the body 40. When the operation mechanism 41 is at the retracted position, the operation mechanism 41 is spaced apart from a centerline of the body 40 by a first distance P1; and when the operation mechanism 41 is at the released position, the operation mechanism 41 is spaced apart from the centerline of the body by a second distance P2, wherein the first distance P1 is less than the second distance P2.

The power mechanism 43 may drive the connecting mechanism 42 to pivot, so that the connecting mechanism 42 drives the operation mechanism to move toward the released position; and/or the power mechanism 43 may also drive the connecting mechanism to pivot, so that the connecting mechanism 42 drives the operation mechanism 41 to move toward the retracted position. The centerline of the body 40 may refer to a centerline of the body in a width or length direction of the smart traveling device.

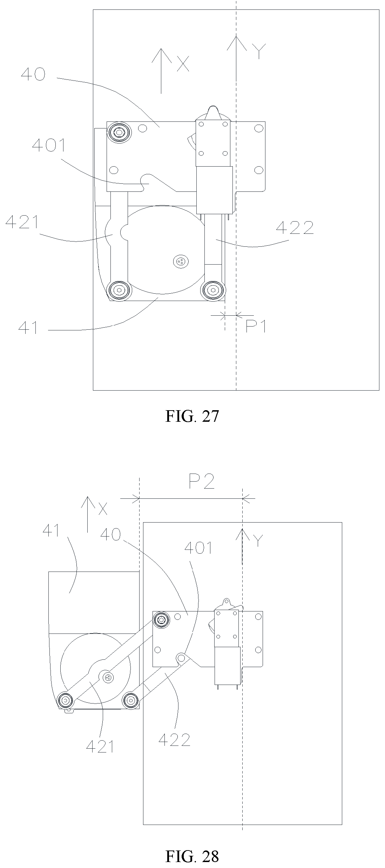

The relative position relationship between the operation mechanism 41 and the body 40 may be as follows:
when the operation mechanism 41 is at the retracted position, at least a part of a projection of the operation mechanism 41 onto the ground is located in a projection of the body 40 onto the ground. In other words, it can be understood as that: at least a part of the projection of the operation mechanism 41 onto the ground overlaps with the projection of the body 40 onto the ground. In this way, when the operation mechanism 41 is at the retracted position, at least a part of the operation mechanism 41 is hidden in a space between the body 40 and the ground, or at least a part of the operation mechanism 41 is hidden inside the body 40. In an ultimate state, the operation mechanism 41 is entirely hidden in the space between the body 40 and the ground or hidden inside the body 40, thereby reducing the overall size of the smart traveling device, facilitating storage, and reducing the risk of impacting against the operation mechanism 41. In a case as shown in FIG. 27, when the operation mechanism 41 is at the retracted position, the projection of the operation mechanism 41 onto the ground is entirely located in the projection of the body onto the ground, with a distance P1 between the operation mechanism 41 and the centerline of the body 40.

When the operation mechanism 41 is at the released position, the projection of the operation mechanism 41 onto the ground may still be located in the projection of the body 40 onto the ground, or at least a part of the projection of the operation mechanism 41 onto the ground is located outside the projection of the body 40 onto the ground. The at least a part of the projection of the operation mechanism 41 onto the ground is located outside the projection of the body 40 onto the ground, which may be understood as: no overlapping region between the projection of the at least a part of the operation mechanism 41 onto the ground and the projection of the body 40 onto the ground. In this way, when the operation mechanism 41 is at the released position, at least a part of the operation mechanism 41 extends to the outside of the body 40 in the width or length direction of the smart traveling device. In an ultimate state, the projection of the operation mechanism 41 onto the ground is entirely located outside the projection of the body 40 onto the ground, that is, the operation mechanism 41 is spaced apart from the body 40 in the width or length direction of the smart traveling device. In a case as shown in FIG. 28, the projection of the operation mechanism 41 onto the ground is entirely located outside the projection of the body onto the ground, with a distance P2 between the operation mechanism 41 and the centerline of the body 40.

The projection of the operation mechanism 41 onto the ground refers to: a projection of the operation mechanism 41 onto the ground along a height direction of the smart traveling device. Similarly, the projection of the body 40 onto the ground refers to: a projection of the body 40 onto the ground along the height direction of the smart traveling device. The height direction of the smart traveling device may be understood as that: if the ground is parallel to the horizontal plane, the height direction of the smart traveling device is parallel to the gravity direction; and if the ground is an inclined plane, that is, at a preset angle β relative to the horizontal plane, the height direction of the smart traveling device forms an angle with the gravity direction, and the angle is equal to the preset angle β.

Based on the above technical solutions, first, under the action of the power mechanism 43, the operation mechanism 41 moves to the released position, to perform a corresponding action on the target object. Then, when the operation mechanism 41 encounters an obstacle, the operation mechanism 41 and the connecting mechanism 42 are pushed by the obstacle or driven by the power mechanism 43 to pivot together toward the body 40, thereby achieving the obstacle avoidance effect. In an extreme case, the connecting mechanism 42 is pushed by the obstacle to drive the operation mechanism 41 to pivot to the retracted position, thereby eliminating the need to reserve a safe distance between the operation mechanism 41 and a boundary of a planned region. The operation mechanism 41 can perform a corresponding action on a target object at an edge of the planned region, that is, leaving no blind zone, thereby eliminating the need to manually perform the corresponding action on a target object in a blind zone, and reducing manual burden.

Referring to FIGS. 27 and 28, in a possible embodiment, when the connecting mechanism 42 drives the operation mechanism 41 to reciprocate between the retracted position and the released position, an operation orientation X of the operation mechanism 41 remains parallel to a forward direction Y of the body 40. In this way, the operation mechanism 41 is always oriented toward the forward direction of the body, that is, an operation orientation of the operation mechanism 41 remains unchanged relative to the body; so that it is convenient for a user to control the operation orientation of the operation mechanism 41 by controlling the forward direction of the body 40, thereby reducing the manipulation difficulty.

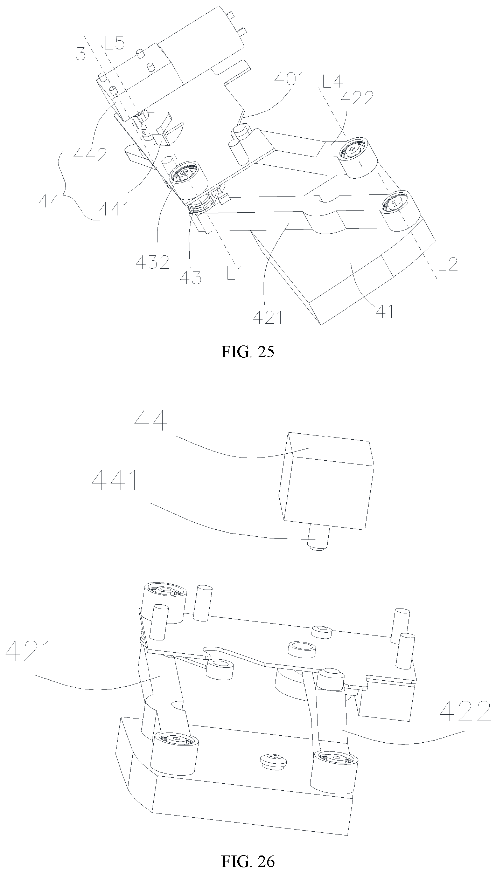

In a possible implementation, referring to FIGS. 25 and 27, the connecting mechanism 42 comprises a first connecting rod 421 and a second connecting rod 422, wherein the first connecting rod 421 comprises a first end and a second end that are opposite to each other, with the first end pivotally connected to the body 40 around a first axis L1 and the second end pivotally connected to the operation mechanism 41 around a second axis L2; the second connecting rod 422 comprises a third end and a fourth end that are opposite to each other, with the third end pivotally connected to the body 40 around a third axis L3 and the fourth end pivotally connected to the operation mechanism 41 around a fourth axis L4; the first axis L1, the second axis L2, and the third axis L3 are each parallel to the fourth axis L4; a distance A1 between the first axis L1 and the second axis L2 is equal to a distance A2 between the third axis L3 and the fourth axis L4; and a distance B1 between the first axis L1 and the third axis L3 is equal to a distance B2 between the second axis L2 and the fourth axis L4.

That is to say, a connection relationship among the connecting mechanism 42, the body 40, and the operation mechanism 41 can be understood as a parallel four-bar linkage mechanism. Based on such a connection relationship, a constant angle can always be kept between the orientation of the operation mechanism 41 and the centerline of the body 40. For example, the operation mechanism 41 is a lawnmowing mechanism provided with a grass inlet in the front thereof. An orientation of the grass inlet is parallel to the centerline of body 40. Then, when the first connecting rod 421 and the second connecting rod 422 pivot synchronously, the operation mechanism 41 pivots relative to the first connecting rod 421, but the orientation of the grass inlet of the operation mechanism 41 remains unchanged. Here, head and tail of the smart traveling device can be defined as being distributed along a forward-backward direction, with the head located in the front and the tail located in the rear. When the lawnmowing mechanism is used for lawnmowing, the smart traveling device moves from the rear to the front. The centerline of the body extends in the forward-backward direction.

In addition, in a possible embodiment, the power mechanism 43 is connected between the operation mechanism 41 and the first connecting rod 421, and/or the power mechanism 43 is connected between the operation mechanism 41 and the second connecting rod 422. When the operation mechanism 41 and the first connecting rod 421 are driven by the power mechanism 43 to pivot relative to each other, an angle between the operation mechanism 41 and the first connecting rod 421 changes. Based on the motion principle of a parallel four-bar linkage mechanism, the operation mechanism 41 and the second connecting rod 422 inevitably pivot relative to each other, the first connecting rod 421 and the body 40 inevitably pivot relative to each other, and the second connecting rod 422 and the body 40 inevitably pivot relative to each other, so that the connecting mechanism 42 pivots relative to the body 40.

In a possible embodiment, the power mechanism 43 comprises an elastic member 431, wherein the elastic member 431 is connected between the connecting mechanism 42 and the body 40, and/or the elastic member 431 is connected between the connecting mechanism 42 and the operation mechanism 41; and the elastic member 431 exerts on the connecting mechanism 42 an elastic force enabling the connecting mechanism 42 to drive the operation mechanism 41 to pivot from the retracted position toward the released position. In this way, when an obstacle is encountered, the obstacle can push the operation mechanism 41 toward the body 40 to achieve the avoidance effect, thereby eliminating the need to reserve a safe distance between the operation mechanism 41 and a boundary of a planned region. The operation mechanism 41 can perform a corresponding action on a target object at an edge of the planned region, that is, leaving no blind zone, thereby eliminating the need to manually perform the corresponding action on a target object in a blind zone, and reducing manual burden.

In a specific implementation, the elastic member 431 is connected between the body 40 and the first connecting rod 421, or the elastic member 431 is connected between the body 40 and the second connecting rod 422.

Or, in another specific implementation, the elastic member 431 is connected between the body 40 and the first connecting rod 421, and/or the elastic member 431 is connected between the body 40 and the second connecting rod 422.

In a possible embodiment, the elastic member 431 is a torsion spring comprising two pins 4311, with one of the pins 4311 connected to the body 40, and the other pin 4311 connected to the first connecting rod 421 or the second connecting rod 422. Here, one of the pins 4311 may be fixed on or abut against the body 40, and the other pin 4311 may be fixed on or abut against the first connecting rod 421; or the other pin 4311 may be fixed on or abut against the second connecting rod 422.

In an example, one of the first connecting rod 421 and the body 40 is provided with a first accommodating hole 432, and the other one is provided with a first rotating shaft 433, wherein the first rotating shaft 433 is pivotably inserted into the first accommodating hole 432, so that the first connecting rod 421 pivots relative to the body 40 around the first axis L1; the torsion spring is sleeved on the first rotating shaft 433, and the other pin 4311 of the torsion spring is located outside the first accommodating hole 432 and connected to the first connecting rod 421. In this way, the torsion spring is mounted using the first rotating shaft 433, thereby simplifying the structure, and facilitating assembly.

In another possible embodiment, the connecting mechanism 42 may be a single-bar structure, with one end pivotally connected to the body 40 and the other end connected to the operation mechanism 41, to define a constant relative position between the operation mechanism 41 and the single-bar structure. The elastic member 431 may be a torsion spring or a coil spring, and is connected between the body 40 and the single-bar structure.

In an example, one of the first connecting rod 421 and the operation mechanism 41 is provided with a second accommodating hole, and the other one is provided with a second rotating shaft, wherein the second rotating shaft is pivotably inserted into the second accommodating hole, so that the first connecting rod 421 pivots relative to the operation mechanism 41 around the second axis L2; the torsion spring is sleeved on the second rotating shaft, and the other pin 4311 of the torsion spring is located outside the second accommodating hole and connected to the first connecting rod 421. In this way, the torsion spring is mounted using the second rotating shaft, thereby simplifying the structure, and facilitating assembly.

In a possible implementation, the power mechanism 43 comprises a rotating motor with an output shaft of the rotating motor connected to the connecting mechanism 42, and can drive the connecting mechanism 42 to move. That is to say, the output shaft of the rotating motor can rotate around its own axis, the output shaft is connected to the connecting mechanism via a transmission member, and the transmission member can be used to convert the rotation of the output shaft into pivoting of the connecting mechanism relative to the body. The transmission member may include a gear and a gear rack, wherein the gear is mounted on the output shaft, and the gear rack is mounted on the connecting mechanism 42, which is easily conceived of by those skilled in the art, and will not be repeated here.

Referring to FIGS. 24 and 25, in another possible implementation, the operation execution mechanism further comprises a position-limiting mechanism 44, wherein the position-limiting mechanism 44 is configured to exert a position-limiting force on the connecting mechanism 42, so that the connecting mechanism 42 restricts the operation mechanism 41 to the retracted position. In this way, when the operation mechanism 41 does not need to be used, the position-limiting mechanism 44 can restricts the operation mechanism 41 to the retracted position, thereby hiding the operation mechanism 41, not only reducing the overall size of the smart traveling device and facilitating storage, but also reducing the probability of impacting against the operation mechanism 41, and improving the safety.

In a possible embodiment, referring to FIGS. 24 to 26, the position-limiting mechanism 44 comprises a position-limiting member 441, wherein the position-limiting member 441 reciprocates between an clearance position and a stop position. The position-limiting member 441 at the clearance position allows the connecting mechanism 42 to drive the operation mechanism 41 to reciprocate between the released position and the retracted position; and the position-limiting member 441 at the stop position prevents the connecting mechanism 42 from driving the operation mechanism 41 to pivot from the retracted position toward the released position. That is, when the position-limiting member 441 is at the stop position, the position-limiting member 441 is located on a pivot path of the connecting mechanism 42, thus preventing the connecting mechanism 42 from pivoting; and when the position-limiting member 441 is at the released position, the position-limiting member 441 is not located on the pivot path of the connecting mechanism 42, and the reciprocation of the connecting mechanism 42 between the released position and the retracted position is not blocked by the position-limiting member 441.

Referring to FIGS. 24 and 25, in an example, the position-limiting mechanism 44 further comprises a driving portion 442, wherein the driving portion 442 drives the position-limiting member 441 to rotate around a preset axis L5, the position-limiting member 441 is spaced apart from the preset axis L5, the pivot axis of the connecting mechanism 42 and the body 40 is parallel to the preset axis L5, and the position-limiting member 441 is located on one side of the connecting mechanism 42 facing the released position. In this way, pivot paths of both the position-limiting member 441 and the connecting mechanism 42 are arc-shaped, and the pivot path of the position-limiting member 441 overlaps with that of the connecting mechanism 42. When staying at the stop position, the position-limiting member 441 can prevent the connecting mechanism 42 from driving the operation mechanism 41 to move toward the released position. During the pivoting of the position-limiting member 441 from the stop position toward the clearance position, the connecting mechanism 42 is pushed by the power mechanism 43 to move toward the released position.

In an example, after the connecting mechanism 42 drives the operation mechanism 41 to move to the released position, the position-limiting member 441 continues to rotate a certain distance before reaching the clearance position. In this way, the smart traveling device comprising the operation execution mechanism is used to prevent the connecting mechanism 42 from colliding with the position-limiting member 441 when driving the operation mechanism 41 to return to the released position.

Referring to FIG. 28, in an example, the position-limiting mechanism 44 is an electromagnetic latch lock, and the position-limiting member 441 is a latch, wherein the latch reciprocates between the clearance position and the stop position along its own axial direction; the latch at the clearance position is away from the pivot path of the connecting mechanism 42, to allow the connecting mechanism 42 to drive the operation mechanism 41 to pivot toward the released position; and the latch at the stop position prevents the connecting mechanism 42 from driving the operation mechanism 41 to pivot from the retracted position toward the released position.

The axial direction of the latch may be perpendicular to a plane where the pivot path of the connecting mechanism 42 is located, or the axial direction of the latch may be parallel to the pivot axis of the connecting mechanism 42, or the axial direction of the latch may be aligned with a distribution direction of the released position and the retracted position.

In a possible embodiment, the position-limiting mechanism 44 comprises an electromagnet and an electrical control portion, with a magnet disposed on the connecting mechanism 42; wherein the electrical control portion controls the electromagnet to be powered on or off, the electromagnet is magnetic in a power-on state and can attract the magnet to restrict the connecting mechanism 42 to the retracted position, and the electromagnet is non-magnetic in a power-off state. That is, when the operation mechanism 41 is required to be restricted to the retracted position, the electromagnet can be powered on to attract the connecting mechanism 42; and when the connecting mechanism 42 is required to be released, the electromagnet can be powered off, so that the power mechanism 43 can drive the connecting mechanism 42 to pivot toward the released position.

The electrical control portion may be provided with a button or key, which is pressed to achieve the effect of controlling the electromagnet to be powered on or off. When the operation mechanism 41 is not used, the connecting mechanism 42 may be manually pushed to rotate toward the retracted position with the electromagnet in the power-on state, until the electromagnet and the connecting mechanism 42 are attracted together.

In a possible implementation, referring to FIGS. 25 and 27, a first position-limiting portion 401 is disposed on the body 40. When the connecting mechanism 42 moves to the released position, the connecting mechanism 42 abuts against the first position-limiting portion 401 under a force exerted by the power mechanism 43. In this way, the first position-limiting portion 401 and the power mechanism 43 act together on the connecting mechanism 42, so that the connecting mechanism 42 drives the operation mechanism 41 to stably remain at the released position.

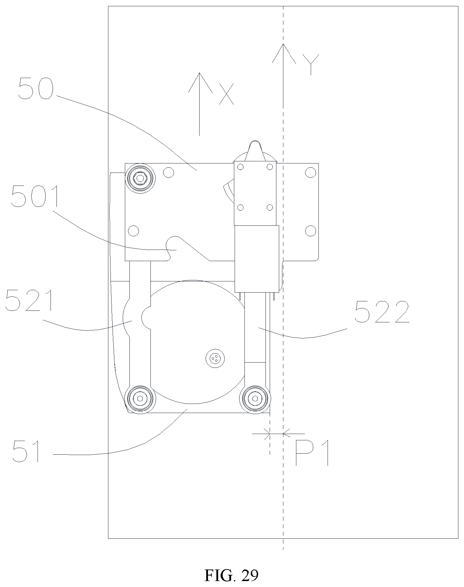

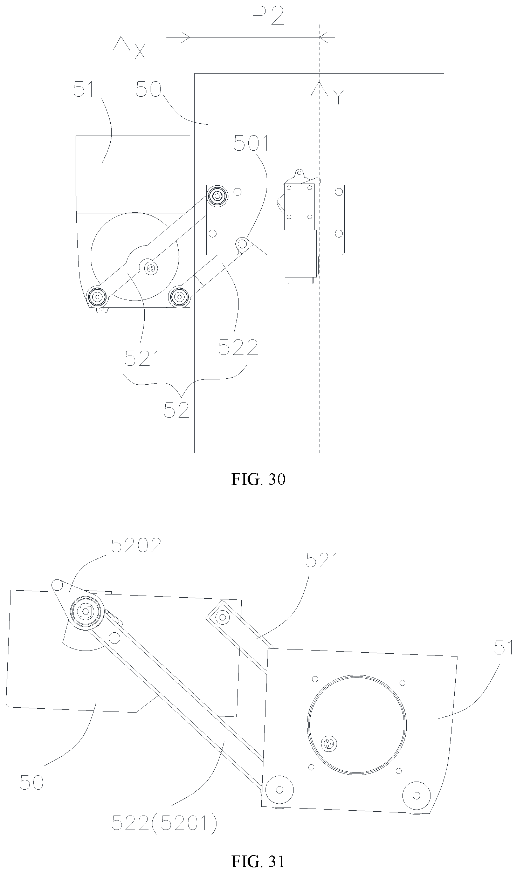

The present disclosure further provides another smart traveling device. Referring to FIGS. 29 and 30, the smart traveling device comprises a body 50, an operation mechanism 51, a connecting mechanism 52, a power mechanism 54, and a damping member 55; wherein the connecting mechanism 52 comprises two opposing ends, with one of the ends pivotally connected to the body 50 and the other end connected to the operation mechanism 51, the connecting mechanism 52 can drive the operation mechanism 51 to reciprocate between a retracted position and a released position; the power mechanism 54 is connected to the connecting mechanism 52, and the power mechanism 54 is used for driving the connecting mechanism 52 to pivot relative to the body 50. When the operation mechanism 51 is at the retracted position, the operation mechanism 51 is spaced apart from a centerline of the body 50 by a first distance P1; and when the operation mechanism 51 is at the released position, the operation mechanism 51 is spaced apart from the centerline of the body 50 by a second distance P2, wherein the first distance is less than the second distance P2. The body 50 is provided with a first position-limiting portion 501. When the connecting mechanism 52 drives the operation mechanism 51 to move to the released position or the retracted position, the connecting mechanism 52 abuts against the first position-limiting portion 501 under a force exerted by the power mechanism 54. The damping member 55 is connected to the connecting mechanism 52, and when the connecting mechanism 52 pivots toward the released position or the retracted position, the damping member 55 applies a damping force to the connecting mechanism 52 in a direction opposite to the force.

The power mechanism 54 may drive the connecting mechanism 52 to pivot, so that the connecting mechanism 52 drives the operation mechanism to move toward the released position; and/or the power mechanism 54 may also drive the connecting mechanism to pivot, so that the connecting mechanism 52 drives the operation mechanism 51 to move toward the retracted position. The centerline of the body 50 may refer to a centerline of the body in a width or length direction of the smart traveling device.

The relative position relationship between the operation mechanism 51 and the body 50 may be as follows:
when the operation mechanism 51 is at the retracted position, at least a part of a projection of the operation mechanism 51 onto the ground is located in a projection of the body 50 onto the ground. That is to say, it can be understood as that: at least a part of the projection of the operation mechanism 51 onto the ground overlaps with the projection of the body 50 onto the ground. In this way, when the operation mechanism 51 is at the retracted position, at least a part of the operation mechanism 51 is hidden in a space between the body 50 and the ground, or at least a part of the operation mechanism 51 is hidden inside the body 50. In an ultimate state, the operation mechanism 51 is entirely hidden in the space between the body 50 and the ground or hidden inside the body 50, thereby reducing the overall size of the smart traveling device, facilitating storage, and reducing the risk of bumping the operation mechanism 51. In a case as shown in FIG. 29, when the operation mechanism 51 is at the retracted position, the projection of the operation mechanism 51 onto the ground is entirely located in the projection of the body onto the ground, with a distance P1 between the operation mechanism 51 and the centerline of the body 50.

When the operation mechanism 51 is at the released position, the projection of the operation mechanism 51 onto the ground may still be located in the projection of the body 50 onto the ground, or at least a part of the projection of the operation mechanism 51 onto the ground is located outside the projection of the body 50 onto the ground. The at least a part of the projection of the operation mechanism 51 onto the ground is located outside the projection of the body 50 onto the ground, which may be understood as: no overlapping region between the projection of the at least a part of the operation mechanism 51 onto the ground and the projection of the body 50 onto the ground. In this way, when the operation mechanism 51 is at the released position, at least a part of the operation mechanism 51 extends to the outside of the body 50 in the width or length direction of the smart traveling device. In an ultimate state, the projection of the operation mechanism 51 onto the ground is entirely located outside the projection of the body 50 onto the ground, that is, the operation mechanism 51 is spaced apart from the body 50 in the width or length direction of the smart traveling device. In a case as shown in FIG. 30, when the operation mechanism 51 is at the retracted position, the projection of the operation mechanism 51 onto the ground is entirely located outside the projection of the body onto the ground, with a distance P2 between the operation mechanism 51 and the centerline of the body 50.

The projection of the operation mechanism 51 onto the ground refers to: a projection of the operation mechanism 51 onto the ground along a height direction of the smart traveling device. Similarly, the projection of the body 50 onto the ground refers to: a projection of the body 50 onto the ground along the height direction of the smart traveling device. The height direction of the smart traveling device may be understood as that: if the ground is parallel to the horizontal plane, the height direction of the smart traveling device is parallel to the gravity direction; and if the ground is an inclined plane, that is, at a preset angle β relative to the horizontal plane, the height direction of the smart traveling device forms an angle with the gravity direction, and the angle is equal to the preset angle β.

Based on the above technical solutions, first, under the action of the power mechanism 54, the operation mechanism 51 moves to the released position, to perform a corresponding action on the target object. Then, when the operation mechanism 51 encounters an obstacle, the operation mechanism 51 and the connecting mechanism 52 are pushed by the obstacle to pivot together toward the body 50, thereby achieving the obstacle avoidance effect; or the operation mechanism 51 is driven by the power mechanism 54 to move toward the retracted position, so as to achieve the obstacle avoidance effect. In an extreme case, the connecting mechanism 52 is pushed by the obstacle or driven by the power mechanism 54 to drive the operation mechanism 51 to pivot to the retracted position, and the connecting mechanism 52 at the retracted position can abut against the first position-limiting portion 501. Of course, when the operation mechanism 51 is at the released position, the first position-limiting portion 501 and the power mechanism 54 may also act together on the connecting mechanism 52, so that the connecting mechanism 52 drives the operation mechanism 51 to stably remain at the released position, thereby eliminating the need to reserve a safe distance between the operation mechanism 51 and a boundary of a planned region. The operation mechanism 51 can perform a corresponding action on a target object at an edge of the planned region, that is, leaving no blind zone, thereby eliminating the need to manually perform the corresponding action on a target object in a blind zone, and reducing manual burden.

Then, during the pivoting of the operation mechanism 51 toward the released position or the retracted position, the damping force of the damping member 55 can provide a buffering effect, decelerate the connecting mechanism 52, prevent the connecting mechanism 52 from driving the operation mechanism 51 to move to the released position at a high speed and violently impacting against the first position-limiting portion 501, and reduce the movement speed of the operation mechanism 51, thereby preventing the operation mechanism 51 from violently impacting against the body 50 or an additional object.

Referring to FIGS. 29 and 30, in a possible embodiment, during the reciprocation of the operation mechanism 51 between the retracted position and the released position, an operation orientation X of the operation mechanism 51 remains parallel to a forward direction Y of the body 50. In this way, the operation mechanism 51 always face toward the forward direction of the body, so that it is convenient for a user to control the operation orientation of the operation mechanism 51 by controlling the forward direction of the body 50, thereby reducing the manipulation difficulty.

In a possible implementation, the connecting mechanism 52 comprises a first connecting rod 521 and a second connecting rod 522, wherein the first connecting rod 521 comprises a first end and a second end that are opposite to each other, with the first end pivotally connected to the body 50 around a first axis L1 and the second end pivotally connected to the operation mechanism 51 around a second axis L2; and the second connecting rod 522 comprises a third end and a fourth end that are opposite to each other, with the third end pivotally connected to the body 50 around a third axis L3 and the fourth end pivotally connected to the operation mechanism 51 around a fourth axis L4; wherein the damping member 55 is connected to the first connecting rod 521 or the second connecting rod 522. In this way, a connection relationship among the connecting mechanism 52, the first connecting rod 521, the second connecting rod 522, and the body 50 may be understood as a four-bar linkage mechanism. Based on movement features of the four-bar linkage mechanism, when the damping member 55 applies a damping force to the first connecting rod 521 or the second connecting rod 522, the first connecting rod 521 and the second connecting rod 522 reduce the movement speed synchronously, thereby reducing the movement speed of the operation mechanism 51.

In an example, the first axis L1, the second axis L2, and the third axis L3 are each parallel to the fourth axis L4; a distance A1 between the first axis L1 and the second axis L2 is equal to a distance A2 between the third axis L3 and the fourth axis L4; and a distance B1 between the first axis L1 and the third axis L3 is equal to a distance B2 between the second axis L2 and the fourth axis L4. That is to say, a connection relationship among the connecting mechanism 52, the body 50, and the operation mechanism 51 can be understood as a parallel four-bar linkage mechanism. Based on such a connection relationship, a constant angle can always be kept between the orientation of the operation mechanism 51 and the centerline of the body 50. For example, the operation mechanism 51 is a lawnmowing mechanism provided with a grass inlet in the front thereof. An orientation of the grass inlet is parallel to the centerline of body 50. Then, when the first connecting rod 521 and the second connecting rod 522 pivot synchronously, the operation mechanism 51 pivots relative to the first connecting rod 521, but the orientation of the grass inlet of the operation mechanism 51 remains unchanged. Here, head and tail of the smart traveling device can be defined as being distributed along a forward-backward direction, with the head located in the front and the tail located in the rear. When the lawnmowing mechanism is used for lawnmowing, the smart traveling device moves from the rear to the front. The centerline of the body extends in the forward-backward direction.

In an example, when the operation mechanism 51 is at the released position, the first connecting rod 521 abuts against the first position-limiting portion 501.

In an example, the damping member 55 is connected between the body 50 and the first connecting rod 521; and when the first connecting rod 521 moves toward the released position, the damping member 55 applies a damping force to the first connecting rod 521.

Alternatively, in an example, the damping member 55 is connected between the body 50 and the second connecting rod 522; and when the second connecting rod 522 moves toward the released position, the damping member 55 applies a damping force to the second connecting rod 522.

Alternatively, in an example, the damping member 55 is connected between the operation mechanism 51 and the first connecting rod 521; when the first connecting rod 521 moves toward the released position, the operation mechanism 51 pivots relative to the first connecting rod 521, and the damping member 55 can apply a damping force to the first connecting rod 521 to reduce the pivoting speed of the first connecting rod 521.

Alternatively, in an example, the damping member 55 is connected between the operation mechanism 51 and the second connecting rod; when the second connecting rod 522 moves toward the released position, the operation mechanism 51 pivots relative to the second connecting rod 522, and the damping member 55 can apply a damping force to the second connecting rod 522 to reduce the pivoting speed of the second connecting rod 522.

In a possible implementation, the damping member 55 may be a two-way damping mechanism. In this way, no matter whether the connecting mechanism 52 drives the operation mechanism 51 to move toward the released position or the retracted position, the damping member 55 can provide a buffering effect to avoid occurrence of violent impact, and improve the user comfort.

In a possible implementation, the damping member 55 comprises an inner shell 551, an outer shell 552, and a damping body, wherein the outer shell 552 is sleeved outside the inner shell 551, an accommodating region is formed between the inner shell 551 and the outer shell 552, and the damping body is located in the accommodating region and connected between the inner shell 551 and the outer shell 552, the inner shell 551 can rotate relative to the outer shell 552; one of the inner shell 551 and the outer shell 552 is connected to the connecting mechanism 52, and the other one is connected to the body 50. In this way, when the operation mechanism 51 pivots from the retracted position toward the released position, one of the inner shell 551 and the outer shell 552 pivots synchronously relative to the body 50 following the connecting mechanism 52, and the other one remains stationary relative to the body 50. In this way, the inner shell 551 pivots relative to the outer shell 552, and the damping body will generate a damping force, thereby providing a buffering effect.

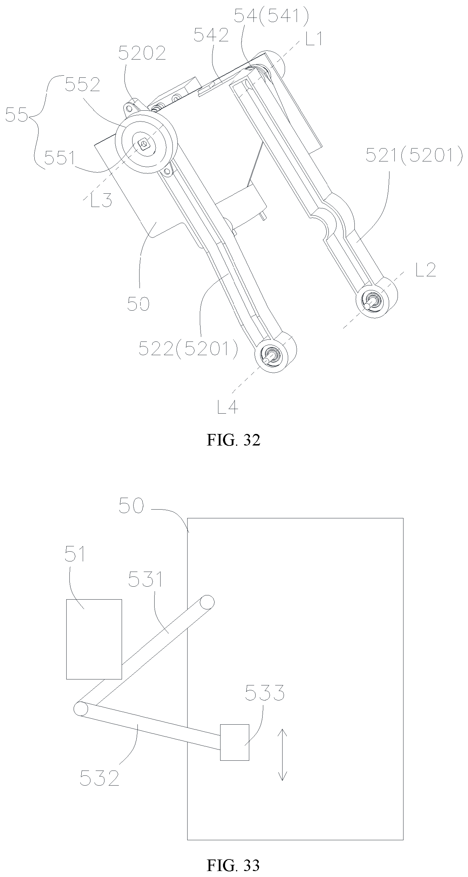

In an example, referring to FIG. 32, a fixed shaft is disposed on the body 50, the fixed shaft is inserted into an inner hole of the inner shell 551 and connected thereto in a circumferentially constrained manner, and the outer shell 552 is connected to the second connecting rod 522 in a circumferentially constrained manner.

In a possible implementation, referring to FIGS. 31 and 32, the connecting mechanism 52 comprises a first portion 5201 and a second portion 5202, wherein the first portion 5201 is connected between the operation mechanism 51 and the body 50, the second portion 5202 is connected to the first portion 5201, the first portion 5201 and the second portion 5202 pivot synchronously, one of the first portion 5201 and the second portion 5202 is connected to the damping member 55, and the other one is connected to the power mechanism 54. In this way, the power mechanism 54 can be separated from the damping member 55 to avoid mutual interference and provide ease of assembly. In an example, when the operation mechanism 51 is at the released position, the first portion 5201 abuts against the first position-limiting portion 501.

In another example, a distribution direction of the first portion 5201 and the second portion 5202 is aligned with an extension direction of the first portion 5201, and a pivot axis of the connecting mechanism 52 and the body 50 is located between the first portion 5201 and the second portion 5202. In this way, the connecting mechanism 52 is equivalent to a lever, with a fulcrum of the lever being a pivot connection point between the connecting mechanism 52 and the body 50. The power mechanism 54 and the damping member 55 are located on two opposite sides of the pivot axis of the connecting mechanism 52 and the body 50 respectively, which is conducive to balancing the connecting mechanism 52 on both sides of the pivot axis. The power mechanism 54 may be connected between the first portion 5201 and the body 50, and the damping member 55 may be connected between the second portion 5202 and the body 50.

In a possible implementation, referring to FIG. 33, the connecting mechanism 52 comprises a first rod body 531, a second rod body 532, and a sliding block 533, wherein two opposite ends of the first rod body 531 are pivotally connected to the body 50 and the second rod body 532, respectively, two opposite ends of the second rod body 532 are pivotally connected to the first rod body 531 and the sliding block 533, respectively, and the sliding block 533 is slidably connected to the body 50. The operation mechanism 51 is mounted on the first rod body 531 or the second rod body 532. The damping member 55 is connected to the first rod body 531 or the second rod body 532. The power mechanism 54 is connected between the first rod body 531 and the body 50, or the power mechanism 54 is connected between the body 50 and the second rod body 532. In this way, the power mechanism 54 can apply an elastic force to the first rod body 531 or the second rod body 532, so that both the first rod body 531 and the second rod body 532 rotate around the body 50, and the sliding block 533 slides on the body 50; and the damping member 55 can reduce the movement speed of the first rod body 531 and the second rod body 532, thereby reducing the movement speed of the operation mechanism 51 and preventing the first rod body 531 or the second rod body 532 from violently impacting against the first position-limiting portion 501. The sliding connection between the sliding block 533 and the body 50 can provide a position limiting effect, to reduce the swing amplitude of the first rod body 531 and the second rod body 532, so that the connecting mechanism 52 drives the operation mechanism 51 to remain at the released position and the retracted position with enhanced stability.

In an example, when the operation mechanism 51 is at the released position, the first rod body 531 abuts against the first position-limiting portion 501.

In an example, the damping member 55 is connected between the first rod body 531 and the second rod body 532. Based on movement features of a crank sliding block 533 mechanism, the damping member 55 can reduce a change speed of an angle between the first rod body 531 and the second rod body 532, thereby reducing a sliding speed of the sliding block 533, further reducing a pivoting speed of the first rod body 531 relative to the body 50, finally achieving the effect of reducing a movement speed of the operation mechanism 51, and preventing the operation mechanism 51 from violently impacting against the body 50 or an additional object.

In an example, the damping member 55 is connected between the first rod body 531 and the body 50. Based on the movement features of the crank sliding block 533 mechanism, the damping member 55 can reduce the change speed of the angle between the first rod body 531 and the body 50, that is, reduce the pivoting speed of the first rod body 531 relative to the body 50, thereby reducing the sliding speed of the sliding block 533, and finally achieving the effect of reducing the movement speed of the operation mechanism 51.

Alternatively, in an example, the damping member 55 is connected between the second rod body 532 and the sliding block 533. Based on the movement features of the crank sliding block 533 mechanism, the damping member 55 can reduce the change speed of the angle between the second rod body 532 and the sliding block 533, thereby reducing a movement speed of the first rod body 531 and the second rod body 532 relative to the body 50, reducing the sliding speed of the sliding block 533, and finally achieving the effect of reducing the movement speed of the operation mechanism 51.

Alternatively, in an example, the damping member 55 is connected between the sliding block 533 and the body 50. Based on the movement features of the crank sliding block 533 mechanism, the damping member 55 can reduce the movement speed of the sliding block relative to the body 50, thereby reducing the movement speed of the first rod body 531 and the second rod body 532 relative to the body 50, reducing the sliding speed of the sliding block 533, and finally achieving the effect of reducing the movement speed of the operation mechanism 51.

In a possible implementation, referring to FIG. 32, the power mechanism 54 comprises an elastic member 541, wherein the elastic member 541 is connected between the connecting mechanism 52 and the body 50, and/or the elastic member 541 is connected between the connecting mechanism 52 and the operation mechanism 51; and the elastic member 541 exerts on the connecting mechanism 52 an elastic force enabling the connecting mechanism 52 to drive the operation mechanism 51 to pivot from the retracted position toward the released position. In this way, in the smart traveling device provided in the present disclosure, on the one hand, when encountering an obstacle, the operation mechanism 51 can be pushed by the obstacle to pivot toward the body 50 against a force exerted by the power mechanism 54, or the power mechanism 54 drives the operation mechanism 51 to pivot toward the body 50, thereby avoiding the obstacle avoidance effect, and eliminating the need to reserve a safe distance between the operation mechanism 51 and a boundary of a planned region. The operation mechanism 51 can perform a corresponding action on a target object at an edge of the planned region, that is, leaving no blind zone, thereby eliminating the need to manually perform the corresponding action on a target object in a blind zone, and reducing manual burden. On the other hand, the damping member 55 is used to improve the use comfort when the connecting mechanism 52 drives the operation mechanism 51 to move toward the released position.

In an example, the elastic member 541 is connected between the body 50 and the first connecting rod 521, or the elastic member 541 is connected between the body 50 and the second connecting rod 522.

Alternatively, in another example, the elastic member 541 is connected between the body 50 and the first connecting rod 521, and/or the elastic member 541 is connected between the body 50 and the second connecting rod 522.

In a possible embodiment, referring to FIG. 32, the elastic member 541 is a torsion spring comprising two pins 542, with one of the pins 542 connected to the body 50, and the other pin 542 connected to the first connecting rod 521 or the second connecting rod 522. Here, one of the pins 542 may be fixed on or abut against the body 50, and the other pin 542 may be fixed on or abut against the first connecting rod 521; or the other pin 542 may be fixed on or abut against the second connecting rod 522.

An embodiment of the present disclosure provides an operation mechanism, which is introduced in detail below with reference to a plurality of embodiments.

The operation mechanism is applied to a smart traveling device, wherein the smart traveling device may be, e.g., an automatic lawnmower, a robot sweeper, or a robot snow remover, or a cleaning machine. The smart traveling device will perform an operation during automatic traveling. For example, the automatic lawnmower will perform a lawnmowing operation during automatic traveling, and the robot sweeper will perform a sweeping operation during automatic traveling.

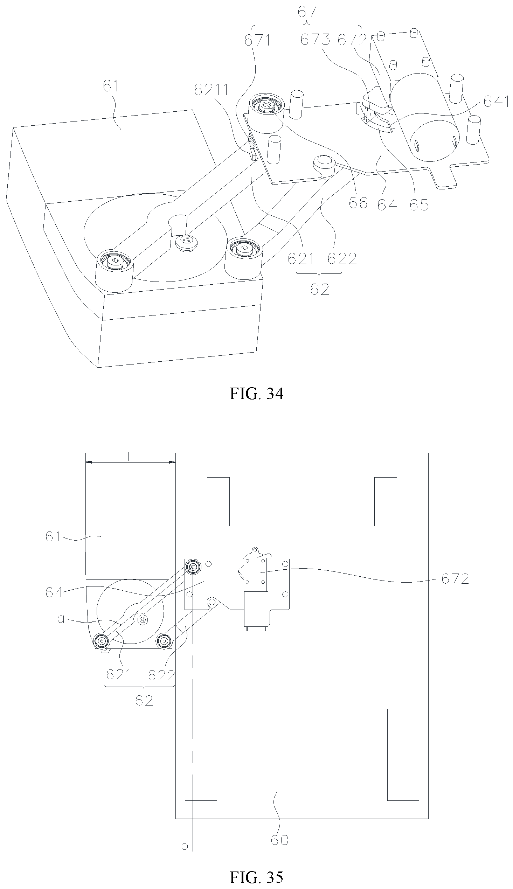

FIG. 34 is a schematic diagram of an operation mechanism with an operation portion in an extended state according to an embodiment of the present disclosure. As shown in FIG. 34, the operation mechanism comprises: a connecting portion 62, a fixing base 64, an operation portion 61, an angle detection component 66, and a control component 67; wherein one end of the connecting portion 62 is connected to the fixing base 64, the other end of the connecting portion 62 is connected to the operation portion 61, and the operation portion 61 is used for a cleaning operation; the connecting portion 62 is configured to rotate relative to the fixing base 64 to drive the operation portion 61 to move relative to the fixing base 64; the angle detection component 66 is configured to detect a rotation angle of the connecting portion 62 relative to the fixing base 64 and send an angle signal for indicating the rotation angle to the control component 67; and the control component 67 is configured to control the connecting portion 62 to stop rotation relative to the fixing base 64 when the rotation angle indicated by the angle signal reaches an angle threshold, so that an angle between the connecting portion 62 and the fixing base 64 is within a preset angle range.

In an embodiment of the present disclosure, as shown in FIG. 34, the operation portion 61 is used for a cleaning operation. In an example, if the smart traveling device is an automatic lawnmower, the operation portion 61 is used for a lawnmowing operation; and in another example, if the smart traveling device is a robot sweeper, the operation portion 61 is used for a sweeping operation.

FIG. 35 is a schematic diagram of a smart traveling device with an operation portion in an extended state according to an embodiment of the present disclosure. As shown in FIGS. 1 and 35, the fixing base 64 may be mounted on a body 60 of the smart traveling device for operation. The fixing base 64 may be plate-shaped. One end of the connecting portion 62 connected to the fixing base 64 may be a head end, and one end of the connecting portion 62 connected to the operation portion 61 may be a tail end. An angle between the connecting portion 62 and the fixing base 64 is defined as an angle between a line segment from the head end to the tail end and a ray formed along a length direction of the body 60 with the head end as the start point, the length direction of the body 60 is a direction from the direct front of the body 60 to the direct rear of the body 60 during an operation process of the body 60, and the angle between the connecting portion 62 and the fixing base 64 may be 0 degrees or an acute angle. For example, the dotted line *a* in FIG. 35 represents the line segment from the head end to the tail end, the dotted line b in FIG. 35 represents the ray formed along the length direction of the body 60 with the head end as the start point, and the acute angle between the dotted lines a and b is the angle between the connecting portion 62 and the fixing base 64.

The control component 67 may be mounted on the connecting portion 62, the fixing base 64, or the body 60, which is not limited in the embodiments of the present disclosure.

As shown in FIG. 35, the angle detection component 66 may be configured to periodically detect a rotation angle of the connecting portion 62 relative to the fixing base 64 and send an angle signal for indicating the rotation angle to the control component 67.

Before use of the smart traveling device, the fixing base 64 may be mounted on the body 60 of the smart traveling device for a cleaning operation. During a boundary-following cleaning operation process using the smart traveling device, if the smart traveling device is less likely to be trapped or damaged in a region proximate to an operation boundary, the connecting portion 62 may be manually or automatically controlled to rotate relative to the fixing base 64. In this case, the operation portion 61 moves relative to the fixing base 64, and the angle detection component 66 detects a rotation angle of rotation of the connecting portion 62 relative to the fixing base 64, and send an angle signal for indicating the rotation angle to the control component 67. After receiving the angle signal, and when determining that the rotation angle indicated by the angle signal reaches an angle threshold, the control component 67 controls the connecting portion 62 to stop rotation relative to the fixing base 64, so that the angle between the connecting portion 62 and the fixing base 64 is within a preset angle range. In this case, the operation portion 61 is located outside the body 60, and capable of performing a cleaning operation on a region outside the body 60, thereby expanding the region of the cleaning operation of the smart traveling device, optimizing the effect of the cleaning operation of the smart traveling device on the region proximate to the operation boundary during a boundary-following cleaning operation process, reducing the possibility of reworking or manual operation of the smart traveling device, and achieving the goal of improving the operation efficiency of the smart traveling device.

Further, in an embodiment of the present disclosure, based on the solution of configuring the connecting portion 62 to rotate relative to the fixing base 64, and using the angle detection component 66 and the control component 67 in combination, the connecting portion 62 can stop rotation relative to the fixing base 64 when the rotation angle of the connecting portion 62 relative to the fixing base 64 reaches the angle threshold, and then the connecting portion 62 is actively controlled to stop rotation relative to the fixing base 64, thereby reducing the possibility of damaging a component in the operation mechanism and extending the service life of the operation mechanism, compared to passively controlling the connecting portion 64 to stop rotation relative to the fixing base 64 by e.g., abutment or position limiting, when the rotation angle of the connecting portion 62 relative to the fixing base 62 reaches the angle threshold.

In a possible implementation, the control component 67 is configured to control, in response to the rotation angle indicated by the angle signal reaching a first angle threshold, the connecting portion 62 to stop rotation relative to the fixing base 64, so that the angle between the connecting portion 62 and the fixing base 64 is within a first preset angle range, and is further configured to control, in response to the rotation angle indicated by the angle signal reaching a second angle threshold, the connecting portion 62 to stop rotation relative to the fixing base 64, so that the angle between the connecting portion 62 and the fixing base 64 is within a second preset angle range, wherein the first angle threshold is less than the second angle threshold, a minimum angle in the first preset angle range is equal to a minimum angle in the second preset angle range, and a maximum angle in the first preset angle range is less than a maximum angle in the second preset angle range.

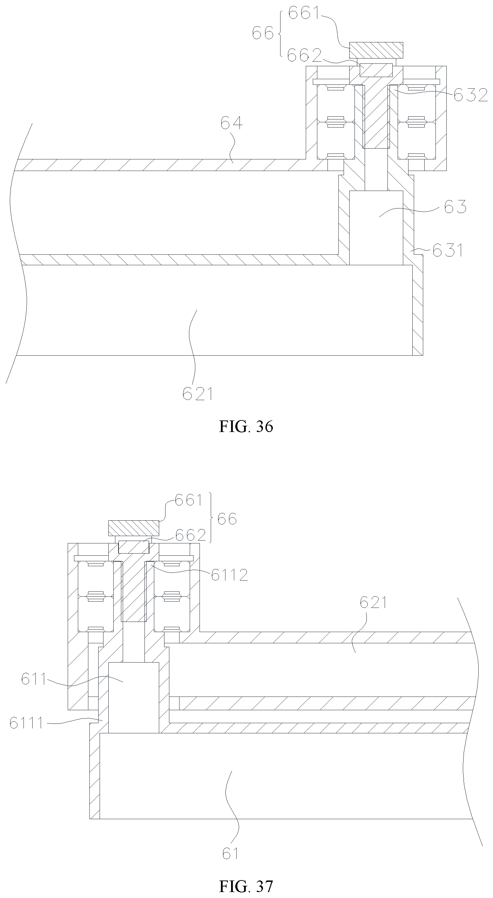

FIG. 36 is a sectional view highlighting an angle detection component according to an embodiment of the present disclosure. As shown in FIGS. 34 and 36, in a possible implementation, the angle detection component 66 comprises a magnetic encoder 661 and a magnetic block 662; one end of the connecting portion 62 connected to the fixing base 64 is hinged to the fixing base 64, and the magnetic encoder 661 and the magnetic block 662 are arranged at the hinge point between the connecting portion 62 and the fixing base 64; the magnetic encoder 661 is opposite to the magnetic block 662, the magnetic block 662 is fixedly connected to the fixing base 64, and the magnetic encoder 661 is fixedly connected to the connecting portion 62, or the magnetic encoder 661 is fixedly connected to the fixing base 64, and the magnetic block 662 is fixedly connected to the connecting portion 62; the magnetic block 662 is cylindrical, and a hinge axis between the connecting portion 62 and the fixing base 64 is aligned with a central axis of the magnetic block 662. The magnetic encoder 661 is configured to detect a rotation angle of the magnetic block 662 relative to the magnetic encoder 661, generate an angle signal for indicating the rotation angle of the magnetic block 662 relative to the magnetic encoder 661, wherein the angle signal is the angle signal for indicating the rotation angle of the connecting portion 62 relative to the fixing base 64, and send the angle signal to the control component 67.

Based on the above, as shown in FIGS. 34 and 36, a specific embodiment may be as follows: the connecting portion 62 is located outside one side of the fixing base 64, a first rotating shaft 63 is provided at one end of the connecting portion 62 connected to the fixing base 64, the first rotating shaft 63 runs through the fixing base 64, and the fixing base 64 is rotatably connected to the first rotating shaft 63 via a rotating member such as a bearing. The first rotating shaft 63 comprises a first end 631 and a second end 632, with the first end 631 fixedly connected to the connecting portion 62, and the second end 632 located outside one side of the fixing base 64 remote from the connecting portion 62. The magnetic encoder 661 is opposite to the magnetic block 662, the magnetic block 662 is fixedly connected to the fixing base 64, and the magnetic encoder 661 is fixedly connected to the second end 632, or the magnetic encoder 661 is fixedly connected to the fixing base 64, and the magnetic block 662 is fixedly connected to the second end 632.

In an embodiment of the present disclosure, as shown in FIGS. 34 and 36, the magnetic block 662 is cylindrical; and specifically, the magnetic block 662 may be disc-shaped.

The magnetic encoder 661 is used to detect the relative rotation angle between the magnetic encoder 661 and the magnetic block 662, to determine the rotation angle of the connecting portion 62 relative to the fixing base 64, thereby determining the rotation angle of the connecting portion 62 relative to the fixing base 64 in a contactless and frictionless manner, improving the reliability of the angle detection component 66, and extending the service life of the angle detection component 66.

Specifically, as shown in FIGS. 34 and 36, the connecting portion 62 comprises a plurality of connecting rods; wherein the plurality of connecting rods have an equal length and are parallel to each other, with one end of each of the connecting rods hinged to the fixing base 64 and the other end of the connecting rod hinged to the operation portion 61. A hinge axis between the connecting rod and the fixing base 64 is parallel to a hinge axis between the connecting rod and the operation portion 61, different hinge axes are present between the fixing base 64 and different connecting rods, and different hinge axes are present between the operation portion 61 and different connecting rods. The magnetic encoder 661 and the magnetic block 662 are arranged at a hinge point between any one of the connecting rods and the fixing base 64, the magnetic block 662 is fixedly connected to the fixing base 64, and the magnetic encoder 661 is fixedly connected to the any one connecting rod, or the magnetic encoder 661 is fixedly connected to the fixing base 64, and the magnetic block 662 is fixedly connected to the any one connecting rod, and the hinge axis between the any one connecting rod and the fixing base 64 is aligned with the central axis of the magnetic block 662.

Based on the above, as shown in FIGS. 35 and 36, a specific embodiment may be as follows: a plurality of connecting rods are located outside one side of the fixing base 64, a first rotating shaft 63 is provided at one end of any one of the connecting rods connected to the fixing base 64, the first rotating shaft 63 runs through the fixing base 64, and the fixing base 64 is rotatably connected to the first rotating shaft 63 via a rotating member such as a bearing. The first rotating shaft 63 comprises a first end 631 and a second end 632, with the first end 631 fixedly connected to the any one connecting rod, and the second end 632 located outside one side of the fixing base 64 remote from the any one connecting rod. The magnetic encoder 661 is opposite to the magnetic block 662, the magnetic block 662 is fixedly connected to the fixing base 64, and the magnetic encoder 661 is fixedly connected to the second end 632, or the magnetic encoder 661 is fixedly connected to the fixing base 64, and the magnetic block 662 is fixedly connected to the second end 632. If the connecting portion 62 comprises a first connecting rod 621 and a second connecting rod 622, the any one connecting rod is the first connecting rod 621 or the second connecting rod 622. In FIG. 36, the any one connecting rod is shown as the first connecting rod 621.

FIG. 37 is a sectional view highlighting an angle detection component according to another embodiment of the present disclosure. As shown in FIGS. 34 and 37, in another possible implementation, based on the above solution that the connecting portion 62 comprises a plurality of connecting rods, the magnetic encoder 661 and the magnetic block 662 are arranged at a hinge point between any one of the connecting rods and the operation portion 61, the magnetic encoder 661 is opposite to the magnetic block 662, the magnetic block 662 is fixedly connected to the operation portion 61 and the magnetic encoder 661 is fixedly connected to the any one connecting rod, or the magnetic encoder 661 is fixedly connected to the operation portion 61 and the magnetic block 662 is fixedly connected to the any one connecting rod. The magnetic block 662 is cylindrical, and a hinge axis between the any one connecting rod and the operation portion 61 is aligned with a central axis of the magnetic block 662. The magnetic encoder 661 is configured to detect a rotation angle of the magnetic block 662 relative to the magnetic encoder 661, generate an angle signal for indicating the rotation angle of the magnetic block 662 relative to the magnetic encoder 661, wherein the angle signal is the angle signal for indicating the rotation angle of the connecting portion 62 relative to the fixing base 64, and send the angle signal to the control component 67. It should be noted that, in this case, the angle sensor 60 in FIG. 34 should be arranged at the hinge point between the operation portion 61 and the first connecting rod 621 or at the hinge point between the operation portion 61 and the second connecting rod 622.

Based on the above, as shown in FIGS. 34 and 37, a specific embodiment may be as follows: the operation portion 61 is located outside one side of one of the connecting rods away from the fixing base 64, a second rotating shaft 611 is provided at one end of the operation portion 61 connected to any one of the connecting rods, the second rotating shaft 611 runs through the any one connecting rod, and the any one connecting rod is rotatably connected to the second rotating shaft 611 via a rotating member such as a bearing. The second rotating shaft 611 comprises a third end 6111 and a fourth end 6112, with the third end 6111 fixedly connected to the operation portion 61, and the fourth end 6112 located outside one side of the any one connecting rod away from the operation portion 61. The magnetic encoder 661 is opposite to the magnetic block 662, the magnetic block 662 is fixedly connected to the any one connecting rod, and the magnetic encoder 661 is fixedly connected to the fourth end 6112, or the magnetic encoder 661 is fixedly connected to the any one connecting rod and the magnetic block 662 is fixedly connected to the fourth end 6112. If the connecting portion 62 comprises a first connecting rod 621 and a second connecting rod 622, the any one connecting rod is the first connecting rod 621 or the second connecting rod 622. In FIG. 37, the any one connecting rod is shown as the first connecting rod 621.

With the solution of using a plurality of connecting rods, during the rotation of each of the connecting rods relative to the fixing base 64, the operation portion 61 also rotates synchronously relative to the connecting rod, so that during the rotation of the connecting rod relative to the fixing base 64, a distance between the operation portion 61 and the fixing base 64 changes, but an angle between the operation portion 61 and the fixing base 64 remains unchanged. For example, if a length direction of the operation portion 61 is parallel to a length direction of the body 60, the length direction of the operation portion 61 can substantially remain parallel to the length direction of the body 60 during the rotation of the connecting rod relative to the fixing base 64, and a to-be-cleaned object enters the operation portion 61 at a relatively constant angle, thereby simplifying the structure of a specific component such as a cutting deck or a sweeper disc in the operation portion 61 for a cleaning operation, facilitating production of the operation mechanism, and reducing costs.

Based on the above solution that the connecting portion 62 comprises a plurality of connecting rods, the control component 67 may comprise an elastic return member 671, a driving portion 672, and a position-limiting member 673. Based on this, the driving portion 672 may be mounted on the fixing base 64, the operation portion 61, or each of the connecting rods, specifically as follows:

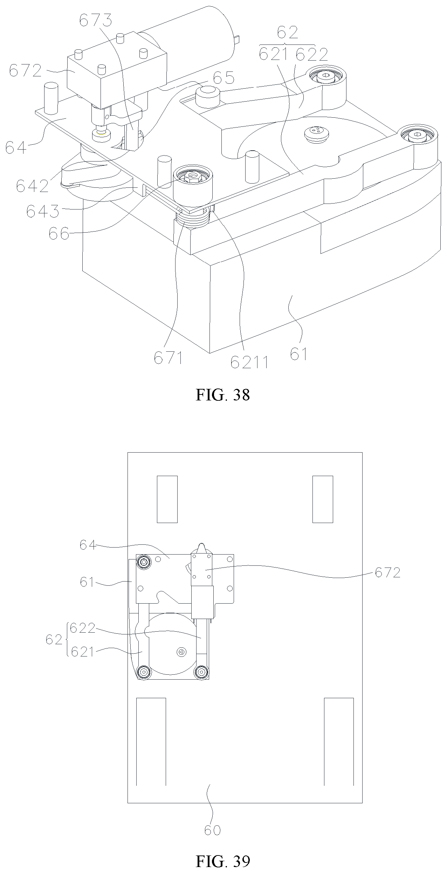

FIG. 38 is a schematic diagram of an operation mechanism with an operation portion in a retracted state according to an embodiment of the present disclosure. As shown in FIGS. 34 and 38, in a possible implementation, the driving portion 672 may be mounted on the fixing base 64: the elastic return member 671 is connected between the connecting rod and the fixing base 64 or between the connecting rod and the operation portion 61, so that the elastic return member 671 is in a compressed state, and the degree of compression of the elastic return member 671 decreases when an angle between the connecting rod and the fixing base 64 increases. The driving portion 672 is a motor, a stator part of the driving portion 672 is fixedly connected to the fixing base 64, and a hinge axis between the fixing base 64 and any one of the connecting rods is aligned with an axis of an output shaft of the driving portion 672; a spacing between the position-limiting member 673 and a rotation axis of the output shaft is greater than zero, the position-limiting member 673 is fixedly connected to the output shaft, the position-limiting member 673 abuts against any one of the connecting rods, and the position-limiting member 673 is configured to prevent reduction in compression of the elastic return member 671.

As shown in FIGS. 34 and 38, the driving portion 672 is configured to control, in response to the rotation angle indicated by the angle signal reaching a first angle threshold after the output shaft of the driving portion 672 starts rotation, the output shaft to stop rotation, so that the angle between the connecting rod and the fixing base 64 is within a first preset angle range. The driving portion 672 is further configured to control, in response to the rotation angle indicated by the angle signal reaching a second angle threshold after the output shaft of the driving portion 672 starts rotation, the output shaft to stop rotation, so that the angle between the connecting rod and the fixing base 64 is within a second preset angle range. The motor in the embodiments of the present disclosure may specifically be, e.g., a self-locking motor, and the controlling the output shaft to stop rotation means that the self-locking motor starts self-locking.

In an embodiment of the present disclosure, as shown in FIGS. 34 and 38, the connecting portion 62 comprises two connecting rods, namely a first connecting rod 621 and a second connecting rod 622 respectively; the elastic return member 671 may be arranged between the first connecting rod 621 and the fixing base 64, or between the second connecting rod 622 and the fixing base 64, or between the first connecting rod 621 and the operation portion 61, or between the second connecting rod 622 and the operation portion 61, which is not limited in the embodiments of the present disclosure, and is introduced below when the elastic return member 671 is arranged between the first connecting rod 621 and the fixing base 64.

As shown in FIGS. 34 and 38, the elastic reset member 671 may be an elastic body, such as a torsion spring, a rubber block, or a spring. Preferably, the elastic reset member 671 is a torsion spring comprising two pins, with one of the pins of the torsion spring fixedly connected to or abutting against the first connecting rod 621, and the other pin of the torsion spring fixedly connected to or abutting against the fixing base 64. For example, a first stopper 6211 is fixedly connected to the first connecting rod 621, a second stopper 643 is fixedly connected to the fixing base 64, and the torsion spring is sleeved outside the first rotating shaft 63, with one pin of the torsion spring abutting against the first stopper 6211 and the other pin of the torsion spring abutting against the second stopper 643.

As shown in FIGS. 34 and 38, a hinge axis between the fixing base 64 and the second connecting rod 622 is aligned with an axis of the output shaft of the driving portion 672, the fixing base 64 is provided with a first clearance hole 65, a projection of the first clearance hole 65 on a plane parallel to the fixing base 64 is arc-shaped, the circle center of the first clearance hole 65 is on the output shaft of the driving portion 672, and the position-limiting member 673 is lath-shaped. The embodiments of the present disclosure do not impose any limitation on specific shapes of the first clearance hole 65 and the position-limiting member 673. The position-limiting member 673 is parallel to the output shaft of the driving portion 672, one end of the position-limiting member 673 is fixedly connected to the output shaft and spaced from the output shaft by greater than zero, and the other end of the position-limiting member 673 runs through the fixing base 64 via the first clearance hole 65, and abuts against a side surface of the second connecting rod 622 proximate to the first connecting rod 621.

The first angle threshold may be greater than or equal to 0 degrees, and the first angle threshold may be less than 90 degrees. The second angle threshold may be greater than 0 degrees and less than 90 degrees, and the second angle threshold is greater than the first angle threshold. For example, the first angle threshold is 0 degrees and the second angle threshold is 30 degrees, or the first angle threshold is 0 degrees and the second angle threshold is 60 degrees, or the first angle threshold is 20 degrees and the second angle threshold is 60 degrees, etc.

FIG. 39 is a schematic diagram of a smart traveling device with an operation portion in a retracted state according to an embodiment of the present disclosure. As shown in FIGS. 38 and 39, when the operation portion 61 is in the retracted state, an angle detected by the magnetic encoder 661 is the first angle threshold. In this case, if the operation portion 61 is to be adjusted to an extended state, the output shaft of the driving portion 672 may be controlled to rotate forward, to drive the position-limiting member 673 to move in a direction remote from the second connecting rod 622. In this case, because the torsion spring is in a compressed state, the torsion spring pushes the second connecting rod 622 to move in a direction proximate to the position-limiting member 673, and an angle between the first connecting rod 621 and the fixing base 64 and an angle between the second connecting rod 622 and the fixing base 64 gradually increase, so that the operation portion 61 moves in a direction remote from the fixing base 64, until the rotation angle indicated by the angle signal reaches the second angle threshold. In this case, the output shaft of the driving portion 672 stops rotation, and the operation portion 61 is in the extended state.

As shown in FIGS. 34 and 35, when the operation portion 61 is in the extended state, if the operation portion 61 is to be adjusted to the retracted state, the output shaft of the driving portion 672 may be controlled to reversely rotate to drive the portion-limiting member 673 to move in a direction of squeezing the second connecting rod 622. In this case, the angle between the first connecting rod 621 and the fixing base 64 and the angle between the second connecting rod 622 and the fixing base 64 gradually decrease, so that the operation portion 61 moves in a direction proximate to the fixing base 64, until the rotation angle indicated by the angle signal reaches the first angle threshold. In this case, the output shaft of the driving portion 672 stops rotation, and the operation portion 61 is in the retracted state.

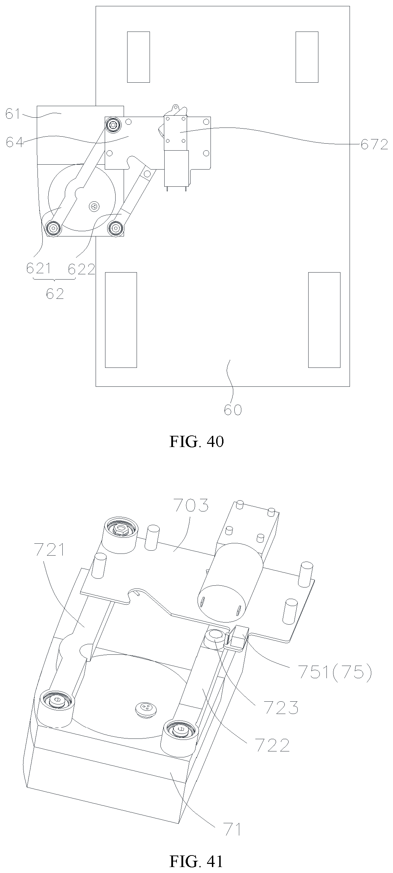

As shown in FIGS. 39 and 40, when the operation portion 61 is in the extended state, the body 60 may move to perform a boundary-following cleaning operation. In this case, the body 60 drives the fixing base 64 to move in a direction parallel to the moving direction of the body 60, and then drives the operation portion 61 to move in a direction parallel to the moving direction of the body 60. In this case, even if a large spacing is present between the body 60 and a boundary, the operation portion 61 can still clean a region between the body 60 and the boundary, thereby optimizing an operation effect of the boundary-following cleaning operation, expanding an operation region, reducing the possibility of reworking and manual operation, and improving the operation efficiency.

A minimum angle in the first preset angle range is the first angle threshold or less than the first angle threshold, a maximum angle in the first preset angle range is the first angle threshold, a minimum angle in the second preset angle range is equal to the minimum angle in the first preset angle range, and a maximum angle in the second preset angle range is the second angle threshold.

In an example, as shown in FIGS. 34 and 38, hole walls at both ends of the first clearance hole 65 along a length direction parallel to the fixing base 64 are a fifth end 641 and a sixth end 642 respectively. When the operation portion 61 is switched from the retracted state to the extended state, the position-limiting member 673 abuts against the fifth end 641, and when the operation portion 61 is switched from the extended state to the retracted state, the position-limiting member 673 abuts against the sixth end 642. Based on the above, the minimum angle in the first preset angle range is the first angle threshold. For example, the first angle threshold is 0 degrees, and the minimum angle in the first preset angle range is 0 degrees.

In another example, as shown in FIGS. 34 and 38, the hole walls at both ends of the first clearance hole 65 along a length direction parallel to the fixing base 64 are a fifth end 641 and a sixth end 642 respectively, wherein the length direction is the length direction indicated by the dotted line t in FIG. 34. When the operation portion 61 is switched from the retracted state to the extended state, a distance between the position-limiting member 673 and the fifth end 641 along the length direction is a first distance, and a distance between the position-limiting member 673 and the sixth end 642 along the length direction is a second distance. When the operation portion 61 is switched from the extended state to the retracted state, a distance between the position-limiting member 673 and the fifth end 641 along the length direction is a third distance, and a distance between the position-limiting member 673 and the sixth end 642 along the length direction is a fourth distance, wherein the third distance is greater than the first distance, the second distance is greater than the fourth distance, and the first distance and the fourth distance are each greater than 0. Based on the above, the minimum angle in the first preset angle range is a rotation angle of the magnetic block 662 relative to the magnetic encoder 661 detected by a magneto-dependent sensor when the position-limiting member 673 abuts against the fifth end 641. In this case, the minimum angle in the first preset angle range is less than the first angle threshold. For example, the first angle threshold is 5 degrees, and the minimum angle in the first preset angle range is 0 degrees.

When the operation portion 61 is in the extended state, the operation portion 61 moves in a direction parallel to the moving direction of the body 60. If an immovable obstacle is present in front of the operation portion 61, the body 60 continues to move forward after the operation portion 61 touches the obstacle. In this case, the angle between the connecting rod and the fixing base 64 decreases within the second preset angle range, that is, the operation portion 61 moves in a direction proximate to the fixing base 64 due to a pushing force exerted by the obstacle, until the obstacle does not block forward movement of the operation portion 61. In this case, the operation portion 61 continues to move forward in close contact with the obstacle to perform an operation, thereby reducing the possibility that the smart traveling device gets trapped and damaged during an operation process.

When the operation portion 61 is in the retracted state, if the operation portion 61 is subjected to a force that reduces the angle between the connecting rod and the fixing base 64 due to an external force such as collision, the angle between the connecting rod and the fixing base 64 decreases within the first preset angle range until the angle between the connecting rod and the fixing base 64 reaches the minimum angle within the first preset angle range, thereby reducing the possibility of damaging the operation mechanism due to collision or other reasons when the operation portion 61 is in the retracted state.

In another possible implementation, the driving portion 672 may be mounted on the operation portion 61: the elastic return member 671 is connected between the connecting rod and the fixing base 64 or between the connecting rod and the operation portion 61, the elastic return member 671 is in a compressed state, and the degree of compression of the elastic return member 671 decreases when an angle between the connecting rod and the fixing base 64 increases. The driving portion 672 is a motor, a stator part of the driving portion 672 is fixedly connected to the operation portion 61, and a hinge axis between the operation portion 61 and any one of the connecting rods is aligned with an axis of an output shaft of the driving portion 672; a spacing between the position-limiting member 673 and a rotation axis of the output shaft is greater than zero, the position-limiting member 673 is fixedly connected to the output shaft, the position-limiting member 673 abuts against any one of the connecting rods, and the position-limiting member 673 is configured to prevent reduction in compression of the elastic return member 671.

The driving portion 672 is configured to control, in response to the rotation angle indicated by the angle signal reaching a first angle threshold after the output shaft of the driving portion 672 starts rotation, the output shaft to stop rotation, so that the angle between the connecting rod and the fixing base 64 is within a first preset angle range. The driving portion 672 is further configured to control, in response to the rotation angle indicated by the angle signal reaching a second angle threshold after the output shaft of the driving portion 672 starts rotation, the output shaft to stop rotation, so that the angle between the connecting rod and the fixing base 64 is within a second preset angle range.

In an embodiment of the present disclosure, similar to the above driving portion 672 mounted on the fixing base 64, the driving portion 672 may be further mounted on the operation portion 61. Based on the above, if a hinge axis between the operation portion 61 and the first connecting rod 621 is aligned with an axis of the output shaft of the driving portion 672, the position-limiting member 673 may abut against a side surface of the first connecting rod 621 proximate to the second connecting rod 622, and if a hinge axis between the operation portion 61 and the second connecting rod 622 is aligned with the axis of the output shaft of the driving portion 672, the position-limiting member 673 may abut against a side surface of the second connecting rod 622 remote from the first connecting rod 621. In addition, the first clearance hole 65 may be disposed on the operation portion 61.

In still another possible implementation, the driving portion 672 may be mounted on the connecting rod: the elastic return member 671 is connected between the connecting rod and the fixing base 64 or between the connecting rod and the operation portion 61, the elastic return member 671 is in a compressed state, and the degree of compression of the elastic return member 671 decreases when an angle between the connecting rod and the fixing base 64 increases. The driving portion 672 is a motor, a stator part of the driving portion 672 is fixedly connected to any one of the connecting rods, and a hinge axis between the operation portion 61 and any one of the connecting rods is aligned with an axis of an output shaft of the driving portion 672, or a hinge axis between the fixing base 64 and any one of the connecting rods is aligned with the axis of the output shaft of the driving portion 672. A spacing between the position-limiting member 673 and a rotation axis of the output shaft is greater than zero, the position-limiting member 673 is fixedly connected to the output shaft, the position-limiting member 673 abuts against the operation portion 61, or the position-limiting member 673 abuts against the fixing base 64, and the position-limiting member 673 is configured to prevent reduction in compression of the elastic return member 671.

The driving portion 672 is configured to control, in response to the rotation angle indicated by the angle signal reaching a first angle threshold after the output shaft of the driving portion 672 starts rotation, the output shaft to stop rotation, so that the angle between the connecting rod and the fixing base 64 is within a first preset angle range. The driving portion 672 is further configured to control, in response to the rotation angle indicated by the angle signal reaching a second angle threshold after the output shaft of the driving portion 672 starts rotation, the output shaft to stop rotation, so that the angle between the connecting rod and the fixing base 64 is within a second preset angle range, wherein the first angle threshold is less than the second angle threshold, a minimum angle in the first preset angle range is equal to a minimum angle in the second preset angle range, and a maximum angle in the first preset angle range is less than a maximum angle in the second preset angle range.

In an embodiment of the present disclosure, similar to the above driving portion 672 mounted on the fixing base 64 and the driving portion 672 mounted on the operation portion 61, the driving portion 672 may be further mounted on the connecting rod.

Based on the above, if a hinge axis between the operation portion 61 and the first connecting rod 621 is aligned with an axis of the output shaft of the driving portion 672, or a hinge axis between the fixing base 64 and the first connecting rod 621 is aligned with the axis of the output shaft of the driving portion 672, the first clearance hole 65 may be disposed on the first connecting rod 621, and if a hinge axis between the operation portion 61 and the second connecting rod 622 is aligned with the axis of the output shaft of the driving portion 672, or a hinge axis between the fixing base 64 and the second connecting rod 622 is aligned with the axis of the output shaft of the driving portion 672, the first clearance hole 65 may be disposed on the second connecting rod 622.

If the hinge axis between the operation portion 61 and the first connecting rod 621 is aligned with the axis of the output shaft of the driving portion 672, or the hinge axis between the operation portion 61 and the second connecting rod 622 is aligned with the axis of the output shaft of the driving portion 672, the position-limiting member 673 abuts against the operation portion 61, and if the hinge axis between the fixing base 64 and the first connecting rod 621 is aligned with the axis of the output shaft of the driving portion 672, or the hinge axis between the fixing base 64 and the second connecting rod 622 is aligned with the axis of the output shaft of the driving portion 672, the position-limiting member 673 abuts against the fixing base 64.

In a possible implementation, the connecting portion 62 may comprise two connecting rods. For example, as shown in FIG. 34, the connecting portion 62 comprises a first connecting rod 621 and a second connecting rod 622. In this case, the number of connecting rods is small, thereby improving the production efficiency of the operation mechanism, and reducing costs.

An embodiment of the present disclosure further provides a smart traveling device, which will be introduced in detail below with reference to a plurality of embodiments.

As shown in FIGS. 35 and 39, the smart traveling device comprises an operation mechanism and a body 60, wherein the operation mechanism may be the operation mechanism in any one embodiment of the present disclosure.

The operation mechanism comprises a connecting portion 62, a fixing base 64, an operation portion 61, an angle detection component 66, and a control component 67; wherein the fixing base 64 is fixedly connected to the body 60; one end of the connecting portion 62 is connected to the fixing base 64, and the other end of the connecting portion 62 is connected to the operation portion 61; the connecting portion 62 is configured to rotate relative to the fixing base 64 to drive the operation portion 61 to move relative to the fixing base 64; and the angle detection component 66 is configured to detect a rotation angle of the connecting portion 62 relative to the fixing base 64, and send an angle signal for indicating the rotation angle to the control component 67.

The control component 67 is configured to control, in response to the rotation angle indicated by the angle signal reaching a first angle threshold, the connecting portion 62 to stop rotation relative to the fixing base 64, so that the angle between the connecting portion 62 and the fixing base 64 is within a first preset angle range, and is further configured to control, in response to the rotation angle indicated by the angle signal reaching a second angle threshold, the connecting portion 62 to stop rotation relative to the fixing base 64, so that the angle between the connecting portion 62 and the fixing base 64 is within a second preset angle range, wherein the first angle threshold is less than the second angle threshold, a minimum angle in the first preset angle range is equal to a minimum angle in the second preset angle range, and a maximum angle in the first preset angle range is less than a maximum angle in the second preset angle range.

When the angle between the connecting portion 62 and the fixing base 64 is equal to the maximum angle in the first preset angle range, a spacing between the operation portion 61 and the body 60 is a first spacing, and when the angle between the connecting portion 62 and the fixing base 64 is equal to the maximum angle in the second preset angle range, a maximum spacing between the operation portion 61 and the body 60 is a second spacing, wherein the second spacing is greater than the first spacing.

In a possible implementation, the connecting portion 62 comprises a plurality of connecting rods, wherein the plurality of connecting rods have an equal length and are parallel to each other, with one end of each of the connecting rods hinged to the fixing base 64 and the other end of the connecting rod hinged to the operation portion 61. A hinge axis between the connecting rod and the fixing base 64 is parallel to a hinge axis between the connecting rod and the operation portion 61, different hinge axes are present between the fixing base 64 and different connecting rods, and different hinge axes are present between the operation portion 61 and different connecting rods. Based on the above:

when the angle between the connecting rod and the fixing base 64 is equal to the maximum angle in the first preset angle range, the spacing between the operation portion 61 and the body 60 is the first spacing, and when the angle between the connecting rod and the fixing base 64 is equal to the maximum angle in the second preset angle range, the maximum spacing between the operation portion 61 and the body 60 is the second spacing, wherein the second spacing is greater than the first spacing.

The spacing between the operation portion 61 and the body 60 may be a distance between a projection of an edge of the operation portion 61 proximate to an operation boundary and a projection of an edge of the body 60 proximate to the operation boundary on a target plane during a boundary operation of the smart traveling device, wherein the target plane is a plane perpendicular to a rotation axis of rotation of the connecting rod relative to the fixing base 64. For example, L in FIG. 35 is the spacing between the operation portion 61 and the body 60. When the operation portion 61 is in the retracted state, the spacing between the operation portion 61 and the body 60 is the first spacing. When the operation portion 61 is in the extended state, the spacing between the operation portion 61 and the body 60 is the second spacing. Specific values of the first spacing and the second spacing may be preset based on operation requirements. For example, the first spacing is 0, and the second spacing is 50 cm or equal to a width of the operation portion 61, etc. In addition, the spacing between the operation portion 61 and the body 60 may be a spacing between the center point of the operation portion 61 and the center point of the body 60, or may be a spacing distance between the operation portion 61 and the body 60, which is not limited in the embodiments of the present disclosure.

When the maximum spacing between the operation portion 61 and the body 60 is the second spacing, that is, the operation portion 61 is in the extended state, the body 60 can move to perform a boundary-following cleaning operation. In this case, the body 60 drives the fixing base 64 to move in a direction parallel to the moving direction of the body 60, and then drives the operation portion 61 to move in a direction parallel to the moving direction of the body 60. In this case, even if a large spacing is present between the body 60 and a boundary, the operation portion 61 can still clean a region between the body 60 and the boundary, thereby optimizing an operation effect of the boundary-following cleaning operation, expanding an operation region, reducing the possibility of reworking and manual operation, and improving the operation efficiency.

In a possible implementation, as shown in FIGS. 34, 35, and 39, the control component 67 is configured to send an clearance signal to the body 60 in response to receiving an angle signal with an indicated rotation angle less than a third angle threshold, when the rotation angle indicated by the angle signal reaches the second angle threshold and the connecting portion 62 stops rotation relative to the fixing base 64, i.e., the output shaft of the driving portion 672 is in a rotation stop state, wherein the third angle threshold is greater than the first angle threshold and less than the second angle threshold, and the clearance signal is used to instruct a traveling mechanism mounted on the body 60 to move in a direction remote from the operation portion 61, to drive the body 60 to move in a direction remote from the operation portion 61.

The control component 67 is further configured to send a stop-clearance signal to the body 60 in response to receiving an angle signal with an indicated rotation angle greater than or equal to the third angle threshold after sending the clearance signal to the body 60, wherein the stop-clearance signal is used to instruct the traveling mechanism to stop moving in a direction remote from the operation portion 61, so that the body 60 stops moving in a direction remote from the operation portion 61.

In an embodiment of the present disclosure, a processor may be connected to the control component 67, and the control component 67 may comprise a movement control. Based on the above, when the rotation angle indicated by the angle signal reaches the second angle threshold, and the output shaft of the driving portion 672 is in a rotation stop state, that is, when the working unit 61 is in the extended state, the operation portion 61 moves in a direction parallel to a forward direction of the body 60. If an immovable obstacle is present in front of the operation portion 61, the body 60 continues to move forward after the operation portion 61 touches the obstacle. In this case, the angle between the connecting rod and the fixing base 64 decreases within the second preset angle range. For example, FIG. 40 is schematic diagram of a smart traveling device with an operation portion touching an obstacle according to an embodiment of the present disclosure. As shown in FIG. 40, the operation portion 61 moves in a direction proximate to the fixing base 64 due to a pushing force exerted by the obstacle, until the magnetic encoder 661 detects an angle signal less than the third angle threshold. In this case, the processor sends a control signal to the movement control, so that the movement control controls the traveling mechanism to drive the body 60 to move in a direction away from its operation region, thereby increasing the angle between the connecting rod and the fixing base 64 within the second preset angle range. In this case, the operation portion 61 continues to move forward in close contact with the obstacle to perform an operation, and a squeezing force exerted by the obstacle on the operation portion 61 decreases, i.e., a friction force between the obstacle and the operation portion 61 decreases, thereby reducing the possibility that the smart traveling device gets trapped or damaged during an operation process. The traveling mechanism may be a mechanism mounted below the body, such as a chassis or a base comprising a roller.

In a possible implementation, the control component 67 is configured to send an extension signal to the body 60 in response to receiving an angle signal with an indicated rotation angle greater than a fourth angle threshold, when the rotation angle indicated by the angle signal reaches the second angle threshold and the connecting portion 62 stops rotation relative to the fixing base 64, i.e., the output shaft of the driving portion 672 is in a rotation stop state, wherein the fourth angle threshold is greater than the first angle threshold and less than the second angle threshold, and the extension signal is used to instruct the traveling mechanism mounted on the body 60 to move in a direction proximate to the operation portion 61, to drive the body 60 to move in a direction proximate to the operation portion 61; and

the control component 67 is further configured to send an extension stop signal to the body 60 in response to receiving an angle signal with an indicated rotation angle less than or equal to the fourth angle threshold after sending the extension signal to the body 60, wherein the extension stop signal is used to instruct driving the traveling mechanism to stop moving in a direction proximate to the operation portion 61, so that the body 60 stops moving in a direction proximate to the operation portion 61.

In an embodiment of the present disclosure, a processor may be connected to the control component 67, and the body 60 comprises a movement control connected to the traveling mechanism. Based on the above, when the rotation angle indicated by the angle signal reaches the second angle threshold, and the output shaft of the driving portion 672 is in the rotation stop state, that is, when the operation portion 61 is in the extended state, the operation portion 61 moves in a direction parallel to the forward direction of the body 60. If no obstacle is present in front of the operation portion 61 or an obstacle is spaced away from the body 60, the angle between the connecting rod and the fixing base 64 is greater than the fourth angle threshold. In this case, the processor sends an extension signal to the movement control, and then the movement control controls the traveling mechanism to drive the body 60 to move in a direction proximate to the operation portion 61, until the obstacle is removed, that is, the control component 67 receives an angle signal with an indicated rotation angle less than or equal to the fourth angle threshold. Further, during the boundary-following cleaning operation, the smart traveling device can expand cleaning outward as much as possible to optimize the effect of the cleaning operation proximate to a physical boundary.

In a possible implementation, the control component 67 is further configured to send an extension stop signal to the body 60 in response to the body 60 moves in a direction proximate to the operation portion 61 by a distance greater than a preset distance after sending the extension signal to the body 60. The preset distance may be, e.g., 10 cm, 5 cm, or 20 cm. The embodiments of the present disclosure do not impose any limitation on a specific value of the preset distance.

In an embodiment of the present disclosure, since the receipt of the extension signal by the movement control, and before the control component 67 receives an angle signal with an indicated rotation angle less than or equal to the fourth angle threshold, the processor can detect a movement distance of the body 60 in a direction proximate to the operation portion 61, and determine whether the distance is greater than the preset distance. After the distance is greater than the preset distance, the processor can send an extension stop signal to the traveling mechanism via the control component 67, thereby reducing the possibility that the body 60 moves in a direction proximate to the operation portion 61 by a too large distance, reducing the risk of damaging the smart traveling device due to drop or other reasons, and ensuring the safety of the smart traveling device as much as possible.

In a possible implementation, the processor comprised in the smart traveling device is configured to obtain a map of an operation region of the smart traveling device, and determine a boundary operation path of an operation of the smart traveling device along a boundary of the operation region based on the operation region indicated by the map of the operation region.

The processor is further configured to correct the map of the operation region based on the rotation angle and rotation radius of the connecting portion 62 relative to the fixing base 64 during the operation of the smart traveling device based on the boundary operation path, so as to correct the operation region.

Before the smart traveling device performs the boundary-following cleaning operation, the smart traveling device may be manually remotely controlled to move along a boundary of a to-be-operated region, or the smart traveling device can automatically move along the boundary of the to-be-operated region using its own recognition function, to collect position information of a plurality of path points, and then can obtain a map of the operation region for indicating the operation region based on the collected position information, or can further directly obtain the map of the operation region from an existing electronic map. The embodiments of the present disclosure do not impose any limitation on the specific mode of obtaining the map of the operation region.

After obtaining the map of the operation region, the processor can determine the boundary operation path based on the boundary of the operation region, for example, may use a line obtained by contracting the boundary of the operation region inward by half of the width of the body 60 as the boundary operation path. The embodiments of the present disclosure do not impose any limitation on the specific method of determining the boundary operation path.

Then, the processor can correct the map of the operation region based on the rotation angle and rotation radius of the connecting portion 62 relative to the fixing base 64 during the operation of the smart traveling device based on the boundary operation path, so as to correct the operation region. For example, if the angle detection component 66 detects a small rotation angle of the connecting portion 62 relative to the fixing base 64, the boundary of the operation region is contracted inward toward the operation region from a position corresponding to a current position of the smart traveling device; and if the angle detection component 66 detects a large rotation angle of the connecting portion 62 relative to the fixing base 64, the boundary of the operation region is extended outward toward the operation region from a position corresponding to a current position of the smart traveling device, thereby correcting the operation region, and then correcting the map of the operation region.

In a possible implementation, the processor is further configured to correct the boundary operation path based on the rotation angle and rotation radius of the connecting portion 62 relative to the fixing base 64 during the operation process of the smart traveling device based on the boundary operation path. For example, after contracting a boundary segment of the boundary of the operation region inward toward an original operation region based on the rotation angle and rotation radius of the connecting portion 62 relative to the fixing base 64, the processor can contract inward a part of the boundary operation path corresponding to the boundary segment, to correct the boundary operation path.

An embodiment of the present disclosure further provides a control method, which is introduced in detail below with reference to a plurality of embodiments.

This control method is applied to an operation mechanism comprising the connecting portion 62 and the fixing base 64, wherein the operation mechanism is applied to a smart traveling device. Specifically, the operation mechanism may be the operation mechanism according to any one embodiment of the present disclosure, and the control method may be applied to the control component 67 comprised in the operation mechanism.

The control method comprises:
controlling, in response to a rotation angle indicated by an angle signal reaching an angle threshold, the connecting portion 62 to stop rotation relative to the fixing base 64, so that an angle between the connecting portion 62 and the fixing base 64 is within a preset angle range, wherein the operation mechanism further comprises an operation portion 61 and an angle detection component 66, one end of the connecting portion 62 is connected to the fixing base 64, and the other end of the connecting portion 62 is connected to the operation portion 61. The connecting portion 62 is configured to rotate relative to the fixing base 64 to drive the operation portion 61 to move relative to the fixing base 64, the rotation angle indicated by the angle signal is a rotation angle of the connecting portion 62 relative to the fixing base 64, and the angle detection component 66 is configured to detect the rotation angle and generate the angle signal.

In a possible implementation, the controlling, in response to the rotation angle indicated by the angle signal reaching the angle threshold, the connecting portion 62 to stop rotation relative to the fixing base 64, so that the angle between the connecting portion 62 and the fixing base 64 is within the preset angle range comprises:
controlling, in response to the rotation angle indicated by the angle signal reaching a first angle threshold, the connecting portion 62 to stop rotation relative to the fixing base 64, so that the angle between the connecting portion 62 and the fixing base 64 is within the first preset angle range; and
controlling, in response to the rotation angle indicated by the angle signal reaching a second angle threshold, the connecting portion 62 to stop rotation relative to the fixing base 64, so that the angle between the connecting portion 62 and the fixing base 64 is within a second preset angle range, wherein the first angle threshold is less than the second angle threshold, a minimum angle in the first preset angle range is equal to a minimum angle in the second preset angle range, and a maximum angle in the first preset angle range is less than a maximum angle in the second preset angle range.

In a possible implementation, when the angle between the connecting portion 62 and the fixing base 64 is equal to the maximum angle in the first preset angle range, a spacing between the operation portion 61 and the body 60 comprised in the smart traveling device is a first spacing, and when the angle between the connecting portion 62 and the fixing base 64 is equal to the maximum angle in the second preset angle range, a maximum spacing between the operation portion 61 and the body 60 is a second spacing, wherein the second spacing is greater than the first spacing.

In a possible implementation, the control method further comprises:
sending an clearance signal to the body 60 in response to receiving an angle signal with an indicated rotation angle less than a third angle threshold, when the rotation angle indicated by the angle signal reaches the second angle threshold and the connecting portion 62 stops rotation relative to the fixing base 64, wherein the third angle threshold is greater than the first angle threshold and less than the second angle threshold, and the clearance signal is used to instruct a traveling mechanism mounted on the body 60 to move in a direction remote from the operation portion 61, to drive the body 60 to move in a direction remote from the operation portion 61; and
sending an avoidance stop signal to the body 60 in response to receiving an angle signal with an indicated rotation angle greater than or equal to the third angle threshold after sending the stop-clearance signal to the body 60, wherein the e stop-clearance signal is used to instruct the traveling mechanism to stop moving in a direction remote from the operation portion 61, so that the body 60 stops moving in a direction remote from the operation portion 61.

In a possible implementation, the control method further comprises:
sending an extension signal to the body 60 in response to receiving an angle signal with an indicated rotation angle less than a fourth angle threshold, when the rotation angle indicated by the angle signal reaches the second angle threshold and the connecting portion 62 stops rotation relative to the fixing base 64, wherein the fourth angle threshold is greater than the first angle threshold and less than the second angle threshold, and the extension signal is used to instruct the traveling mechanism mounted on the body 60 to move in a direction proximate to the operation portion 61, to drive the body 60 to move in a direction proximate to the operation portion 61; and
sending an extension stop signal to the body 60 in response to receiving an angle signal with an indicated rotation angle less than or equal to the fourth angle threshold after sending the extension signal to the body 60, wherein the extension stop signal is used to instruct the traveling mechanism to stop moving in a direction proximate to the operation portion 61, so that the body 60 stops moving in a direction proximate to the operation portion 61.

In a possible implementation, the control method further comprises:
sending an extension stop signal to the body 60, in response to a movement distance of the body 60 in a direction proximate to the operation portion 61 being greater than a preset distance, after sending the extension signal to the body 60.

Referring to FIGS. 41 to 45, the present disclosure further provides a smart traveling device, comprising a body 70, an operation mechanism 71, a connecting mechanism 72, a position-limiting member 741, and a position detection mechanism 75; wherein the connecting mechanism 72 has one end pivotally connected to the body 70 and the other end connected to the operation mechanism 71, and the connecting mechanism 72 can drive the operation mechanism 71 to reciprocate between a retracted position and a released position; and when the operation mechanism 71 is at the retracted position, the operation mechanism 71 is spaced from a centerline of the body 70 by a first distance P1; when the connecting mechanism 72 is at the released position, the operation mechanism 71 is spaced from the centerline of the body 70 by a second distance P2, wherein the first distance P1 is smaller than the second distance P2; and
the position-limiting member 741 abuts against the connecting mechanism 72 and can reciprocate between an clearance position and a stop position, wherein the position-limiting member 741 at the clearance position allows the connecting mechanism 72 to drive the operation mechanism 71 to reciprocate between the released position and the retracted position. During a movement process of the position-limiting member 741 from the clearance position toward the stop position, the position-limiting member 741 can drive the connecting mechanism 72 to move, to drive the operation mechanism 71 to move from the released position to the retracted position. The position detection mechanism 75 can detect whether the operation mechanism 71 reaches the retracted position, the position detection mechanism 75 generates a first arrival signal when the operation mechanism 71 reaches the retracted position, the position-limiting member 741 stops driving the connecting mechanism based on the first arrival signal and stays at the stop position, and/or the position detection mechanism 75 can detect whether the operation mechanism 71 reaches the released position, the position detection mechanism 75 generates a second arrival signal when the operation mechanism 71 reaches the released position, and the position-limiting member 741 stays at the clearance position based on the second arrival signal.

The centerline of the body 70 may refer to a centerline of the body in a width or length direction of the smart traveling device.

The projection of the operation mechanism 71 onto the ground refers to: a projection of the operation mechanism 71 onto the ground along a height direction of the smart traveling device. Similarly, the projection of the body 70 onto the ground refers to: a projection of the body 70 onto the ground along the height direction of the smart traveling device. The height direction of the smart traveling device may be understood as that: if the ground is parallel to the horizontal plane, the height direction of the smart traveling device is parallel to the gravity direction; and if the ground is an inclined plane, that is, at a preset angle β relative to the horizontal plane, the height direction of the smart traveling device forms an angle with the gravity direction, and the angle is equal to the preset angle β.

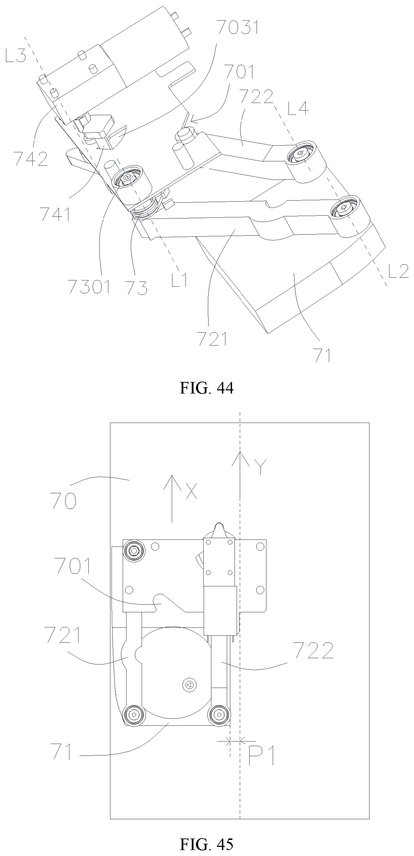

The relative position relationship between the operation mechanism 71 and the body 70 may be as follows:
when the operation mechanism 71 is at the retracted position, at least a part of a projection of the operation mechanism 71 onto the ground is located in a projection of the body 70 onto the ground. That is to say, it can be understood as that: at least a part of the projection of the operation mechanism 71 onto the ground overlaps with the projection of the body 70 onto the ground. In this way, when the operation mechanism 71 is at the retracted position, at least a part of the operation mechanism 71 is hidden in a space between the body 70 and the ground, or at least a part of the operation mechanism 71 is hidden inside the body 70. In an ultimate state, the operation mechanism 71 is entirely hidden in the space between the body 70 and the ground or hidden inside the body 70, thereby reducing the overall size of the smart traveling device, facilitating storage, and reducing the risk of bumping the operation mechanism 71. In a case as shown in FIG. 45, when the operation mechanism 71 is at the retracted position, the projection of the operation mechanism 71 onto the ground is entirely located in the projection of the body onto the ground, with a distance P1 between the operation mechanism 71 and the centerline of the body 70.

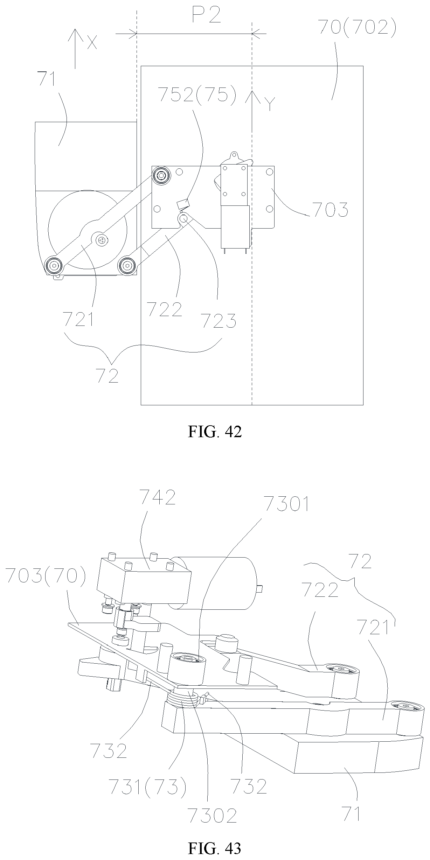

When the operation mechanism 71 is at the released position, the projection of the operation mechanism 71 onto the ground may still be located in the projection of the body 70 onto the ground, or at least a part of the projection of the operation mechanism 71 onto the ground is located outside the projection of the body 70 onto the ground. The at least a part of the projection of the operation mechanism 71 onto the ground is located outside the projection of the body 70 onto the ground, which may be understood as: no overlapping region between the projection of the at least a part of the operation mechanism 71 onto the ground and the projection of the body 70 onto the ground. In this way, when the operation mechanism 71 is driven to the released position, at least a part of the operation mechanism 71 extends to the outside of the body 70 in the width or length direction of the smart traveling device. In an ultimate state, the projection of the operation mechanism 71 onto the ground is entirely located outside the projection of the body 70 onto the ground, that is, the operation mechanism 71 is spaced apart from the body 70 in the width or length direction of the smart traveling device. In a case as shown in FIG. 42, when the operation mechanism 71 is at the retracted position, the projection of the operation mechanism 71 onto the ground is entirely located outside the projection of the body onto the ground, with a distance P2 between the operation mechanism 71 and the centerline of the body 70.

Based on the above technical solutions, first, under the action of the power mechanism 73, the operation mechanism 71 moves to the released position, to perform a corresponding action on the target object. Then, when the operation mechanism 71 encounters an obstacle, the operation mechanism 71 and the connecting mechanism 72 are pushed by the obstacle to pivot together toward the body 70, thereby achieving the obstacle avoidance effect. On the other hand, the position-limiting member 741 and the connecting mechanism 72 can restrict the operation mechanism 71 to the retracted position, thereby hiding the operation mechanism 71. The position detection mechanism 75 can function for position detection, so as to stop driving in time based on the first arrival signal when the operation mechanism 71 is driven to the retracted position by the position-limiting member 741, thereby avoiding damaging the position-limiting member 741 or the connecting mechanism 72 because the position-limiting member 741 continues to maintain its original driving direction and exert a force to the connecting mechanism 72; and when the operation mechanism 71 reaches the released position, the position-limiting member 741 may stop moving in time based on the second arrival signal, thereby not only reducing power waste, but also avoiding damaging the position-limiting member 741 because the position-limiting member continues to move in its original direction.

In an example, after the operation mechanism 71 moves to the released position, the position-limiting member 741 continues to rotate a certain distance before reaching the clearance position. In this way, the smart traveling device comprising the operation mechanism is used to prevent the connecting mechanism 72 from colliding with the position-limiting member 741 when the operation mechanism returns toward the released position.

In a possible implementation, the position detection mechanism 75 may comprise a first position sensor 751 and/or a second position sensor 752, wherein the first position sensor 751 is configured to detect whether the operation mechanism reaches the retracted position and generate the first arrival signal; and the second position sensor 752 is configured to detect whether the operation mechanism reaches the released position and generate a second arrival signal. Based on the second arrival signal, the position-limiting member 741 stays at the released position. In this way, when the operation mechanism 71 reaches the released position, the driving portion 742 can stop driving in time based on the second arrival signal, thereby not only reducing power waste, but also avoiding damaging the position-limiting member 741 because the position-limiting member continues to move in its original direction.

The first position sensor 751 and the second position sensor 752 may be arranged at various positions:

In a possible example, both the first position sensor 751 and the second position sensor 752 are disposed on the connecting mechanism 72, with orientation of the first position sensor 751 opposite to orientation of the second position sensor 752. That is, a sensing part of the first position sensor 751 may face toward the retracted position. When the operation mechanism 71 moves to the retracted position, the first position sensor 751 can sense it and send out the first arrival signal. A sensing part of the second position sensor 752 may face toward the released position. When the operation mechanism 71 moves to the released position, the second position sensor 752 can sense it and send out the second arrival signal.

In another possible example, the first position sensor 751 and the second position sensor 752 are each disposed on the body 70, and are located on two opposite sides of the connecting mechanism 72 respectively. That is, the first position sensor 751 is mounted on the body 70, and is proximate to the connecting mechanism 72 when the operation mechanism 71 is at the retracted position. When the operation mechanism 71 reaches the retracted position, the first position sensor 751 can sense the connecting mechanism 72, thereby generating the first arrival signal. The second position sensor 752 is mounted on the body, and is proximate to the connecting mechanism 72 when the operation mechanism 71 is at the released position, and the second position sensor 752 can sense the connecting mechanism 72 when the operation mechanism 71 reaches the released position, thereby generating the second arrival signal.

In another possible example, one of the first position sensor 751 and the second position sensor 752 is disposed on the connecting mechanism 72, and the other one is disposed on the body 70. For example, the first position sensor 751 is disposed on the body 70. When the operation mechanism 71 reaches the retracted position, the first position sensor 751 is triggered to send out the first arrival signal. The second position sensor 752 is disposed on the connecting mechanism 72. When the operation mechanism 71 reaches the released position, the second position sensor 752 approaches or touches the body 70, and the second position sensor 752 is triggered to send out the second arrival signal.

In a possible embodiment, the first position sensor 751 comprises a proximity switch or a microswitch, and the second position sensor 752 comprises a proximity switch or a microswitch. The position of the connecting mechanism 72 can be accurately detected using a proximity switch, a microswitch, or a Hall sensor.

In a specific embodiment, the connecting mechanism 72 comprises a first protrusion 723, the first protrusion 723 extends toward the body 70, and the first position sensor 751 and the second position sensor 752 are each disposed on the body 70. When the operation mechanism 71 moves to the retracted position, the first position sensor 751 is triggered by the first protrusion 723 to generate the first arrival signal, and when the operation mechanism 71 moves to the released position, the second position sensor 752 is triggered by the first protrusion 723 to generate the second arrival signal. In this way, the first protrusion 723 is arranged to be located between the first position sensor 751 and the second position sensor 752, and can contact or approach the first position sensor 751 and the second position sensor 752, thereby accurately detecting the position of the operation mechanism 71.

In a possible embodiment, when the operation mechanism 71 reaches the released position, the first protrusion 723 abuts against the body 70. In this way, the connecting mechanism 72 is stopped by the body 70 to stably drive the operation mechanism 71 to remain at the released position.

In an example, referring to FIGS. 43 and 44, the body comprises a main body 702 and a fixing base 703. The connecting mechanism 72 and the main body 702 are distributed on two opposite sides of the fixing base 703. The fixing base 703 is connected to the main body 702, and the connecting mechanism 72 is pivotally connected to the fixing base 703. The first position sensor 751 and the second position sensor 752 are each located on one side of the fixing base 703 facing the main body 702. The first protrusion 723 extends through the fixing base 703 toward the main body 702. Based on this technical solution, in actual use, the first position sensor 751 and the second position sensor 752 are each located on one side of the fixing base 703 facing away from the ground, thereby reducing the adverse effects of flying chips and other impurities generated between the operation mechanism 71 in operation and the ground on the first position sensor 751 and the second position sensor 752.

In an example, the fixing base 703 comprises a first clearance hole 7031, and the smart traveling device further comprises a driving portion 742. The driving portion 742 is mounted on one side of the fixing base 703 facing the main body 702. One end of the position-limiting member 741 is in transmission connection with the driving portion 742 and the other end configured to run through the first clearance hole 7031 to restrict the connecting mechanism 72. Driven by the driving portion 742, the position-limiting member 741 reciprocates between the clearance position and the released position, and the driving portion 742 stops driving the position-limiting member 741 based on the second arrival signal, so that the position-limiting member 741 stays at the released position. Based on this technical solution, on the one hand, when the operation mechanism 71 reaches the released position, the driving portion 742 can stop driving in time based on the second arrival signal, thereby not only reducing power waste, but also avoiding damaging the position-limiting member because the position-limiting member 741 continues to move in its original direction. On the other hand, in actual use, the driving portion 742 is located on one side of the fixing base 703 facing away from the ground, thereby reducing the adverse effects of flying chips and other impurities generated between the operation mechanism 71 in operation and the ground on the driving portion 742.

The driving portion 742 may be electrically connected to the position detection mechanism 75, and can receive the first arrival signal and the second arrival signal, thereby stopping driving the position-limiting member 741 in time when the operation mechanism 71 reaches the released position, allowing the position-limiting member 741 to stay at the clearance position, stopping driving the position-limiting member 741 in time when the operation mechanism 71 reaches the retracted position, and allowing the position-limiting member 741 to stay at the stop position.

Referring to FIGS. 43, in a possible implementation, the smart traveling device further comprises a power mechanism 73, wherein the power mechanism 73 is connected to the connecting mechanism 72, and applies to the connecting mechanism 72 a force capable of enabling the connecting mechanism 72 to drive the operation mechanism 71 to pivot from the retracted position toward the released position.

For example, referring to FIG. 44, a first position-limiting portion 701 is disposed on the body 70. When the operation mechanism 71 moves to the released position, the connecting mechanism 72 abuts against the first position-limiting portion 701 under a force exerted by the power mechanism 73. In this way, the first position-limiting portion 701 and the power mechanism 73 act together on the connecting mechanism 72, so that the operation mechanism 71 stably remains at the released position. In this way, under the action of the power mechanism 73, when the operation mechanism 71 encounters an obstacle, the operation mechanism 71 is pushed by the obstacle to drive the connecting mechanism 72 to pivot toward the body 70 against the force exerted by the power mechanism 73, thereby achieving the obstacle avoidance effect; or the operation mechanism 71 is driven by the power mechanism 73 to move toward the body, to achieve the obstacle avoidance effect. In an extreme case, the connecting mechanism 72 is pushed by the obstacle to drive the operation mechanism 71 to pivot to the retracted position. The first position-limiting portion 701 and the power mechanism 73 act together on the connecting mechanism 72, so that the operation mechanism 71 stably remains at the released position.

Referring to FIG. 43, in a possible embodiment, the power mechanism 73 comprises an elastic member 731, wherein the elastic member 731 is connected between the connecting mechanism 72 and the body 70, and/or the elastic member 731 is connected between the connecting mechanism 72 and the operation mechanism 71; and the elastic member 731 exerts on the connecting mechanism 72 an elastic force enabling the connecting mechanism 72 to drive the operation mechanism 71 to pivot from the retracted position toward the released position. In this way, when an obstacle is encountered, the operation mechanism 71 can be pushed by the obstacle to move toward the body 70 against the elastic force exerted by the elastic member 731, to achieve the avoidance effect, thereby eliminating the need to reserve a safe distance between the operation mechanism 71 and a boundary of a planned region. The operation mechanism 71 can perform a corresponding action on a target object at an edge of the planned region, that is, leaving no blind zone, thereby eliminating the need to manually perform the corresponding action on a target object in a blind zone, and reducing manual burden. When the operation mechanism 71 needs to be hidden, the position-limiting member 741 and the position detection mechanism 75 can be used to safely and accurately drive the operation mechanism 71 to the retracted position.

Referring to FIGS. 41 and 42, in a possible embodiment, when the connecting mechanism 72 drives the operation mechanism 71 to reciprocate between the retracted position and the released position, an operation orientation X of the operation mechanism 71 remains parallel to a forward direction Y of the body 70. In this way, the operation mechanism 71 always face toward the forward direction of the body, so that it is convenient for a user to control the operation orientation of the operation mechanism 71 by controlling the forward direction of the body 70, thereby reducing the manipulation difficulty.

In a possible implementation, referring to FIGS. 42 and 44, the connecting mechanism 72 comprises a first connecting rod 721 and a second connecting rod 722, wherein the first connecting rod 721 comprises a first end and a second end that are opposite to each other, with the first end pivotally connected to the body 70 around a first axis L1 and the second end pivotally connected to the operation mechanism 71 around a second axis L2; the second connecting rod 722 comprises a third end and a fourth end that are opposite to each other, with the third end pivotally connected to the body 70 around a third axis L3 and the fourth end pivotally connected to the operation mechanism 71 around a fourth axis L4; the first axis L1, the second axis L2, and the third axis L3 are each parallel to the fourth axis L3; a distance A1 between the first axis L1 and the second axis L2 is equal to a distance A2 between the third axis L3 and the fourth axis L3; and a distance B1 between the first axis L1 and the third axis L3 is equal to a distance B2 between the second axis L2 and the fourth axis L3.

In other words, a connection relationship among the connecting mechanism 72, the body 70, and the operation mechanism 71 can be understood as a parallel four-bar linkage mechanism. Based on such a connection relationship, a constant angle can always be kept between the orientation of the operation mechanism 71 and the centerline of the body 70. For example, the operation mechanism 71 is a lawnmowing mechanism provided with a grass inlet in the front thereof. The grass inlet is oriented parallel to the centerline of body 70. Then, when the first connecting rod 721 and the second connecting rod 722 pivot synchronously, the operation mechanism 71 pivots relative to the first connecting rod 721, but the orientation of the grass inlet of the operation mechanism 71 remains unchanged. Here, head and tail of the smart traveling device can be defined as being distributed along a forward-backward direction, with the head located in the front and the tail located in the rear. When the lawnmowing mechanism is used for lawnmowing, the smart traveling device moves from the rear to the front. The centerline of the body extends in the forward-backward direction.

The elastic member 40 is connected between the body 70 and the first connecting rod 721, or the elastic member 40 is connected between the body 70 and the second connecting rod 722. Alternatively, an elastic member 40 is connected between the body 70 and the first connecting rod 721, and an elastic member 40 is also connected between the body 70 and the second connecting rod 722.

Referring to FIG. 43, in a possible embodiment, the elastic member 40 is a torsion spring 41, wherein the torsion spring 41 comprises two pins 732, with one of the pins 732 connected to the body 70 and the other pin 732 connected to the first connecting rod 721 or the second connecting rod 722. Here, one of the pins 732 may be fixed on or abut against the body 70, and the other pin 732 may be fixed on or abut against the first connecting rod 721; or the other pin 732 may be fixed on or abut against the second connecting rod 722.

In an example, one of the first connecting rod 721 and the body 70 is provided with a first accommodating hole 7301, and the other one is provided with a first rotating shaft 7302, wherein the first rotating shaft 7302 is pivotably inserted into the first accommodating hole 7301, so that the first connecting rod 721 pivots relative to the body 70 around the first axis L1; the torsion spring 41 is sleeved on the first rotating shaft 7302, and the other pin 732 of the torsion spring 41 is located outside the first accommodating hole 7301 and connected to the first connecting rod 721. In this way, the torsion spring 41 is mounted using the first rotating shaft 7302, thereby simplifying the structure, and facilitating assembly.

In another possible embodiment, the connecting mechanism 72 may be a single-bar structure, with one end pivotally connected to the body 70 and the other end connected to the operation mechanism 71, to define a constant relative position between the operation mechanism 71 and the single-bar structure. The elastic member 40 may be a torsion spring 41 or a coil spring, and is connected between the body 70 and the single-bar structure.

In addition, in a possible embodiment, the elastic member 40 is connected between the operation mechanism 71 and the first connecting rod 721, and/or the elastic member 40 is connected between the operation mechanism 71 and the second connecting rod 722. When the operation mechanism 71 and the first connecting rod 721 are driven by the elastic member 40 to pivot relative to each other, an angle between the operation mechanism 71 and the first connecting rod 721 changes. Based on the movement principle of a parallel four-bar linkage mechanism, the operation mechanism 71 and the second connecting rod 722 inevitably pivot relative to each other, the first connecting rod 721 and the body 70 inevitably pivot relative to each other, and the second connecting rod 722 and the body 70 inevitably pivot relative to each other, so that the connecting mechanism 72 pivots relative to the body 70.

In an example, the elastic member 40 is a torsion spring 41, wherein the torsion spring 41 comprises two pins 732, with one of the pins 732 connected to the operation mechanism 71 and the other pin 732 connected to the first connecting rod 721 or the second connecting rod 722. Here, one of the pins 732 may be fixed on or abut against the operation mechanism 71, and the other pin 732 may be fixed on or abut against the first connecting rod 721; or the other pin 732 may be fixed on or abut against the second connecting rod 722.

In an example, one of the first connecting rod 721 and the operation mechanism 71 is provided with a second accommodating hole, and the other one is provided with a second rotating shaft, wherein the second rotating shaft is pivotably inserted into the second accommodating hole, so that the first connecting rod 721 pivots relative to the operation mechanism 71 around the third axis L3; the torsion spring 41 is sleeved on the second rotating shaft, and the other pin 732 of the torsion spring 41 is located outside the second accommodating hole and connected to the first connecting rod 721. In this way, the torsion spring 41 is mounted using the second rotating shaft, thereby simplifying the structure, and facilitating assembly.

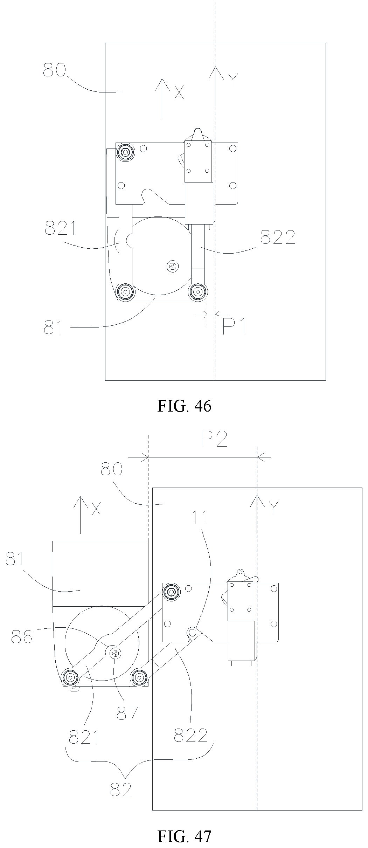

Referring to FIG. 46 and 47, the present disclosure further provides another smart traveling device, comprising a body 80, an operation mechanism 81, a connecting mechanism 82, and a power mechanism 83; wherein one end of the connecting mechanism 82 is pivotally connected to the body 80, the other end of the connecting mechanism 82 is connected to the operation mechanism 81, and the connecting mechanism 82 can drive the operation mechanism 81 to reciprocate between a retracted position and a released position; the power mechanism 83 is connected to the connecting mechanism 82, and the power mechanism is configured to drive the connecting mechanism 82 to pivot relative to the body 80; at least one of the body 80, the operation mechanism 81, and the connecting mechanism 82 is provided with an clearance structure to allow the connecting mechanism 82 to drive the operation mechanism 81 to reciprocate between the retracted position and the released position.

The power mechanism 83 may drive the connecting mechanism 82 to pivot, so that the connecting mechanism 82 drives the operation mechanism 81 to move toward the released position; and/or the power mechanism 83 may also drive the connecting mechanism 82 to pivot, so that the connecting mechanism 82 drives the operation mechanism 81 to move toward the retracted position. The centerline of the body 80 may refer to a centerline of the body in a width or length direction of the smart traveling device.

Based on the above technical solutions, on the prerequisite that the clearance structure allows the connecting mechanism 82 to drive the operation mechanism 81 to reciprocate between the retracted position and the released position, first, the operation mechanism 81 can move to the released position under the action of the power mechanism 83 to perform a corresponding action on a target object. Then, when the operation mechanism 81 encounters an obstacle, the operation mechanism 81 and the connecting mechanism 82 are pushed by the obstacle to pivot together toward the body 80, so as to achieve the obstacle avoidance effect; or the operation mechanism 81 and the connecting mechanism 82 are driven by the power mechanism 83 to pivot together toward the body 80, so as to achieve the obstacle avoidance effect. In an extreme case, the connecting mechanism 82 is pushed by the obstacle to drive the operation mechanism 81 to pivot to the retracted position, thereby eliminating the need to reserve a safe distance between the operation mechanism 81 and a boundary of a planned region. The operation mechanism 81 can perform a corresponding action on a target object at an edge of the planned region, that is, leaving no blind zone, thereby eliminating the need to manually perform the corresponding action on a target object in a blind zone, and reducing manual burden.

In addition, the relative position relationship between the operation mechanism 81 and the body 80 may be as follows:
when the operation mechanism 81 is at the retracted position, at least a part of a projection of the operation mechanism 81 onto the ground is located in a projection of the body 80 onto the ground. That is to say, it can be understood as that: at least a part of the projection of the operation mechanism 81 onto the ground overlaps with the projection of the body 80 onto the ground. In this way, when the operation mechanism 81 is at the retracted position, at least a part of the operation mechanism 81 is hidden in a space between the body 80 and the ground, or at least a part of the operation mechanism 81 is hidden inside the body 80. In an ultimate state, the operation mechanism 81 is entirely hidden in the space between the body 80 and the ground or hidden inside the body 80, thereby reducing the overall size of the smart traveling device, facilitating storage, and reducing the risk of bumping the operation mechanism 81. In a case as shown in FIG. 46, when the operation mechanism 81 is at the retracted position, the projection of the operation mechanism 81 onto the ground is entirely located in the projection of the body onto the ground, with a distance P1 between the operation mechanism 81 and the centerline of the body 80.

When the operation mechanism 81 is at the released position, the projection of the operation mechanism 81 onto the ground may still be located in the projection of the body 80 onto the ground, or at least a part of the projection of the operation mechanism 81 onto the ground is located outside the projection of the body 80 onto the ground. The at least a part of the projection of the operation mechanism 81 onto the ground is located outside the projection of the body 80 onto the ground, which may be understood as: no overlapping region between the projection of the at least a part of the operation mechanism 81 onto the ground and the projection of the body 80 onto the ground. In this way, when the operation mechanism 81 is at the released position, at least a part of the operation mechanism 81 extends to the outside of the body 80 in the width or length direction of the smart traveling device. In an ultimate state, the projection of the operation mechanism 81 onto the ground is entirely located outside the projection of the body 80 onto the ground, that is, the operation mechanism 81 is spaced apart from the body 80 in the width or length direction of the smart traveling device. In a case as shown in FIG. 47, the projection of the operation mechanism 81 onto the ground is entirely located outside the projection of the body onto the ground, with a distance P2 between the operation mechanism 81 and the centerline of the body 80.

The projection of the operation mechanism 81 onto the ground refers to: a projection of the operation mechanism 81 onto the ground along a height direction of the smart traveling device. Similarly, the projection of the body 80 onto the ground refers to: a projection of the body 80 onto the ground along the height direction of the smart traveling device. The height direction of the smart traveling device may be understood as that: if the ground is parallel to the horizontal plane, the height direction of the smart traveling device is parallel to the gravity direction; and if the ground is an inclined plane, that is, at a preset angle β relative to the horizontal plane, the height direction of the smart traveling device forms an angle with the gravity direction, and the angle is equal to the preset angle β.

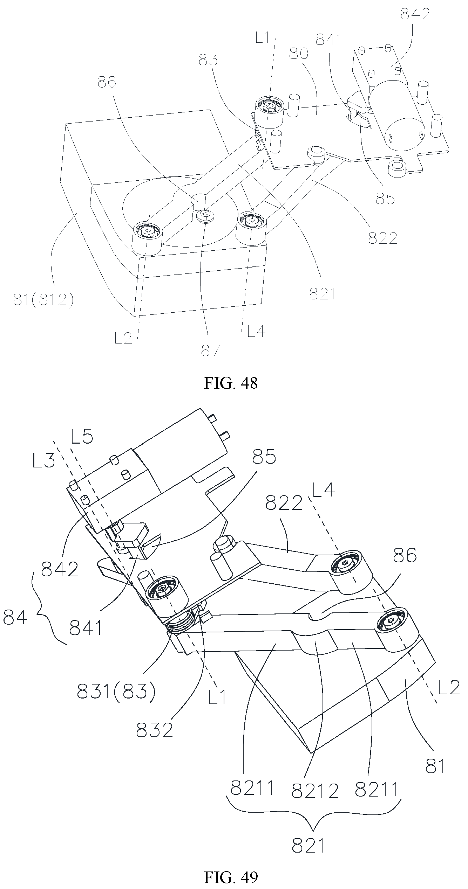

In a possible embodiment, referring to FIGS. 48 to 50, the clearance structure comprises a first clearance hole 85 located on the body 80, and the smart traveling device further comprises a position-limiting mechanism 84, wherein the position-limiting mechanism 84 comprises a driving portion 842 and a position-limiting member 841 that are in transmission connection, the driving portion 842 is mounted inside the body 80, one end of the position-limiting member 841 is in transmission connection with the driving portion 842 and the other end configured to run through the first clearance hole 85 to restrict the connecting mechanism 82; the driving portion 842 can drive the position-limiting member 841 to reciprocate between the clearance position and the stop position; the position-limiting member 841 at the stop position applies a position-limiting force to the connecting mechanism 82, so that the connecting mechanism 82 restricts the operation mechanism 81 to the retracted position; and the position-limiting member 841 at the clearance position allows the connecting mechanism 82 to drive the operation mechanism 81 to reciprocate between the retracted position and the released position. Based on this technical solution, the driving portion 842 is mounted inside the body 80 to improve the trimness of appearance of the body 80 and protect the driving portion 842. The first clearance hole 85 functions to avoid the position-limiting member 841, so that the position-limiting member 841 can extend to the outside of the body 80 through the first clearance hole 85, to achieve the goal of restricting the connecting mechanism 82.

In a possible implementation, the position-limiting member 841 reciprocates between the clearance position and the stop position along an axial direction of the first clearance hole 85; the position-limiting member 841 moves toward the connecting mechanism 82 to reach the stop position, and the position-limiting member 841 moves toward the body 80 to reach the clearance position. In other words, when moving toward the connecting mechanism 82, the position-limiting member 841 can extend into the movement path of the connecting mechanism 82, thereby reaching the stop position, and stopping the connecting mechanism 82 from driving the operation mechanism 81 to move from the retracted position toward the released position; and when moving toward the body 80, the position-limiting member 841 can depart from the movement path of the connecting mechanism 82, thereby reaching the clearance position, and allowing the connecting mechanism 82 to drive the operation mechanism 81 to reciprocate between the retracted position and the released position.

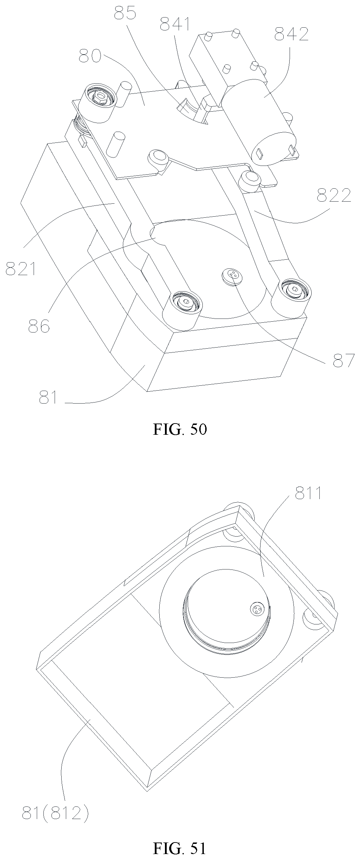

In another possible embodiment, referring to FIGS. 48 and 50, the position-limiting member 841 pivots relative to the body 80 around a preset axis L5, wherein the preset axis L5 is parallel to an axis of the first clearance hole 85, the position-limiting member 841 runs through the first clearance hole 85 and is located on one side of the connecting mechanism 82 facing the released position, and the position-limiting member 841 reciprocatively rotates along an arc-shaped path between the clearance position and the stop position. Based on this technical solution, since the position-limiting member 841 is located on one side of the connecting mechanism 82 facing the released position, the position-limiting member 841 at the stop position can stop the connecting mechanism 82 to drive the operation mechanism 81 to move toward the released position. The driving portion 842 drives the position-limiting member 841 to pivot around the preset axis L5, so that the position-limiting member 841 can reciprocate between the clearance position and the stop position. During the reciprocation, the position-limiting member 841 always runs through the first clearance hole 85, an arc-shaped pivot path of the position-limiting member 841 is located in the first clearance hole 85, and the clearance position and the stop position are located in the first clearance hole 85 and on two opposite sides of the first clearance hole 85.

In an example, after the connecting mechanism 82 drives the operation mechanism 81 to move to the released position, the position-limiting member 841 continues to rotate a certain distance before reaching the clearance position. In this way, the smart traveling device is used to prevent the connecting mechanism 82 from colliding with the position-limiting member 841 when driving the operation mechanism 81 to return to the released position.

In a possible implementation, referring to FIGS. 48 and 50, the smart traveling device further comprises a wire connected between the operation mechanism 81 and the body 80; the operation mechanism 81 comprises a motor 811 and a housing 812, wherein the motor 811 is mounted on one side of the housing 812 facing away from the body 80, the connecting mechanism 82 is connected to one side of the housing 812 facing away from the motor 811; the clearance structure comprises a second clearance hole 87, the second clearance hole 87 is disposed on the housing 812, and the wire is connected between the motor 811 and the body 80 through the second clearance hole 87. The wire may provide electric energy to the operation mechanism 81, and may further transmit a control signal to the operation mechanism 81. The wire connected between the operation mechanism 81 and the body 80 can function to transmit an electrical signal or electrical energy. Based on this technical solution, under the avoidance effect of the second clearance hole 87, the wire can run through the housing 812, thereby connecting between the body 80 and the motor 811 of the operation mechanism 81; and under the avoidance effect of the clearance slot 86, the wire can run through the housing 812 smoothly without affecting the pivoting of the connecting mechanism 82.

In an example, the clearance structure comprises an clearance slot 86, wherein the clearance slot 86 is located on the connecting mechanism 82, so that the clearance slot 86 avoids the wire. The clearance slot 86 is disposed on the connecting mechanism 82 to avoid the wire, to prevent the wire from interfering with the movement of the connecting mechanism 82, so that the connecting mechanism 82 can smoothly pivot relative to the body 80.

Referring to FIGS. 46 and 47, in a possible embodiment, during the reciprocation of the operation mechanism 81 driven by the connecting mechanism 82 between the retracted position and the released position, an operation orientation X of the operation mechanism 81 remains parallel to a forward direction Y of the body 80. In this way, the operation mechanism 81 always face toward the forward direction of the body, so that it is convenient for a user to control the operation orientation of the operation mechanism 81 by controlling the forward direction of the body 80, thereby reducing the manipulation difficulty.

In an example, the connecting mechanism 82 comprises a first connecting rod 821 and a second connecting rod 822, wherein the first connecting rod 821 comprises a first end and a second end that are opposite to each other, with the first end pivotally connected to the body 80 around a first axis L1 and the second end pivotally connected to the operation mechanism 81 around a second axis L2; and the second connecting rod 822 comprises a third end and a fourth end that are opposite to each other, with the third end pivotally connected to the body 80 around a third axis L3 and the fourth end pivotally connected to the operation mechanism 81 around a fourth axis L4. In this way, a connection relationship among the connecting mechanism 82, the first connecting rod 821, the second connecting rod 822, and the body 80 may be understood as a four-bar linkage mechanism, so that the connecting mechanism 82 is pivotally connected to both the first connecting rod 821 and the second connecting rod 822, thereby improving the connection stability between the connecting mechanisms 82 and the connecting mechanism 82.

The first axis L1, the second axis L2, and the third axis L3 are each parallel to the fourth axis L4; a distance A1 between the first axis L1 and the second axis L2 is equal to a distance A2 between the third axis L3 and the fourth axis L4; and a distance B1 between the first axis L1 and the third axis L3 is equal to a distance B2 between the second axis L2 and the fourth axis L4. In this way, the connection relationship among the connecting mechanism 82, the first connecting rod 821, the second connecting rod 822, and the body 80 may be understood as a parallel four-bar linkage mechanism. Based on such a connection relationship, a constant angle can always be kept between the orientation of the operation mechanism 81 and the centerline of the body 80. For example, the operation mechanism 81 is a lawnmowing mechanism provided with a grass inlet in the front thereof. An orientation of the grass inlet is parallel to the centerline of body 80. Then, when the first connecting rod 821 and the second connecting rod 822 pivot synchronously, the operation mechanism 81 pivots relative to the first connecting rod 821, but the orientation of the grass inlet of the operation mechanism 81 remains unchanged. Here, head and tail of the smart traveling device can be defined as being distributed along a forward-backward direction, with the head located in the front and the tail located in the rear. When the lawnmowing mechanism is used for lawnmowing, the smart traveling device moves from the rear to the front. The centerline of the body extends in the forward-backward direction.

The clearance slot 86 may be disposed on each of the first connecting rod 821 and the second connecting rod 822, or the clearance slot 86 may be disposed on one of the first connecting rod 821 and the second connecting rod 822. The clearance slot 86 is disposed on the first connecting rod 821 to avoid the wire, and the clearance slot 86 is disposed on the second connecting rod 822 to avoid the wire.

In an example, referring to FIGS. 48 to 50, the second clearance hole 87 may be located between the first connecting rod 821 and the second connecting rod 822, thereby functioning to confine the wire within the connecting mechanism 82, protecting the wire, and preventing twining.

In an example, the first connecting rod 821 comprises two straight segments 8211 and one arc-shaped segment 8212, with the arc-shaped segment 8212 connected between the two straight segments 8211 to form the clearance slot 86. Shape and size of a cross-section of the arc-shaped segment 8212 may be made equal to shape and size of a cross-section of the straight segment 8211, so that the first connecting rod 821 has better structural strength.

In a possible implementation, the power mechanism 83 comprises an elastic member 831, wherein the elastic member 831 is connected between the connecting mechanism 82 and the body 80, and/or the elastic member 831 is connected between the connecting mechanism 82 and the operation mechanism 81; and the elastic member exerts on the connecting mechanism 82 an elastic force enabling the connecting mechanism 82 to drive the operation mechanism 81 to pivot from the retracted position toward the released position. In this way, when an obstacle is encountered, the obstacle can push the operation mechanism 81 toward the body 80 to achieve the avoidance effect, thereby eliminating the need to reserve a safe distance between the operation mechanism 81 and a boundary of a planned region. The operation mechanism 81 can perform a corresponding action on a target object at an edge of the planned region, that is, leaving no blind zone, thereby eliminating the need to manually perform the corresponding action on a target object in a blind zone, and reducing manual burden.

In an example, the elastic member 831 is connected between the body 80 and the first connecting rod 821, or the elastic member 831 is connected between the body 80 and the second connecting rod 822.

Alternatively, in another example, the elastic member is connected between the body 80 and the first connecting rod 821, and/or the elastic member is connected between the body 80 and the second connecting rod 822.

Referring to FIG. 49, in a possible embodiment, the elastic member 831 is a torsion spring, wherein the torsion spring comprises two pins 832, with one of the pins 832 connected to the body 80 and the other pin 832 connected to the first connecting rod 821 or the second connecting rod 822. Here, one of the pins 832 may be fixed on or abut against the body 80, and the other pin 832 may be fixed on or abut against the first connecting rod 821; or the other pin 832 may be fixed on or abut against the second connecting rod 822.

It should be noted that unless otherwise defined, all technical terms and scientific terms used herein have the same meanings as commonly understood by those skilled in the art of the present disclosure. The terms used herein in the description of the present disclosure are only for the purpose of describing specific embodiments, and are not intended to limit the present disclosure.

It should be understood that this specification is described according to various embodiments, but every embodiment does not contain only one independent technical solution, the specification is described in this way only for clarity, those skilled in the art should regard the specification as an integral whole, and the technical solutions in the embodiments may also be appropriately combined to form other embodiments understandable to those skilled in the art. Within the scope described in the claims, various alterations and modifications that can be made by those skilled in the art without creative work are still encompassed within the scope of protection of the present disclosure.

Finally, it should be noted that: the above embodiments are merely used to illustrate the technical solutions of the present disclosure, instead of imposing any limitation on the technical solutions. While the present disclosure is described in detail with reference to the above embodiments, those of ordinary skills in the art should understand that: the technical solutions disclosed in the above embodiments may still be modified or a part of the technical features thereof may be replaced equivalently. These modifications or replacements are not intended to depart the essence of corresponding technical solutions from the spirit and scope of the technical solutions of the embodiments of the present disclosure.

## Claims

1. An auxiliary cutting mechanism adapted to be mounted on a lawnmower, comprising:
a cutter disc (91) having a transverse centerline and a longitudinal centerline that together divide the cutter disc (91) into a left front section, a right front section, a left rear section, and a right rear section;
an upper guard (92) comprising a side enclosure (921), the side enclosure (921) surrounding a lateral portion of the cutter disc (91); and
a lower guard (93) arranged on a bottom of the cutter disc (91), wherein a projection of the lower guard (93) onto the ground covers at least a part of the left rear section of a projection of the cutter disc (91) onto the ground, at least a part of the right rear section of the projection of the cutter disc (91) onto the ground, and at least a part of either the left front section or the right front section of the projection of the cutter disc (91) onto the ground.

2. The auxiliary cutting mechanism according to claim 1, wherein a preset distance Cis defined between a front end of the lower guard (93) and a front end of the side enclosure (921).

3. The auxiliary cutting mechanism according to claim 1, wherein the lower guard (93) is surrounded by the side enclosure (921), and a clearance between the side enclosure (921) and each of a rear end, a left end, and a right end of the lower guard (93) is less than a preset threshold, so as to prevent entry of a finger or a toe into the clearance.

4. The auxiliary cutting mechanism according to claim 1, wherein a plurality of spaced-apart grass inlets (931) are disposed on a left front section or a right front section of the lower guard (93), with the grass inlets (931) facing a front end of the side enclosure (921).

5. The auxiliary cutting mechanism according to claim 4, wherein each of the grass inlets (931) has a width of less than or equal to 12 mm.

6. The auxiliary cutting mechanism according to claim 1, wherein a distance between a left front section of the lower guard (93) and a center of the cutter disc (91) is greater than a distance between the left front section of the cutter disc (91) and the center thereof; or a distance between a right front section of the lower guard (93) and the center of the cutter disc (91) is greater than a distance between the right front section of the cutter disc (91) and the center of the cutter disc (91).

7. The auxiliary cutting mechanism according to claim 1, wherein a grass outlet (932) is disposed on a left rear section of the lower guard (93), and/or a grass outlet (932) is disposed on a right rear section of the lower guard (93).

8. The auxiliary cutting mechanism according to claim 7, wherein a length direction of a cross section of the grass outlet (932) is aligned with a forward-backward direction, and the cross section of the grass outlet (932) has a width of less than or equal to 12 mm.

9. The auxiliary cutting mechanism according to claim 1, wherein a hollow structure (9211) is disposed on a rear portion of the side enclosure (921).

10. The auxiliary cutting mechanism according to claim 9, wherein the hollow structure (9211) is strip-shaped, and the hollow structure (9211) has a width of less than or equal to 12 mm.

11. The auxiliary cutting mechanism according to claim 1, wherein the upper guard (92) further comprises a top cover (922) with an edge of the top cover (922) connected to the side enclosure (921),
the auxiliary cutting mechanism further comprises a drive module (94), wherein the drive module (94) is connected to a body (95) of the lawnmower, is connected to an upper side of the cutter disc (91), and is surrounded by the side enclosure (921); and
the top cover (922) covers the drive module (94) and is connected to the drive module (94).

12. The auxiliary cutting mechanism according to claim 11, wherein the top cover (922) comprises a first region (9221) and a second region (9222), the first region (9221) covers the drive module (94), and the second region (9222) is located in front of the first region (9221) and is higher than the second region (9222).

13. The auxiliary cutting mechanism according to claim 1, wherein the lower guard (93) is directly connected to the upper guard (92).

14. A lawnmower, comprising a body (95) and the auxiliary cutting mechanism according to any one of claims 1-13, wherein the auxiliary cutting mechanism is connected to the body (95), and a projection of the lower guard (93) onto the ground covers a first side of the projection of the cutter disc (91) onto the ground remote from a centerline of the body (95), and covers a portion of a second side of the projection of the cutter disc (91) onto the ground proximate to the centerline of the body (95).

15. The lawnmower according to claim 14, wherein the side enclosure (921) comprises an inner side plate and an outer side plate that are opposite to each other in a leftward-rightward direction, and the auxiliary cutting mechanism is pivotally connected to the body (95) with a pivot path including a retracted position and a released position,
the outer side plate of the side enclosure (921) is proximate to the body (95) when the auxiliary cutting mechanism is at the retracted position, and
the outer side plate of the side enclosure (921) is remote from the body (95) when the auxiliary cutting mechanism is at the released position.

16. The lawnmower according to claim 14, wherein the lawnmower further comprises a first connecting rod (961) and a second connecting rod (962), the first connecting rod (961) comprises a first end and a second end that are opposite to each other, with the first end pivotally connected to the body (95) around a first axis (L1) and the second end pivotally connected to the auxiliary cutting mechanism around a second axis (L2),
the second connecting rod (962) comprises a third end and a fourth end that are opposite to each other, with the third end pivotally connected to the body (95) around a third axis (L3) and the fourth end pivotally connected to the auxiliary cutting mechanism around a fourth axis (L4),
the first axis (L1), the second axis (L2), and the third axis (L3) are each parallel to the fourth axis (L4);
a distance A1 between the first axis (L1) and the second axis (L2) is equal to a distance A2 between the third axis (L3) and the fourth axis (L4); and
a distance B1 between the first axis (L1) and the third axis (L3) is equal to a distance B2 between the second axis (L2) and the fourth axis (L4).
